(19) Europäisches Patentamt
European Patent Office
Office européen des brevets

(11) EP 4 255 087 A2

(12) EUROPEAN PATENT APPLICATION

(43) Date of publication:
**04.10.2023 Bulletin 2023/40**

(21) Application number: **23181250.4**

(22) Date of filing: **10.08.2017**

(51) International Patent Classification (IPC):
***H04W 74/08*** *(2009.01)*

(52) Cooperative Patent Classification (CPC):
**H04W 16/28; H04B 7/0695; H04W 74/00; H04W 74/08; H04W 74/0833;** H04W 72/046

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2016 KR 20160102462**

(62) Document number(s) of the earlier application(s) in accordance with Art. 76 EPC:
**17839841.8 / 3 484 230**

(71) Applicant: **Samsung Electronics Co., Ltd.**
**Suwon-si, Gyeonggi-do 16677 (KR)**

(72) Inventors:
- **Kim, Soenghun**
  **Suwon-si, Gyeonggi-do 16677 (KR)**
- **Jin, Seungri**
  **Suwon-si, Gyeonggi-do 16677 (KR)**
- **Kim, Donggun**
  **Suwon-si, Gyeonggi-do 16677 (KR)**
- **Kim, Sangbum**
  **Suwon-si, Gyeonggi-do 16677 (KR)**
- **Jang, Jaehyuk**
  **Suwon-si, Gyeonggi-do 16677 (KR)**
- **Sayenko, Alexander**
  **Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

Remarks:
This application was filed on 23.06.2023 as a divisional application to the application mentioned under INID code 62.

# (54) METHOD AND APPARATUS FOR PERFORMING RANDOM ACCESS IN WIRELESS COMMUNICATION SYSTEM SUPPORTING BEAMFORMING

(57) The present disclosure concerns a method performed by a terminal communicating with at least one cell for a first base station associated with a first RAT (radio access technology) and at least one cell for a second base station associated with a second RAT in a wireless communication system, the method comprising: receiving, from the first base station, a radio resource control (RRC) message including configuration information related to a power headroom reporting; identifying whether a condition for triggering power headroom reporting is satisfied, wherein the condition for triggering power headroom reporting includes a beam change; and transmitting, to the first base station, a power headroom report including a first power headroom for a cell associated with the first RAT and a second power headroom for a cell associated with the second RAT based on the configuration information and based on the condition for triggering power headroom reporting being satisfied.

EP 4 255 087 A2

## Description

### [Technical Field]

The present disclosure relates to a method and an apparatus for efficiently performing random access in a wireless communication system supporting beamforming.

[Background Art]

In order to meet the demand for wireless data traffic, which has been increasing since the commercialization of a 4G communication system, efforts are being made to develop an improved 5G communication system or pre-5G communication system. For this reason, a 5G communication system or pre-5G communication system is referred to as a beyond-4G-network communication system or a post-LTE system. To achieve a high data transmission rate, implementing a 5G communication system in an extremely high frequency (mmWave) band (for example, a 60 GHz band) is being considered. To relieve the path loss of radio signals and to increase the transmission distance of radio signals in an extremely high frequency band, beamforming, massive multiple-input and multiple-output (massive MIMO), full dimensional MIMO (FD-MIMO), array antenna, analog beamforming, and large scale antenna techniques are under discussion for a 5G communication system. Further, to improve the network of the system, technical development in an evolved small cell, an advanced small cell, a cloud Radio Access Network (cloud RAN), an ultra-dense network, device-to-device (D2D) communication, wireless backhaul, a moving network, cooperative communication, coordinated multi-points (CoMP), and reception interference cancellation is progressing for the 5G communication system. In addition, an advanced coding modulation (ACM) scheme including hybrid FSK and QAM modulation (FQAM) and sliding window superposition coding (SWSC) as well as an advanced access technique including filter bank multi carrier (FBMC), non-orthogonal multiple access (NOMA), and sparse code multiple access (SCMA) are being developed for the 5G system.

The Internet has evolved from a human-centered connection network, in which humans create and consume information, into an Internet of things (IoT) network, in which distributed components, such as objects, may exchange and process information. Internet-of everything (IoE) technology, in which big-data processing technology is combined with the IoT through connection with a cloud server and the like, has also emerged. As technological elements such as sensing technology, wired/wireless communication and network infrastructure, service interface technology, and security technology are required to implement IoT, technologies for sensor networks, machine-to-machine (M2M) communication, and machine-type communication (MTC) have recently been studied for connecting objects. In an IoT environment, an intelligent Internet Technology (IT) service that collects and analyzes data generated from connected objects may be provided to create new value in human lives. The IoT is applicable to the fields of a smart home, a smart building, a smart city, a smart car or connected car, a smart grid, health care, a smart home appliance, advanced medical care services, and the like through convergence and integration of existing information technology with various industries.

Accordingly, various attempts are being made to apply a 5G communication system to the IoT network. For example, 5G communication technologies, such as a sensor network, M2M communication, and MTC, are implemented by beamforming, MIMO, and array-antenna schemes. Applying a cloud radio access network (RAN) as the big-data processing technology described above is an example of the convergence of 5G technology and IoT technology.

Recently, mobile communication systems have been developed by combining various new technologies in order to meet rapidly increasing data traffic and demands for various services. Particularly, a 5th-generation (5G) system, which is a next-generation mobile communication system considering such demands, is under active discussion. The 5G system is also referred to as a new radio access technology (hereinafter, "NR"). The NR system is aimed at providing data services at an ultrahigh speed of several Gbps using an ultra-wideband with a bandwidth of 100 MHz or more, compared to existing LTE and LTE-A. However, since it is difficult to secure an ultra-wideband frequency of 100 MHz or more in the frequency band of hundreds of MHz or several GHz used for LTE and LTE-A, the NR system considers a method for transmitting a signal using a wide frequency band existing in a frequency band of 6 GHz or more. Specifically, it is considered to increase transmission rate using a millimeter-wave (hereinafter, "mmWave") band, such as a 28 GHz band or a 60 GHz band. A frequency band and the path loss of the radio waves are proportional to each other, and the path loss of radio waves is considerable in an ultrahigh frequency, thus reducing a service area. In order to solve a decrease in the service area, the NR system considers beamforming which increases the range of radio waves by generating directional beams using a plurality of antennas as a significant technique. The beamforming technique may be applied to each of a transmitting end and a receiving end and can not only increase the service area but also reduce interference due to physical beam concentration in a target direction. However, directional beam-based transmission cannot transmit or receive a signal at a position where no beam is formed. To solve this problem, a beam sweeping technique is used. Beam sweeping is a technique in which a transmission apparatus sequentially transmits directional beams having a predetermined beam width by sweeping or rotating the beams so that the beams are received by a reception apparatus within the range of the beams from the transmission apparatus.

## [Disclosure of Invention]

### [Technical Problem]

The present disclosure proposes a method and an apparatus for selecting a random access procedure according to the characteristics of a downlink beam in a next-generation mobile communication system.

In the next-generation mobile communication system that operates on the basis of a beam, each user equipment (UE) may support a transmission beam with a different width. In particular, for the width of an uplink transmission beam, there may be a method for transmitting the default transmission beam width initially or depending on the capability of a UE. Therefore, the present disclosure proposes a method for efficiently determining the width of an uplink transmission beam considering the capability of a UE.

Further, the present disclosure proposes a method and an apparatus for reducing overhead and time when random access is performed in a wireless communication system that performs beam-based communication.

When the next-generation mobile communication system supports dual connectivity between a base station of an LTE system and a base station of an NR system, different radio access technologies (RATs) are used, and thus the same PHR format is less likely to be used. To solve this problem, the present disclosure proposes a new PHR format configuration.

### [Solution to Problem]

The present invention is directed to subject matter as defined in the claims.

The present disclosure provides a method for performing random access by a user equipment (UE), the method including: receiving, from a base station, uplink resource information for transmitting a preamble and random access response (RAR) information corresponding to the resource information; determining a resource for transmitting at least one preamble by beam sweeping on the basis of the uplink resource information; and transmitting the at least one preamble to the base station by the beam sweeping.

Further, the present disclosure provides a method for performing random access by a base station, the method including: transmitting, to a UE, uplink resource information and RAR information corresponding to the resource information; and receiving a preamble from the UE through at least one beam constituting beam sweeping, wherein the preamble is received through a resource determined on the basis of the uplink resource information.

Further, the present disclosure provides a UE including: a transceiver configured to transmit and receive a signal; and a controller configured to control the transceiver to receive, from a base station, uplink resource information for transmitting a preamble and random access response (RAR) information corresponding to the resource information, to determine a resource for transmitting at least one preamble by beam sweeping on the basis of the uplink resource information, and to control the transceiver to transmit the at least one preamble to the base station by the beam sweeping.

Further, the present disclosure provides a base station including: a transceiver configured to transmit and receive a signal; and a controller configured to control the transceiver to transmit, to a user equipment (UE), uplink resource information and random access response (RAR) information corresponding to the resource information and to control the transceiver to receive a preamble from the UE through at least one beam constituting beam sweeping, and the preamble is received through a resource determined on the basis of the uplink resource information.

Further, the present disclosure provides a method for performing random access by a UE, the method including: determining a resource for transmitting a preamble by beam sweeping; transmitting a preamble to a base station via each beam by the beam sweeping; receiving a RAR determined on the basis of the preamble from the base station; determining a beam for transmitting message 3 among beams constituting the beam sweeping on the basis of the received RAR.

Further, the present disclosure provides a method for performing random access by a base station, the method including: receiving capability information including the number of transmittable beams or the width of a transmittable beam for a UE from the UE; allocating a resource for performing a random access procedure on the basis of the capability information; and transmitting the allocated resource to the UE.

Further, the present disclosure provides a method for reporting power headroom by a UE, the method including: monitoring whether a PHR is triggered in a wireless communication system where a first base station and a second base station are connected to a UE; determining whether the PHR is a PHR for the first base station or a PHR for the second base station when the PHR is triggered; and determining a PHR format for PHR transmission depending on the determined PHR.

### [Advantageous Effects of Invention]

According to an embodiment of the present disclosure, even when each user equipment (UE) supports a beam with a different width, it is possible to adjust beam width using a simple procedure. Further, when the width of a transmission beam is updated by the adaptive determination of beam width, a signal transmitted by a UE becomes strong, thus increasing a transmission range.

In addition, according to another embodiment of the present disclosure, a UE can variably set the reception of a response to a preamble transmitted for random access depending on the conditions of a system and may then perform communication using an optimal beam among a plurality of beams, thus reducing unnecessary overhead.

Further, according to still another embodiment of the present disclosure, when a next-generation mobile communication system supports dual connectivity between a base station of an LTE system and a base station of an NR system, it is possible to efficiently configure and transmit a new PHR format supporting different radio access technologies (RATs), thus enabling a user to receive a high-quality and high-capacity service.

**[Brief Description of Drawings]**

FIG. 1A illustrates the structure of a next-generation mobile communication system;
FIG. 1B illustrates a random access procedure in an existing LTE system;
FIG. 1C illustrates a frame structure used by an NR system according to the present disclosure;
FIG. 1D is a diagram illustrating a beam adjustment method proposed in a next-generation mobile communication system;
FIG. 1E illustrates the flow of a message between a UE and a base station where the beam adjustment method proposed in the next-generation mobile communication system is used;
FIG. 1F illustrates a process for performing first random access according to the present disclosure;
FIG. 1G illustrates a process for performing second random access according to the present disclosure;
FIG. 1H is a flowchart illustrating an operation in which a UE selects and performs one of the two random access procedures according to the present disclosure;
FIG. 1I illustrates information included in messages used for the two random access procedures according to the present disclosure;
FIG. 1J is a flowchart illustrating a UE operation in a method for indicating a random access procedure to be performed with system information according to the present disclosure;
FIG. 1L is a block diagram illustrating the internal structure of a UE according to the present disclosure;
FIG. 2 is a block diagram illustrating the configuration of a base station according to the present disclosure;
FIG. 3A illustrates the structure of a next-generation mobile communication system according to the present disclosure;
FIG. 3B illustrates a frame structure used by an NR system operating based on a beam according to the present disclosure;
FIG. 3C illustrates a procedure in which a UE reselects a cell in an LTE system;
FIG. 3D illustrates a method for a UE to reselect the width of an uplink transmission beam in an NR system;
FIG. 3E illustrates embodiment 1 of reselecting the width of an uplink transmission beam proposed in the present disclosure;
FIG. 3F illustrates embodiment 2 of reselecting the width of an uplink transmission beam proposed in the present disclosure;
FIG. 3G illustrates a UE operation in which a UE determines the width of an uplink transmission beam in an NR system proposed in the present disclosure;
FIG. 3H is a block diagram illustrating the configuration of a UE according to an embodiment of the present disclosure;
FIG. 3I is a block diagram illustrating the configuration of a base station or TRP in a wireless communication system according to an embodiment of the present disclosure;
FIG. 4A illustrates the structure of an LTE system for reference to describe the present disclosure;
FIG. 4B illustrates the structure of wireless protocols for an LTE system for reference to describe the present disclosure;
FIG. 4C illustrates a random access procedure in an LTE system for reference for the present disclosure;
FIG. 4D illustrates the structure of a frame used by a 5G system to which the present disclosure is applied;
FIG. 4E illustrates the structure of a frame for performing random access proposed in the present disclosure;
FIG. 4F is a flowchart illustrating the operation of a UE according to the present disclosure;
FIG. 4G is a block diagram illustrating the configuration of a UE according to an embodiment of the present disclosure;
FIG. 5A illustrates the structure of a next-generation mobile communication system;
FIG. 5B illustrates beam sweeping in a next-generation mobile communication system;
FIG. 5C illustrates a subframe structure for a next-generation mobile communication system;

FIG. 5D schematically illustrates an intra-base station carrier aggregation operation in an LTE system according to an embodiment of the present disclosure;

FIG. 5E schematically illustrates an inter-base station carrier aggregation operation in an LTE system according to an embodiment of the present disclosure;

FIG. 5F schematically illustrates a dual connectivity operation between a base station of an LTE system and a base station of an NR system according to an embodiment of the present disclosure;

FIG. 5G schematically illustrates a dual connectivity operation between a base station of an LTE system and a base station of an NR system according to an embodiment of the present disclosure;

FIG. 5H illustrates the configuration of a PHR that is transmitted via one serving cell or one serving beam when a service is received via the one serving cell (carrier) or the serving beam from an LTE system or an NR system according to embodiment 1 of the present disclosure;

FIG. 5I illustrates a method for storing all PHs for a plurality of serving cells (carriers) or a plurality of serving beams in one PHR when a service is received via the plurality of serving cells (carriers) or the plurality of serving beams from an LTE system or an NR system according to an embodiment of the present disclosure;

FIG. 5J illustrates PHR format 2 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 2 of the present disclosure;

FIG. 5K illustrates PHR format 3 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 3 of the present disclosure;

FIG. 5L illustrates PHR format 4 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 4 of the present disclosure;

FIG. 5M illustrates PHR format 5 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 5 of the present disclosure;

FIG. 5N is a block diagram illustrating a UE operation in embodiments 1, 2, 3, 4, and 5;

FIG. 5O is a block diagram illustrating the internal structure of a UE according to the present disclosure; and

FIG. 5P is a block diagram illustrating the configuration of a transceiving device of a base station according to the present disclosure.

**[Mode for the Invention]**

Hereinafter, embodiments of the present disclosure will be described in detail in conjunction with the accompanying drawings. In describing the present disclosure, a detailed description of related functions or configurations known in the art will be omitted when it is determined that the detailed description thereof may unnecessarily obscure the subject matter of the present disclosure. The terms which will be described below are terms defined in consideration of the functions in the present disclosure, and may be different according to users, intentions of the users, or customs. Therefore, the definitions of the terms should be made based on the contents throughout the specification.

The advantages and features of the present disclosure and ways to achieve them will be apparent by making reference to embodiments as described below in detail in conjunction with the accompanying drawings. However, the present disclosure is not limited to the embodiments set forth below, but may be implemented in various different forms. The following embodiments are provided only to completely disclose the present disclosure and inform those skilled in the art of the scope of the present disclosure, and the present disclosure is defined only by the scope of the appended claims. Throughout the specification, the same or like reference numerals designate the same or like elements.

<First Embodiment>

In describing the present disclosure below, a detailed description of related known configurations or functions incorporated herein will be omitted when it is determined that the detailed description thereof may unnecessarily obscure the subject matter of the present disclosure. Hereinafter, embodiments of the present disclosure will be described with reference to the accompanying drawings.

FIG. 1A illustrates the structure of a next-generation mobile communication system.

Referring to FIG. 1A, a radio access network of the next-generation mobile communication system includes a new radio Node B (hereinafter, "NR NB") 1a-10 and a new radio core network (NR CN) 1a-05. A new radio user equipment (hereinafter, "NR UE" or "UE") 1a-15 accesses an external network through the NR NB 1a-10 and the NR CN 1a-05.

In FIG. 1A, the NR NB 1a-10 corresponds to an evolved Node B (eNB) of an existing LTE system. The NR NB is connected to the NR UE 1a-15 via a radio channel and may provide a superior service to the existing Node B.

In the next-generation mobile communication system, since all user traffic is served through a shared channel, a device that performs scheduling by collecting state information on UEs, such as a buffer state, an available transmission power state, and a channel state, is needed, and the NR NB 1a-10 function as this device. One NR NB generally controls a plurality of cells.

In order to realize ultrahigh-speed data transmission compared to the existing LTE, it is possible to additionally employ a beamforming technique that can provide an existing maximum bandwidth or greater using orthogonal frequency division multiplexing (hereinafter, "OFDM") as a radio access technology.

In addition, an adaptive modulation and coding (hereinafter, "AMC") scheme that determines a modulation scheme and a channel coding rate according to the channel state of a UE is employed.

The NR CN 1a-05 performs functions, such as mobility support, bearer setup, and QoS setup. The NR CN is a device that performs various control functions in addition to a mobility management function for a UE, and is connected to a plurality of base stations.

Also, the next-generation mobile communication system may interwork with the existing LTE system, and the NR CN is connected to an MME 1a-25 through a network interface. The MME is connected to an eNB 1a-30 which is an existing base station.

FIG. 1B illustrates a random access procedure in an existing LTE system.

Random access is performed when uplink synchronization is performed or data is transmitted to a network. Specifically, random access may be performed when a switch from a standby mode to a connected mode is performed, when RRC reestablishment is performed, when a handover is performed, and when uplink and downlink data are started.

When a UE 1b-05 receives a dedicated preamble from a base station 1b-10, the UE 1b-05 transmits a preamble by applying the preamble. Otherwise, the UE selects one of two preamble groups and selects a preamble belonging to the selected group.

These groups may be referred to as group A and group B. If a channel quality state is better than a specified threshold value and the size of Msg3 is greater than a specified threshold value, a preamble in group A is selected. Otherwise, a preamble in group B is selected.

When the preamble is transmitted in an nth subframe (1b-15), a RAR window starts at an (n+3)th subframe and it is monitored whether a RAR is transmitted within the time period of the window (1b-20).

Scheduling information on the RAR is indicated by an RA-RNTI of a PDCCH. The RA-RNTI is derived using the location of a radio resource on the time and frequency axes used for transmitting the preamble. The RAR includes a timing advance command, a UL grant, and a temporary C-RNTI.

When the RAR is successfully received in the RAR window, Msg3 is transmitted using the UL grant included in the RAR (1b-25). Msg3 includes different pieces of information depending on the purpose of random access. Table 1 below shows an example of information included in Msg3.

[Table 1]

| CASE | Message 3 Contents |
|---|---|
| RRC CONNECTION SETUP | CCCH SDU |
| RRC REESTABLISHMENT | CCCH SDU, BSR (if grant is enough), PHR (if triggered & grant is enough) |
| Handover (random preamble) | C-RNTI CE, BSR, PHR, (part of) DCCH SDU |
| Handover (dedicate preamble) | BSR, PHR, (part of) DCCH SDU |
| UL resume | C-RNTI CE, BSR, PHR, (part of) DCCH/DTCH SDU |
| PDCCH order (random preamble) | C-RNTI CE, BSR, PHR, (part of) DCCH/DTCH SDU |
| PDCCH order (dedicate preamble) | BSR, PHR, (part of) DCCH/DTCH SDU |

Table 1: Example of information included in Msg3

Msg3 is transmitted in an (n+6)th subframe when the RAR is received in the nth subframe. From Msg3, an HARQ is applied. After transmitting Msg3, the UE runs a specific timer and monitors a contention resolution (CR) message until the timer expires (1b-30). The CR message includes an RRC connection setup message or an RRC connection reestablishment message depending on the purpose of random access in addition to a CR MAC CE.

FIG. 1C illustrates a frame structure used by an NR system according to the present disclosure.

The NR system may consider a scenario of operating at high frequencies in order to secure a wide frequency bandwidth for high transmission rate. However, since signal transmission is difficult at high frequencies, a scenario in which a beam is generated to transmit data may be considered.

Accordingly, a scenario may be considered in which a base station or a transmission reception point (hereinafter, "TRP") 1c-01 communicates with UEs 1c-71, 1c-73, 1c-75, 1c-77, and 1c-79 in a cell using different beams. That is, a scenario is assumed in which UE 1 1c-71 uses beam #1 1c-51 for communication, UE 2 1c-73 uses beam #5 1c-55 for communication, and UE 3 1c-75, UE 4 1c-77, and UE 5 1c-79 use beam #7 1c-57 for communication.

An overhead subframe (osf) 1c-03 exists in time in order to measure which beam a UE uses to communicate with the TRP. In the osf, the base station transmits a reference signal using a different beam for each symbol (or a plurality of symbols).

A beam index value to distinguish each beam from the reference signal may be derived. It is assumed in FIG. 1C that there are 12 beams transmitted by the base station including #1 1c-51 to #12 1c-62 and each different beam is transmitted by sweeping for each symbol in the osf.

That is, each beam is transmitted for each symbol (for example, beam #1 1c-51 is transmitted in a first symbol 1c-31) within the osf, and the UE measures the osf, thereby measuring which of the beams transmitted in the osf transmits the strongest signal.

In FIG. 1C, it is assumed that the osf is repeated every 25 subframes and the remaining 24 subframes are data subframes (dsf) 1c-05 for transmitting and receiving general data.

That is, according to scheduling by the base station, UE 3 1c-75, UE 4 1c-77, and UE 5 1c-79 may perform communication commonly using beam #7 (1c-11), UE 1 1c-71 may perform communication using beam #1 (1c-13), and UE 2 1c-73 may perform communication using beam #5 (1c-15).

Although FIG. 1C illustrates a diagram of transmission beams #1 1c-51 to #12 1c-62 of the base station, a reception beam of the UE (for example, 1c-81, 1c-83, 1c-85, and 1c-87 of UE 1 1c-71) for receiving the transmission beams of the base station may be further considered.

In FIG. 1C, UE 1 has four beams 1c-81, 1c-83, 1c-85, and 1c-87 and performs beam sweeping to determine which beam has the best reception performance. Here, when a plurality of beams cannot be used at the same time, one reception beam may be used for each osf to receive as many osfs as the number of reception beams, thereby finding an optimal transmission beam for the base station and an optimal reception beam for the UE.

FIG. 1D is a diagram illustrating a beam adjustment method proposed in a next-generation mobile communication system.

FIG. 1D shows an example of a frame structure as in FIG. 1C, in which scenario downlink transmission beams (DL TX beams) 1d-01, 1d-02, 1d-03, and 1d-04 transmitted by a base station are swept in an osf and the osf is repeated on a predetermined cycle.

A UE operates in a connected state (connected mode), in which the UE is connected to the base station to enable communication for exchanging data, or in an inactive/idle state (idle mode), in which the UE monitors only whether there is downlink traffic every set period (which is referred to as paging) (when there is no data to transmit or receive) and does not transmit or receive data in the remaining time.

In order to receive paging even in the idle state, the UE needs to continuously retrieve a neighboring base station. When a beam is used as in the present disclosure, the UE needs to retrieve and select an optimal transmission beam of a base station and an optimal reception beam of the UE in the selected base station.

When the UE fails to monitor and determine the transmission beam of the base station and the reception beam of the in the idle mode, the UE performs measurements on all combinations in the base station.

That is, it is assumed in this scenario that the base station has four TX beams and the UE also has four downlink reception beams for (DL RX beams). Accordingly, the UE performs any measurement using each reception beam by changing the reception beam in each osf (1d-11) (1d-12), (1d-13), and (1d-14).

For the measurement, the UE may obtain the timing of each subframe by performing downlink synchronization according to a synchronization signal from the base station and may thus know whether a particular subframe is an osf or a dsf.

Through the measurement process, the UE determines whether a downlink reference signal from the base station transmitted via a TX beam satisfies a predetermined condition. When the downlink reference signal satisfies the predetermined condition, the UE considers the beam as a suitable beam, camps on the suitable beam, and monitors paging from the beam. Through this procedure, the UE can find an optimal combination of a TX beam and an RX beam from the base station (1d-51).

In FIG. 1D, it is assumed that TX beam #3 and RX beam #2 are found by the procedure 1d-51. Then, the UE does not update measurement using each RX beam in each osf any more as in the procedure 1d-51 but measures a current optimal TX beam (TX beam #3 in this drawing) using a current optimal RX beam (RX beam #2 in this drawing) on a discontinuous reception (DRX) cycle 1d-25 according to the present disclosure (1d-21) and (1d-23).

Accordingly, the UE determines whether signal strength/quality measured from the combination of the TX beam and the RX beam found in the procedure 1d-51 is a predetermined level or higher (1d-53) while reducing power consumption.

In this example, it is assumed that only one selected RX beam is measured for the convenience of explanation. However, it may be considered that another adjacent RX beam may be further measured in order to increase the reliability of reception.

That is, the number of downlink reception beams (reception beam width or sweeping length) in a downlink reception beam configuration may be determined to be a combination of information about the number of reception beams supported by the UE and an integer preset for each frequency band (or a smaller value among the two values).

Determining whether the signal strength/quality is the predetermined level or higher may be performed according to an equation taking the strength of a downlink reference signal, an uplink correction factor, and a constant as input, where the uplink correction factor may determined by an equation taking the uplink transmission beam setup capability of the UE and the power class of the UE as input. The uplink transmission beam setup capability of the UE is defined for each NR band supported by the UE.

If the measured result is the predetermined level or less, the UE measures reference signals from all the TX beams, changing the RX beam in each osf, in order to find a new optimal combination of a TX beam and an RX beam, thereby finding a new optimal combination of a TX beam and an RX beam (1d-55).

FIG. 1E illustrates the flow of a message between a UE and a base station where the beam adjustment method proposed in the next-generation mobile communication system is used.

For the convenience of explanation, it is assumed in this example that an optimal TX beam and an RX beam (TX beam #3 and RX beam #2) have already been found as shown in operation 1d-53 of FIG. 1D. In this case, instead of measuring a reference signal from a base station using all the RX beams, a UE measures the reference signal from the base station using a limited number of RX beams (two RX beams #1 and #2 in this example) (1e-11).

Accordingly, the UE measures a beam reference signal (BRS) from the base station using RX beam #1 and RX beam #2 for TX beam #3, which is already measured as in the above assumption, (1e-21) and (1e-22). Further, the UE measures the beams according to a predetermined discontinuous reception (DRX) cycle 1e-19 (1e-23) and (1e-24), instead of measuring each osf as described above in FIG. 1D.

When all results of measurement with the limited number of RX beams do not satisfy a predetermined condition (1e-13), the UE performs additional measurement by increasing the number of RX beams (1e-15). Here, the UE performs measurement on a cycle of a number shorter than the DRX 1e-19 or for a consecutive osf.

In FIG. 1E, it is assumed that the number of RX beams is increased to 4, in which case the number of TX beams in measurement for each RX beam may also be increased to perform additional measurement. FIG. 1E shows a case where measurement is performed by increasing the number of TX beams from one (TX Beam # 3) to four (TX beams #1 to 4).

Accordingly, the UE measures BRSs transmitted from the base station via TX beams for each RX Beam (1e-31), (1e-32), (1e-33), (1e-34), (1e-36), (1e-37), (1e-38), (1e-39), (1e-41), (1e-42), (1e-43), (1e-44), (1e-46), (1e-47), (1e-48), and (1e-49).

The UE measures the BRSs according to the above procedure, thereby finding an optimal combination of a TX beam and an RX beam satisfying the predetermined condition (1e-17). Although omitted in FIG. 1E, if an optimal combination of a TX beam and an RX beam satisfying the predetermined condition is not found from the base station, the UE starts searching for a beam of another base station.

In FIG. 1E, it is assumed that the UE finds TX beam #1 and RX beam #3 as an optimal combination. Then, the UE may measure the signal strength/quality of the TX beams with a reduced number of RX beams (1e-51) and (1e-52) and may adjust a measurement cycle using a DRX cycle 1e-20, thereby reducing the power consumption of the UE.

A most distinguishing structure of next-generation radio communication is a transmission and reception process using a beam antenna. The characteristics of beams supportable by each base station and each UE, that is, the maximum number of beam antennas and the maximum beam gain, are different.

When a base station and a UE employ a beam-based transceiving device, a process for tuning a beam to be applied is necessary for efficient data transmission when the UE performs random access. In the present disclosure, a random access procedure excluding or including a process for tuning optimal uplink and downlink beams is selectively performed depending on the type of a downlink beam.

The UE derives a combination of an optimal downlink transmission beam and an optimal reception beam through the example of the beam adjustment method described with reference to FIG. 1D. The UE camps on the optimal downlink transmission beam.

When random access is triggered, the UE selects one of the two random access procedures according to the type of a downlink beam of the base station and performs random access. Specifically, when there is one downlink beam of the base station, the first random access procedure is performed. When there are two or more downlink beams, the second random access procedure is performed.

The UE may determine the type of the beam on the basis of the structure of the beam reference signal or the structure of a subframe including the beam reference signal. Alternatively, the UE may determine the type of the beam on the basis of frequency band information on the downlink beam (that is, the number of downlink beams may be determined for each frequency band) or information received from another beam. Alternatively, the base station may indicate a random access procedure UEs in the service area of the base station need to apply through broadcast system information.

The first random access procedure includes an operation in which the UE transmits one preamble, an operation in which the UE receives a second message of a first type after transmitting the preamble, and an operation in which the UE transmits a third message of the first type.

The second message of the first type includes a preamble ID, uplink transmission timing information, UE transmission power information, and scheduling information on the third message. The third message of the first type includes information according to the purpose of random access.

The second random access procedure includes an operation in which the UE transmits one or more preambles, an operation in which the UE receives a second message of a second type after transmitting the preambles, and an operation in which the UE transmits a third message of the second type.

The second message of the second type includes a preamble ID, uplink transmission timing information, UE transmission power information, scheduling information on the third message, and uplink transmission beam information. The third message of the second type includes information according to the purpose of random access and downlink transmission beam information.

FIG. 1F illustrates a process for performing first random access according to the present disclosure.

A UE 1f-05 transmits a dedicated preamble provided from a base station 1f-10 or a preamble selected by the UE to the base station. Here, a single transceiving (beam) antenna is applied.

After transmitting one preamble, the UE 1f-05 monitors whether a RAR is transmitted within a window time period. If the UE 1f-05 fails to successfully receive the RAR, the UE 1f-05 increases transmission power by a certain level and retransmits the preamble (1f-15). The RAR received by the UE 1f-05 includes a timing advance command, a UL grant, transmission power information, and a temporary C-RNTI (1f-20).

If the RAR is successfully received in the RAR window, the UE 1f-05 transmits Msg3 using information of the UL grant included in the RAR (1f-25). Msg3 may include different pieces of information depending on the purpose of random access. Specific examples of the information are illustrated above in Table 1.

From Msg3, an HARQ may be applied. After the Msg3 transmission, the UE runs a specific timer and monitors a contention resolution (CR) message until the timer expires (1f-30). The CR message includes an RRC connection setup message or an RRC connection reestablishment message depending on the purpose of random access in addition to a CR MAC CE.

FIG. 1G illustrates a process for performing second random access according to the present disclosure.

A UE 1g-05 transmits a dedicated preamble provided from a base station g10 or a preamble selected by the UE to the base station. Here, two or more transceiving (beam) antennas are applied.

The UE identifies optimal downlink transmission and reception beams through the operation described with reference to FIG. 1D. After transmitting one preamble, the UE monitors whether a RAR is transmitted within a window time period. If the UE fails to successfully receive the RAR, the UE increases transmission power by a certain level and retransmits the preamble (1g-15).

The received RAR includes a timing advance command, a UL grant, transmission power information, and a temporary C-RNTI (1g-20). If the RAR is successfully received in the RAR window, the UE transmits Msg3 using information of the UL grant included in the RAR (1g-25). Msg3 may include different pieces of information depending on the purpose of random access. Specific examples of the information are illustrated above in Table 1.

From Msg3, an HARQ may be applied. After the Msg3 transmission, the UE runs a specific timer and monitors a contention resolution (CR) message until the timer expires (1g-30). The CR message includes an RRC connection setup message or an RRC connection reestablishment message depending on the purpose of random access in addition to a CR MAC CE.

FIG. 1H is a flowchart illustrating an operation in which a UE selects and performs one of the two random access procedures according to the present disclosure.

In operation 1h-05, the UE derives an optimal downlink transmission/reception beam pair. FIG. 1D illustrates an example of deriving the optimal downlink transmission/reception beam pair. In operation 1h-10, the UE camps on the derived optimal beam pair. The UE monitors paging on the basis of the beam pair on which the UE camps. In addition, the UE may refer to the beam pair in determining uplink transmission/reception beams for transmitting a preamble in random access.

In operations 1h-15, the UE initializes random access according to a specific purpose. In operation 1h-20, the UE determines whether there is a single downlink transmission/reception beam. For example, if only a reference signal for one beam is present in a subframe including a beam reference signal, it is determined that there is a single downlink transmission beam. It is possible to predefine a specific number of downlink transmission beams to be applied for each band.

If there is a single downlink transmission/reception beam, the UE transmits a preamble assuming a single uplink transmission/reception beam in operation 1h-25. In operation 1h-30, the UE derives preamble transmission power on the basis of reference transmission power information provided via system information. If the transmission of the preamble fails, the UE retransmits the preamble by gradually increasing the transmission power.

In operation 1h-35, the UE monitors whether a RAR is received from a specific subframe after transmitting the preamble. In operation 1h-40, the UE resets the uplink transmission power on the basis of a received RAR. In operation 1h-50, the UE transmits a first type of Msg3.

If there is more than a single downlink transmission/reception beam in operation 1h-20, the UE transmits a preamble via each uplink transmission beam through beam sweeping in operation 1h-55. The uplink transmission beam for transmitting the preamble uses a random access radio resource associated with the downlink transmission beam for transmitting the preamble. Information on association between the downlink transmission beam and the random access radio resource is provided in advance to the UE via the system information.

One subframe may include a random access radio resource associated with one downlink transmission, and one subframe may include a plurality of random access radio resources. When one subframe includes a plurality of random access radio resources, radio resources associated with the downlink transmission beam are sequentially inserted per symbol.

Since it is needed to find an optimal uplink transmission/reception beam pair through the random access procedure, the UE may transmit a preamble with respect to a random access radio resource associated with a neighboring downlink transmission beam other than the optimal downlink transmission beam. Alternatively, the UE may transmit a preamble with respect to a random access radio resource associated with all downlink transmission beams.

In operation 1h-65, the UE monitors whether a RAR is received. Since a plurality of preambles is transmitted through a plurality of uplink transmission beams, a plurality of RARs may be received. In operation 1h-70, the UE receives a RAR and selects an optimal uplink transmission beam using uplink transmission beam information included in the RAR.

The base station may provide time/frequency information on a random access radio resource through which the preamble is received with an optimal signal quality as the uplink transmission beam information included in the RAR.

In operation 1h-75, the UE adjusts uplink timing using uplink timing information included in the RAR. In operation 1h-80, the UE resets uplink transmission power on the basis of the received RAR. In operation 1h-85, the UE transmits Msg3 of the second type using the optimal uplink transmission beam.

The second type of Msg3 includes information on a downlink transmission beam used when an optimal RAR is received. The base station will transmit Msg 4 using the provided downlink transmission beam.

In the foregoing process, it is assumed that uplink and downlink beams have different characteristics. On the other hand, in TDD, it may be assumed that the same channel characteristics may be applied to uplink and downlink beams. That is, since the same frequency is used, a correlation between downlink channel quality measured through a reference signal and uplink channel quality applied when transmitting a preamble may be considered to be very high. In this case, the second random access procedure may be further simplified.

The UE maintains the optimal downlink beam pair and camps on the beams. Therefore, in this case, the UE transmits the preamble only via an uplink transmission beam mapped to the optimal downlink reception beam without sweeping the uplink transmission beams as in the foregoing process (that is, the UE does not need to transmit a plurality of preambles through a plurality of uplink transmission beams).

Even when the base station transmits the RAR, the base station transmits the RAR only via a downlink transmission beam that has a high correlation with an uplink reception beam through which the preamble is received or is mapped to the uplink reception beam, without transmitting the RAR through each of the plurality of downlink transmission beams.

Also, the RAR and Msg3 of the second type do not need to include uplink transmission beam information and downlink transmission beam information. Therefore, considering this assumption, the RAR and Msg3 of the first type are used even when the second random access procedure is applied.

FIG. 1I illustrates information included in messages used for the two random access procedures according to the present disclosure.

(a) of FIG. 1I shows information included in the second message (RAR) of the first type (type 1). The message includes a preamble ID 11-05, uplink transmission timing information (TA command) 11-10, UE transmission power information (TPC) 1i-15, and scheduling information (UL grant) 1i-17 on the third message.

The preamble ID indicates a preamble transmitted by the UE. The uplink transmission timing information is used to indicate transmission timing to the UE in order to achieve uplink synchronization. Generally, the uplink transmission timing information indicates that the UE needs to transmit a signal more quickly or slowly when transmitting the preamble. The UE transmission power information is used to indicate transmission power to the UE. Generally, the UE transmission power information indicates that the UE needs to transmit a signal using higher or lower transmission power than that when transmitting the preamble.

(b) of FIG. 1I shows information included in the second message (RAR) of the second type (type 2). The message may include uplink transmission beam information (UL beam info) 1I-20 in addition to a preamble ID, uplink transmission timing information, UE transmission power information, and scheduling information on the third message.

The uplink transmission beam information indicates an uplink transmission beam on which the base station receives an optimal preamble. However, the base station does not have an index value for indicating the uplink transmission beam. Particularly, in initial random access, the base station does not know how many beams the UE supports or sets.

Therefore, a method for indicating the uplink transmission beam is needed. The most effective method is using information on a random access radio resource used for a preamble received with an optimal signal strength, for example, time and frequency information, as the uplink transmission beam information. The UE receiving this information knows the time and frequency location of the random radio resource used for transmitting the preamble and an uplink transmission beam used at this time.

When one subframe includes a plurality of random access radio resources, radio resources associated with the downlink transmission beam are sequentially inserted per symbol. Accordingly, the index of a symbol in the subframe and symbol order information may be used as time information on the random access radio resource used for the transmitting the preamble.

(c) of FIG. 1I shows information included in the third message (Msg3) of the first type (type 1). The third message of the first type may include information according to the purpose of random access. As illustrated in Table 1, various pieces of information are included depending on the purpose of random access.

(d) of FIG. 1I shows information included in the third message (Msg3) of the second type (type 2). The third message of the second type may include information according to the purpose of random access and downlink transmission beam information. The third message includes information on a downlink transmission beam used to receive an optimal RAR in addition to the existing information.

The UE has index information on a downlink transmission beam from the base station. A particular subframe includes reference signals for each beam, and each reference signal is implicitly or explicitly mapped to a particular beam index.

The reference signals of the beam are included in one subframe and are divided per symbol. Therefore, instead of the particular beam index, the index of a symbol in the subframe and symbol order information may be used as the downlink transmission beam information.

FIG. 1J is a flowchart illustrating a UE operation in a method for indicating a random access procedure to be performed with system information according to the present disclosure.

A significant difference between FIG. 1J and FIG. 1H is that a UE determines a random access type according to the number of downlink transmission beams in FIG. 1H, while a base station indicates a random access type that UEs in a cell service area need to apply using system information in FIG. 1J.

In operation 1j-05, the UE derives an optimal downlink transmission/reception beam pair. FIG. 1D illustrates an example of deriving the optimal downlink transmission/reception beam pair. In operation 1j-10, the UE camps on the derived optimal beam pair. The UE monitors paging on the basis of the beam pair on which the UE camps. In addition, the UE may refer to the beam pair in determining uplink transmission/reception beams for transmitting a preamble in random access.

In operation 1j-15, the UE initializes random access according to a specific purpose. In operation 1j-20, the UE determines which random access procedure is set through the system information broadcasted by the base station. The base station may directly indicate a random access procedure to be applied. Alternatively, the base station may indicate the number of downlink transmission beams applied, and the UE may determine a random access to be applied on the basis of this information.

If the first random access procedure (single downlink transmission/reception beam) is applied, the UE assumes a single uplink transmission/reception beam and transmits a preamble in operations 1j-25. In operation 1j-30, the UE derives preamble transmission power on the basis of reference transmission power information provided via the system information.

If the transmission of the preamble fails, the UE retransmits the preamble by gradually increasing the transmission power. After transmitting the preamble, the UE monitors whether a RAR is received from a particular subframe in operation 1j-40. In operation 1j-45, the UE resets uplink transmission power on the basis of the received RAR. In operation 1j-55, the UE transmits Msg3 of the first type.

If the first random access procedure (single downlink transmission/reception beam) is not applied in operation 1j-25, the UE transmits a preamble via each uplink transmission beam by beam sweeping in operation 1j-65. The uplink transmission beam for transmitting the preamble uses a random access radio resource associated with the downlink transmission beam for transmitting the preamble.

Information on association between the downlink transmission beam and the random access radio resource is provided in advance to the UE via the system information. Since it is needed to find an optimal uplink transmission/reception beam pair through the random access procedure, the UE may transmit a preamble with respect to a random access radio resource associated with a neighboring downlink transmission beam other than the optimal downlink transmission beam.

In operation 1j-70, the UE monitors whether a RAR is received. Since the UE transmits a plurality of preambles through a plurality of uplink transmission beams, a plurality of RARs may be received.

In operation 1j-75, the UE receives a RAR and selects an optimal uplink transmission beam using uplink transmission beam information included in the RAR. The base station may provide time/frequency information on a random access radio resource through which the preamble is received with an optimal signal quality as the uplink transmission beam information included in the RAR.

In operation 1j-80, the UE adjusts uplink timing using uplink timing information included in the RAR. In operation 1j-85, the UE resets uplink transmission power on the basis of the received RAR. In operation 1j-90, the UE transmits Msg3 of the second type using the optimal uplink transmission beam.

The second type of Msg3 includes information on a downlink transmission beam used when an optimal RAR is received. The base station will transmit Msg 4 using the provided downlink transmission beam.

FIG. 1L illustrates the structure of a UE.

Referring to FIG. 1L, the UE includes a radio frequency (RF) processor 11-10, a baseband processor 11-20, a storage unit 11-30, and a controller 11-40.

The RF processor 11-10 performs a function for transmitting or receiving a signal through a wireless channel, such as band conversion and amplification of a signal. That is, the RF processor 11-10 upconverts a baseband signal, provided from the baseband processor 11-20, into an RF band signal to transmit the RF band signal through an antenna and downconverts an RF band signal, received through the antenna, into a baseband signal.

For example, the RF processor 11-10 may include a transmission filter, a reception filter, an amplifier, a mixer, an oscillator, a Digital-to-Analog Converter (DAC), and an Analog-to-Digital Converter (ADC). Although FIG. 1P shows only one antenna, the UE may include a plurality of antennas.

In addition, the RF processor 11-10 may include a plurality of RF chains. Further, the RF processor 11-10 may perform beamforming. For beamforming, the RF processor 11-10 may adjust the phase and strength of each of signals transmitted and received through a plurality of antennas or antenna elements. The RF processor may perform MIMO and may receive a plurality of layers when performing MIMO.

The baseband processor 11-20 performs a function of converting a baseband signal and a bit stream according to the physical-layer specification of a system. For example, in data transmission, the baseband processor 11-20 encodes and modulates a transmission bit stream, thereby generating complex symbols.

In data reception, the baseband processor 11-20 demodulates and decodes a baseband signal, provided from the RF processor 11-10, thereby reconstructing a reception bit stream.

For example, according to OFDM, in data transmission, the baseband processor 11-20 generates complex symbols by encoding and modulating a transmission bit stream, maps the complex symbols to subcarriers, and constructs OFDM symbols through Inverse Fast Fourier Transform (IFFT) and Cyclic Prefix (CP) insertion.

In data reception, the baseband processor 11-20 divides a baseband signal, provided from the RF processor 11-10, into OFDM symbols, reconstructs signals mapped to subcarriers through Fast Fourier Transform (FFT), and reconstructs a reception bit stream through demodulation and decoding.

As described above, the baseband processor 11-20 and the RF processor 11-10 transmit and receive signals. Accordingly, the baseband processor 11-20 and the RF processor 11-10 may be referred to as a transmitter, a receiver, a transceiver, or a communication unit. At least one of the baseband processor 11-20 and the RF processor 11-10 may include a plurality of communication modules to support a plurality of different radio access technologies.

Further, at least one of the baseband processor 11-20 and the RF processor 11-10 may include different communication modules for processing signals in different frequency bands.

For example, the different radio access technologies may include a wireless LAN (for example, IEEE 802.11), a cellular network (for example, an LTE network), and the like. In addition, the different frequency bands may include a super high frequency (SHF) band (for example, 2.NRHz, NRhz) and a millimeter wave band (for example, 60 GHz).

The storage unit 11-30 stores data, such as a default program, an application, and configuration information for operating the UE. In particular, the storage unit 11-30 may store information on a second access node performing wireless communication using a second radio access technology. The storage unit 11-30 provides stored data upon request from the controller 11-40.

The controller 11-40 controls overall operations of the UE. For example, the controller 11-40 transmits and receives signals through the baseband processor 11-20 and the RF processor 11-10. Further, the controller 11-40 records and reads data in the storage unit 11-40. To this end, the controller 11-40 may include at least one processor. For example, the controller 11-40 may include a Communication processor (CP) to perform control for communication and an application processor (AP) to control an upper layer, such as an application. Further, according to an embodiment of the present disclosure, the controller 11-40 may include a multi-connection processor 11-42 to perform processing for an operation in a multi-connection mode.

FIG. 2 is a block diagram illustrating the configuration of a main base station in a wireless communication system according to an embodiment of the present disclosure.

Referring to FIG. 2, the base station includes an RF processor 2-10, a baseband processor 2-20, a backhaul communication unit 2-30, a storage unit 2-40, and a controller 2-50.

The RF processor 2-10 performs a function for transmitting or receiving a signal through a wireless channel, such as band conversion and amplification of a signal. That is, the RF processor 2-10 upconverts a baseband signal, provided from the baseband processor 2-20, into an RF band signal to transmit the RF band signal through an antenna and downconverts an RF band signal, received through the antenna, into a baseband signal.

For example, the RF processor 2-10 may include a transmission filter, a reception filter, an amplifier, a mixer, an oscillator, a DAC, and an ADC. Although FIG. 1Q shows only one antenna, the first access node may include a plurality of antennas. In addition, the RF processor 2-10 may include a plurality of RF chains.

Further, the RF processor 2-10 may perform beamforming. For beamforming, the RF processor 2-10 may adjust the phase and strength of each of signals transmitted and received through a plurality of antennas or antenna elements. The RF processor may transmit one or more layers, thereby performing downlink MIMO.

The baseband processor 2-20 performs a function of converting a baseband signal and a bit stream according to the physical-layer specification of a first radio access technology. For example, in data transmission, the baseband processor 2-20 encodes and modulates a transmission bit stream, thereby generating complex symbols.

In data reception, the baseband processor 2-20 demodulates and decodes a baseband signal, provided from the RF processor 2-10, thereby reconstructing a reception bit stream. For example, according to OFDM, in data transmission, the baseband processor 2-20 generates complex symbols by encoding and modulating a transmission bit stream, maps the complex symbols to subcarriers, and constructs OFDM symbols through IFFT and CP insertion.

In data reception, the baseband processor 2-20 divides a baseband signal, provided from the RF processor 2-10, into OFDM symbols, reconstructs signals mapped to subcarriers through FFT, and reconstructs a reception bit stream through demodulation and decoding. As described above, the baseband processor 2-20 and the RF processor 2-10 transmit and receive signals. Accordingly, the baseband processor 2-20 and the RF processor 2-10 may be referred to as a transmitter, a receiver, a transceiver, a communication unit, or a wireless communication unit.

The backhaul communication unit 2-30 provides an interface for performing communication with other nodes in a network. That is, the backhaul communication unit 2-30 converts a bit stream, transmitted from the main base station to another node, for example, a secondary base station or a core network, into a physical signal and converts a physical signal, received from the other node, into a bit stream.

The storage unit 2-40 stores data, such as a default program, an application, and configuration information for operating the base station. In particular, the storage unit 2-40 may store information on a bearer allocated to a connected UE, a measurement result reported from a connected UE, and the like. In addition, the storage unit 2-40 may store information as a criterion for determining whether to provide or stop a multi-connection to a UE. The storage unit 2-40 provides stored data upon request from the controller 2-50.

The controller 2-50 controls overall operations of the main base station. For example, the controller 2-50 transmits and receives signals through the baseband processor 2-20 and the RF processor 2-10 or through the backhaul communication unit 2-30. Further, the controller 2-50 records and reads data in the storage unit 2-40. To this end, the controller 2-50 may include at least one processor. Further, according to an embodiment of the present disclosure, the controller 2-50 may include a multi-connection processor 2-52 to perform processing for an operation in a multi-connection mode.

<Embodiment 2>

FIG. 3A illustrates the structure of a next-generation mobile communication system according to the present disclosure.

Referring to FIG. 3A, a cell served by an NR Node B (NR NB) 3a-05 operating on the basis of a beam may include a plurality of transmission reception points (TRPs) 3a-10, 3a-15, 3a-20, 3a-25, 3a-30, 3a-35, and 3a-40.

The TRPs 3a-10 to 3a-40 are blocks resulting from the separation of only a function of transmitting and receiving a physical signal from an existing LTE base station (eNB) and may include a plurality of antennas. Particularly, the TRPs 3a-10 to 3a-40 may perform beamforming by generating beams in different directions using a plurality of transmission and reception antennas and may also be referred to as a beam group (BG).

A UE 3a-50 accesses the NR NB 3a-05 and an external network through the TRPs 3a-10 to 3a-40. To serve traffic for users, the NR NB 3a-05 performs scheduling by collecting state information on UEs, such as a buffer state, an available transmission power state, and a channel state, and schedules the state information and supports connection between the UEs and a core network (CN). The NR NB 3a-05 may not include a TRP, in which case the NR NB 3a-05 may consider a scenario of directly communicating with UEs 3a-50 in the cell using different beams.

In the NR system, an MME may serve a mobility management function for the UE 3a-50 and various control functions and is connected to a plurality of NR NB 3a-05, and an S-GW is a device providing a data bearer.

The MME and the S-GW 3a-45 may further perform authentication and bearer management for the UE 3a-50 that accesses the network and processes a packet transmitted from the NR NB 3a-05 or a packet to be transmitted to the NR NB 3a-05.

FIG. 3B illustrates a frame structure used by an NR system operating based on a beam according to the present disclosure.

Referring to FIG. 3B, a radio frame 3b-05 for the NR system includes a plurality of subframes 3b-10. In particular, the subframe for the NR system may include two types which are an overhead subframe (osf) 3b-15 and a data subframe (dsf) 3b-20.

The overhead subframe 3b-15 is a subframe for transmitting a common overhead signal required for beam selection, in which different overhead signals are transmitted by beam sweeping via respective symbols forming the subframe.

The overhead subframe 3b-15 includes a primary synchronization signal (PSS) for obtaining timing for an orthogonal frequency division multiplexing (OFDM) symbol, a secondary synchronization signal (SSS) for detecting a cell ID, an extended synchronization signal (ESS) for obtaining timing for a subframe, and a beam reference signal (BRS) for identifying a beam.

In addition, a physical broadcast channel (PBCH) including system information, a master information block (MIB), or information essential for a UE to access the system (for example, the bandwidth of a downlink beam and a system frame number) may be transmitted in the overhead subframe.

One overhead subframe 3b-15 or a plurality of overhead subframes 3b-15 may exist in the radio frame 3b-05. FIG. 3b shows that overhead subframes 3b-15 are transmitted in 0th and 25th subframes.

The data subframe 3b-20 is a subframe for transmitting actual data to be transmitted to a particular UE and may employ a different beam pattern depending on the geographical distribution of UEs. A TRP 3b-25 performs beam sweeping in a different direction for each symbol during the overhead subframe 3b-15, and accordingly resources for data transmission and reception with UEs are allocated per beam in the data subframe 3b-20 on the basis of the measurement result (3b-30, 3b-35, and 3b-40).

If the direction of a beam transmitted by the TRP 3b-25 does not match the position of the UE, the UE cannot receive any signal in the corresponding data subframe. In addition, one TRP 3b-25 can transmit a plurality of data subframes during one radio frame 3b-05, and the UE can receive a plurality of beams from a plurality of TRPs 3b-25 depending on the position of the UE.

FIG. 3C illustrates a random access procedure in an LTE system.

A UE 3c-01 performs random access by performing the following procedure in initial connection, reconnection, or handover to a base station 3c-03 and other cases where and random access is required.

First, for connection to the base station 3c-03, the UE 3c-01 transmits a random access preamble via a physical channel for random access (3c-05). The preamble may be randomly selected by the UE or may be a particular preamble designated by the base station 3c-03.

Upon receiving the preamble, the base station 3c-03 transmits a random access response (hereinafter, "RAR") message to the UE 3c-01 in response (3c-10). The RAR message includes identifier information on the preamble used in operation 3c-05, uplink transmission timing correction information, allocation information on an uplink resource to be used in a subsequent operation, and temporary UE identifier information.

Upon receiving the RAR message, the UE 3c-01 transmits a different message via a resource allocated through the RAR message depending on the foregoing purposes (3c-15). For example, for initial connection, the UE 3c-01 transmits an RRCConnectionRequest message, which is a message of a radio resource control (RRC) layer. An RRCConnectionReestablishmentRequest message is transmitted for reconnection to a new cell, and an RRCConnectionReconfigurationComplete message is transmitted for handover. Further, a buffer status report (BSR) message for a resource request may be transmitted.

It is identified through a physical hybrid-ARQ indicator channel (PHICH) in synchronous HARQ and through an HARQ process ID and a new data indicator (NDI) of a physical downlink control channel (PDCCH) in asynchronous HARQ whether the message is successfully transmitted in operation 3c-15.

If the transmission of the random access preamble fails, the UE 3c-01 may retransmit the random access preamble. In retransmission, when not receiving a PDCCH from the base station 3c-03, the UE 3c-01 performs retransmission using the resource allocated through the previous RAR message according to an assigned method. When receiving a PDCCH relating to retransmission, the UE 3c-01 performs retransmission according to information included in the PDCCH.

In contention-based random access (that is, when the UE randomly selects and transmits a preamble), the UE 3c-01 receives a contention resolution message from the base station 3c-03 (3c-20). However, in contention-free random access (that is, when the base station command the UE to transmit a particular preamble), no resolution message is transmitted.

FIG. 3D illustrates a method for a UE to reselect the width of an uplink transmission beam in an NR system.

An NR UE 3d-01 in the idle state determines optimal downlink transmission/reception (TX/RX) beams on the basis of the result of measuring an overhead subframe (3d-05) from a 5G NB 3d-03 and camps on the determined downlink beams to monitor a paging message monitors (3d-10).

In operation 3d-15, the UE 3d-01 receives system information through a serving beam and receives information necessary for communication via the beam, and information for reselection of a neighboring beam. A default value for the transmission of a preamble transmitted by the UE 3d-01 in uplink random access may be transmitted via the system information. That is, the 5G NB may set the default value of the number (length) of transmission beams used for beam sweeping or the width of transmission beams.

In operation 3d-20, the UE 3d-01 performs random access with the NR NB 3d-03 on the basis of the received default uplink beam number/width information. Random access in the NR system may basically be similar to a procedure in the LTE system (the procedure described above in FIG. 3C) except that the random access procedure is performed per beam.

When random access is performed using the default uplink beam number/width, the operation changes depending on the capability of the UE 3d-01. When the default uplink beam number/width information set by the NR NB 3d-03 is equal to a value supported by the UE 3d-01, the UE 3d-01 performs random access using beam swapping on the basis of the set beam information.

The present disclosure proposes a method for performing random access by resetting the default uplink beam number/width in view of the capability of the UE 3d-01 when the default uplink beam number/width information set by the NR NB 3d-03 is different from the capability of the UE 3d-01.

In operation 3d-25, the UE 3d-01 transmits information on the uplink beam number/width supported by the UE to the NR NB 3d-03 through an RRC message. This procedure may be performed only when the information on the uplink beam number/width supported by the UE 3d-01 is greater than the default value received via the system information (hereinafter, "condition 1"), while the procedure may be omitted when the information on the uplink beam number/width supported by the UE is less than the default value received via the system information (hereinafter, "condition 2"). That is, under condition 2, the uplink beam number/width supported by the UE is applied when an initial random access preamble is transmitted. A detailed operation will be described later.

In operation 3d-30, the NR NB 3d-03 improves an uplink transmission beam resource on the basis of the information on the beam number/width transmitted by the UE 3d-01 and transmits the improved uplink transmission beam resource. This operation corresponds to the operation under condition 1, in which the beam width may be further reduced to concentrate the beams, and the NR NB 3d-03 changes the set value through the RRC message.

In operation 3d-35, the UE 3d-01 transmits a preamble using beam sweeping by applying the set uplink transmission beam number/width. In operation 3d-40, the NR NB 3d-03 transmits a value indicating an uplink beam having an optimal signal strength and quality among the reception beams in the above operation (an uplink transmission beam identifier or an OFDM symbol in a subframe used for transmitting the beam and a transmission index in the symbol) to the UE 3d-01.

In operation 3d-45, the UE 3d-01 determines an optimal reception beam through a downlink reception beam sweeping process and transmits a value indicating an optimal downlink transmission beam (a downlink transmission beam identifier or an OFDM symbol in a subframe used for transmitting the beam and a transmission index in the symbol) to the NB 3d-03.

That is, one subframe may include a random access radio resource associated with one downlink transmission, while one subframe may include a plurality of random access radio resources. When one subframe includes a plurality of random access radio resources, radio resources associated with the downlink transmission beam are sequentially inserted by the symbol.

FIG. 3E illustrates embodiment 1 of reselecting the width of an uplink transmission beam proposed in the present disclosure.

Embodiment 1 illustrates an operation in a case where condition 1 is satisfied in the method for the UE to reselect the width of the uplink transmission beam described in FIG. 3D.

When the default value of the uplink transmission beam width included in system information received by a UE 3e-01 from a base station 3e-03 is 30 degrees (3e-05), the UE 3e-01 performs random access by applying the beam width (3e-10).

That is, the UE transmits a random access preamble by sweeping 12 transmission beams having a beam width of 30 degrees. The UE 3e-01 compares the default value of the beam number/width received from the base station 3e-03 with the maximum beam number or the minimum beam width supportable by the UE, and performs a random access operation if the comparison result corresponds to condition 1.

Since condition 1 is satisfied, the UE 3e-01 may perform beam sweeping using a larger number of beams. Therefore, the UE 3e-01 transmits UE capability information including information on the supportable beam number/width information to the base station 3e-03 (3e-15).

The base station 3e-03 modifies a set value associated to the transmission beam number and width in view of the capability of the UE 3e-01 and transmits the set value to the UE 3e-01 (3e-20). That is, since it is set to perform beam sweeping with a larger number of beams, the UE 3e-01 transmits a random access preamble by applying the set transmission beam number and width in a subsequent operation (3e-25).

The base station 3e-03 transmits a value indicating an optimal uplink transmission beam (uplink transmission beam identifier or an OFDM symbol in a subframe used for transmitting the beam and a transmission index in the symbol) to the UE 3e-01 on the basis of the signal strength and quality of a preamble received via each uplink transmission beam (3e-30).

The UE 3e-01 determines an optimal reception beam through a downlink reception beam sweeping process and transmits a value indicating an optimal downlink transmission beam (a downlink transmission beam identifier or an OFDM symbol in a subframe used for transmitting the beam and a transmission index in the symbol) to the base station 3e-03 (3e-35).

That is, one subframe may include a random access radio resource associated with one downlink transmission, while one subframe may include a plurality of random access radio resources. When one subframe includes a plurality of random access radio resources, radio resources associated with the downlink transmission beam are sequentially inserted by the symbol.

FIG. 3F illustrates embodiment 2 of reselecting the width of an uplink transmission beam proposed in the present disclosure.

Embodiment 2 illustrates an operation in a case where condition 2 is satisfied in the method for the UE to reselect the width of the uplink transmission beam described in FIG. 3D.

When the default value of the uplink transmission beam width included in system information received by a UE 3f-01 from a base station 3f-03 is 30 degrees (3f-05), the UE 3f-01 performs random access by applying the beam width (3f-10).

That is, the UE 3f-01 needs to transmit a random access preamble by sweeping 12 transmission beams having a beam width of 30 degrees. However, since the UE 3f-01 can support a beam width of up to 45 degrees, the UE cannot perform random access by sweeping the 12 transmission beams.

This corresponds to condition 2. In this case, the UE 3f-01 performs random access by sweeping the transmission beams according to the capability thereof. The base station 3f-03 expects that the UE 3f-01 transmits 12 preambles via the respective beams. Accordingly, the UE 3f-01 may transmit a preamble via each beam by beam swapping for eight beams corresponding to the capability thereof and may transmit a preamble by the following methods for a period in which the remaining four preambles are transmitted. 1. No preamble is transmitted during a period of first four symbols of beam sweeping and a preamble is transmitted after the period.

2. A preamble is transmitted from the first symbol of beam sweeping and no preamble is transmitted in a period of the last four symbols.

3. A preamble is transmitted from the first symbol of beam sweep and the preambles transmitted during a period of the last four symbols are sequentially transmitted in a duplicated manner.

After the random access procedure, the base station 3f-03 transmits a value indicating an optimal uplink transmission beam (uplink transmission beam identifier or an OFDM symbol in a subframe used for transmitting the beam and a transmission index in the symbol) to the UE 3f-01 on the basis of the signal strength and quality of a preamble received via each uplink transmission beam (3f-15).

The UE 3f-01 determines an optimal reception beam through a downlink reception beam sweeping process and transmits a value indicating an optimal downlink transmission beam (a downlink transmission beam identifier or an OFDM symbol in a subframe used for transmitting the beam and a transmission index in the symbol) to the base station 3f-03 (3f-20).

That is, one subframe may include a random access radio resource associated with one downlink transmission, while one subframe may include a plurality of random access radio resources. When one subframe includes a plurality of random access radio resources, radio resources associated with the downlink transmission beam are sequentially inserted by the symbol.

FIG. 3G illustrates a UE operation in which a UE determines the width of an uplink transmission beam in an NR system proposed in the present disclosure. The UE operation includes the following operations.

The UE operation may include: an operation in which the UE measures downlink beams transmitted from a base station or a TRP (3g-05); an operation in which the UE determines an optimal downlink transmission beam and an optimal downlink reception beam (3g-10); an operation in which the UE camps on a beam for any TRP/BG on the basis of a measured value and monitors a paging message (3g-15); and an operation in which the UE receives system information through the determined optimal downlink reception beam (3g-20). The system information may include a default value of an uplink transmission beam to be used by the UE for random access. The default value may include information on the (number) length or width of transmission beams.

Further, the UE operation may include: an operation in which the UE determines a time/frequency resource for preamble transmission in a second time period on the basis of the number of preamble transmissions in a first time period (3g-25); and an operation in which the UE transmits a preamble through uplink transmission beams(3g-30).

The above operations may be changed depending on the capability of the UE. If condition 1 is satisfied, the UE may transmit a preamble using all symbols in the second time period. If condition 2 is satisfied, the UE may transmit a preamble using some of the symbols transmitted in the first time period.

Here, condition 1 is that the number and width of uplink beams supported by the UE are greater than the default values received via the system information, and condition 2 is that the number and width of uplink beams supported by the UE are less than the default values received via the system information.

In addition, the UE operation may include an operation in which the UE receives a response message for determining a downlink reception beam during a third time period (3g-35), during which the UE monitors a downlink scheduling link.

In addition, the UE operation may include an operation in which the UE receives a response message including uplink transmission beam information and an allocated resource (3g-40). In this operation, the base station transmits a value indicating an optimal uplink transmission beam (an uplink transmission beam identifier or an OFDM symbol in a subframe used for transmitting the beam and a transmission index in the symbol) to the UE on the basis of the signal strength and quality of a preamble received via each uplink transmission beam.

Reference signals for the beam are included in one subframe and are divided by the symbol. Therefore, instead of a specific beam index value, the index of a symbol in the subframe and symbol order information may be used as the downlink transmission beam information.

Finally, the UE operation may include an operation in which the UE transmits a message including downlink transmission beam information (3g-45). In this operation, the UE determines an optimal reception beam through a downlink reception beam sweeping process and transmits a value indicating an optimal downlink transmission beam (a downlink transmission beam identifier or an OFDM symbol in a subframe used for transmitting the beam and a transmission index in the symbol) to the base station.

Reference signals for the beam are included in one subframe and are divided by the symbol. Therefore, instead of a specific beam index value, the index of a symbol in the subframe and symbol order information may be used as the downlink transmission beam information. The message is transmitted via the determined uplink transmission beam resource.

FIG. 3H is a block diagram illustrating the configuration of a UE according to an embodiment of the present disclosure.

Referring to FIG. 3H, the UE according to the embodiment of the present disclosure includes a radio frequency (RF) processor 3h-10, a baseband processor 3h-20, a storage unit 3h-30, and a controller 3h-40.

The RF processor 3h-10 performs a function for transmitting or receiving a signal through a wireless channel, such as band conversion and amplification of a signal. That is, the RF processor 3h-10 upconverts a baseband signal, provided from the baseband processor 3h-20, into an RF band signal to transmit the RF band signal through an antenna and downconverts an RF band signal, received through the antenna, into a baseband signal.

For example, the RF processor 3h-10 may include a transmission filter, a reception filter, an amplifier, a mixer, an oscillator, a Digital-to-Analog Converter (DAC), and an Analog-to-Digital Converter (ADC). Although FIG. 3H shows only one antenna, the UE may include a plurality of antennas.

In addition, the RF processor 3h-10 may include a plurality of RF chains. Further, the RF processor 3h-10 may perform beamforming. For beamforming, the RF processor 3h-10 may adjust the phase and strength of each of signals transmitted and received through a plurality of antennas or antenna elements.

The RF processor 3h-10 may perform MIMO and may receive a plurality of layers when performing MIMO. The RF processor 3h-10 may perform reception beam sweeping by appropriately setting the plurality of antennas or antenna elements under the control of the controller 3h-40, or may adjust the orientation and width of a reception beam such that the reception beam is coordinated with a transmission beam.

The baseband processor 3h-20 performs a function of converting a baseband signal and a bit stream according to the physical-layer specification of a system. For example, in data transmission, the baseband processor 3h-20 encodes and modulates a transmission bit stream, thereby generating complex symbols. In data reception, the baseband processor 3h-20 demodulates and decodes a baseband signal, provided from the RF processor 3h-10, thereby reconstructing a reception bit stream.

For example, according to OFDM, in data transmission, the baseband processor 3h-20 generates complex symbols by encoding and modulating a transmission bit stream, maps the complex symbols to subcarriers, and constructs OFDM symbols through Inverse Fast Fourier Transform (IFFT) and Cyclic Prefix (CP) insertion.

In data reception, the baseband processor 3h-20 divides a baseband signal, provided from the RF processor 3h-10, into OFDM symbols, reconstructs signals mapped to subcarriers through Fast Fourier Transform (FFT), and reconstructs a reception bit stream through demodulation and decoding.

As described above, the baseband processor 3h-20 and the RF processor 3h-10 transmit and receive signals. Accordingly, the baseband processor 3h-20 and the RF processor 3h-10 may be referred to as a transmitter, a receiver, a transceiver, or a communication unit. At least one of the baseband processor 3h-20 and the RF processor 3h-10 may include a plurality of communication modules to support a plurality of different radio access technologies.

Further, at least one of the baseband processor 3h-20 and the RF processor 3h-10 may include different communication modules for processing signals in different frequency bands. For example, the different radio access technologies may include an LTE network, an NR network, and the like. In addition, the different frequency bands may include a super high frequency (SHF) band (for example, 2.5 GHz and 5 GHz) and a millimeter wave band (for example, 60 GHz).

The storage unit 3h-30 stores data, such as a default program, an application, and configuration information for operating the UE. The storage unit 3h-30 provides stored data upon request from the controller 3h-40.

The controller 3h-40 controls overall operations of the UE. For example, the controller 3h-40 transmits and receives signals through the baseband processor 3h-20 and the RF processor 3h-10. Further, the controller 3h-40 records and reads data in the storage unit 3h-40.

To this end, the controller 3h-40 may include at least one processor. For example, the controller 3h-40 may include a Communication processor (CP) to perform control for communication and an application processor (AP) to control an upper layer, such as an application. Further, according to an embodiment of the present disclosure, the controller 3h-40 may include a multi-connection processor 3h-45 to perform processing for an operation in a multi-connection mode.

FIG. 3I is a block diagram illustrating the configuration of a base station or TRP in a wireless communication system according to an embodiment of the present disclosure.

Referring to FIG. 3I, the base station according to the embodiment of the present disclosure includes an RF processor 3i-10, a baseband processor 3i-20, a backhaul communication unit 3i-30, a storage unit 3i-40, and a controller 3i-50.

The RF processor 3i-10 performs a function for transmitting or receiving a signal through a wireless channel, such as band conversion and amplification of a signal. That is, the RF processor 3i-10 upconverts a baseband signal, provided from the baseband processor 3i-20, into an RF band signal to transmit the RF band signal through an antenna and downconverts an RF band signal, received through the antenna, into a baseband signal.

For example, the RF processor 3i-10 may include a transmission filter, a reception filter, an amplifier, a mixer, an oscillator, a DAC, and an ADC. Although FIG. 1Q shows only one antenna, the first access node may include a plurality of antennas. In addition, the RF processor 3i-10 may include a plurality of RF chains.

Further, the RF processor 3i-10 may perform beamforming. For beamforming, the RF processor 3i-10 may adjust the phase and strength of each of signals transmitted and received through a plurality of antennas or antenna elements. The RF processor may transmit one or more layers, thereby performing downlink MIMO.

The baseband processor 3i-20 performs a function of converting a baseband signal and a bit stream according to the physical-layer specification of a first radio access technology. For example, in data transmission, the baseband processor 3i-20 encodes and modulates a transmission bit stream, thereby generating complex symbols.

In data reception, the baseband processor 3i-20 demodulates and decodes a baseband signal, provided from the RF processor 3i-10, thereby reconstructing a reception bit stream. For example, according to OFDM, in data transmission, the baseband processor 3i-20 generates complex symbols by encoding and modulating a transmission bit stream, maps the complex symbols to subcarriers, and constructs OFDM symbols through IFFT and CP insertion.

In data reception, the baseband processor 3i-20 divides a baseband signal, provided from the RF processor 3i-10, into OFDM symbols, reconstructs signals mapped to subcarriers through FFT, and reconstructs a reception bit stream through demodulation and decoding.

As described above, the baseband processor 3i-20 and the RF processor 3i-10 transmit and receive signals. Accordingly, the baseband processor 3i-20 and the RF processor 3i-10 may be referred to as a transmitter, a receiver, a transceiver, a communication unit, or a wireless communication unit. The communication unit 3i-30 provides an interface for performing communication with other nodes in a network.

The storage unit 3i-40 stores data, such as a default program, an application, and configuration information for operating the base station. In particular, the storage unit 3i-40 may store information on a bearer allocated to a connected UE, a measurement result reported from a connected UE, and the like. In addition, the storage unit 3i-40 may store information as a criterion for determining whether to provide or stop a multi-connection to a UE. The storage unit 3i-40 provides stored data upon request from the controller 3i-50.

The controller 3i-50 controls overall operations of the main base station. For example, the controller 3i-50 transmits and receives signals through the baseband processor 3i-20 and the RF processor 3i-10 or through the backhaul communication unit 3i-30. Further, the controller 3i-50 records and reads data in the storage unit 3i-40. To this end, the controller 3i-50 may include at least one processor. Further, according to an embodiment of the present disclosure, the controller 3i-50 may include a multi-connection processor 3i-55 to perform processing for an operation in a multi-connection mode.

<Third Embodiment>

FIG. 4A illustrates the structure of an LTE system for reference to describe the present disclosure.

Referring to FIG. 4A, the wireless communication system includes a plurality of base stations 4a-05, 4a-10, 4a-15, and 4a-20, a mobility management entity (MME) 4a-25, and a serving-gateway (S-GW) 4a-30. A user equipment (hereinafter, "UE" or "terminal") 4a-35 is connected to an external network through the base stations 4a-05, 4a-10, 4a-15, and 4a-20 and the S-GW 4a-30.

The base stations 4a-05, 4a-10, 4a-15, and 4a-20 are access nodes of a cellular network and provide wireless connection for UEs connected to the network. That is, in order to serve traffic of users, the base stations 4a-05, 4a-10, 4a-15, and 4a-20 performs scheduling by collecting state information on UEs, such as a buffer state, an available transmission power state, and a channel state and supports connection between the UEs and a core network (CN).

The MME 4a-25 is a device that performs not only a mobility management function for a UE but also various control functions and is connected to a plurality of base stations. The S-GW 4a-30 is a device that provides a data bearer. The MME 4a-25 and the S-GW 4a-30 may further perform authentication and bearer management for a UE connected to the network and processes a packet transmitted from the base stations 4a-05, 4a-10, 4a-15, and 4a-20 or a packet to be transmitted to the base stations 4a-05, 4a-10, 4a-15, and 4a-20.

FIG. 4B illustrates the structure of wireless protocols for an LTE system for reference to describe the present disclosure.

Referring to FIG. 4B, the wireless protocols for the LTE system include a packet data convergence protocol (PDCP) 4b-05 and 4b-40, a radio link control (RLC) 4b-10 and 4b-35, and a medium access control (MAC) 4b-15 and 4b-30 for each of a UE and an ENB.

The packet data convergence protocol (PDCP) 4b-05 and 4b-40 is responsible for IP header compression/decompression operations, and the radio link control (hereinafter, "RLC") 4b-10 and 4b-35 reconfigures a PDCP packet data unit (PDU) into an appropriate size. The MAC 4b-15 and 4b-30 is connected to a plurality of RLC layer devices configured in one UE, multiplexes RLC PDUs to an MAC PDU, and demultiplexes RLC PDUs from an MAC PDU.

A physical layer 4b-20 and 4b-25 performs channel coding and modulation of upper-layer data and makes the upper-layer data into an OFDM symbol to thereby transmit the OFDM symbol data via a radio channel or performs demodulation and channel decoding of an OFDM symbol received through a radio channel to thereby transmit the OFDM symbol to an upper layer.

The physical layer also uses hybrid ARQ (HARQ) for additional error correction, in which a reception terminal transmits one bit to indicate whether a packet transmitted from a transmission terminal is received. This is referred to as HARQ ACK/NACK information. Downlink HARQ ACK/NACK information in response to uplink transmission may be transmitted through a physical channel, such as a physical hybrid-ARQ indicator channel (PHICH), and uplink HARQ ACK/NACK information in response to downlink transmission may be transmitted through a physical channel, such as a physical uplink control channel (PUCCH) or physical uplink shared channel (PUSCH).

HARQ transmission schemes include asynchronous HARQ and synchronous HARQ. Asynchronous HARQ is a scheme in which timing for retransmission is not fixed when (re)transmission fails. Synchronous HARQ is a scheme in which timing for retransmission is fixed (for example, to 8 ms) when (re)transmission fails. Further, it is possible to simultaneously perform a plurality of transmissions and receptions in parallel in downlink and uplink for one UE, and each transmission is distinguished by an HARQ process identifier.

In asynchronous HARQ, since retransmission timing is not fixed, the base station provides information on which HARQ process transmission belongs to and whether transmission is initial transmission or retransmission through a physical downlink control channel (PDCCH) physical channel in each transmission.

Specifically, the information on which HARQ process transmission belongs to is transmitted through an HARQ process ID field in the PDCCH. The information on whether transmission is initial transmission or retransmission is transmitted through a new data indicator (NDI) bit in the PDCCH, in which the bit indicates retransmission if not changed from an existing value and the bit indicates new transmission if changed to another value.

Accordingly, the UE receives resource allocation information in the PDCCH transmitted by the base station, checks details of a corresponding transmission, receives actual data through a physical downlink shared channel (PDSCH) physical channel in the downlink, and transmits actual data through a physical uplink shared channel (PUSCH) in the uplink.

Although not shown in the drawing, a radio resource control (hereinafter, "RRC") layer exists above the PDCP layer of each of the UE and the base station. The RRC layer exchanges connection and measurement-related setup control messages for radio resource control.

FIG. 4C illustrates a random access procedure in an LTE system for reference for the present disclosure. Since similar procedures and terms are used for a 5G system to which the present disclosure is applied, the procedure will be briefly described for the sake of understanding.

A UE 4c-01 performs random access by performing the following procedure in initial connection, reconnection, handover, and various cases where random access is required.

First, the UE 4c-01 transmits a random access preamble via a physical channel for random access to connect to a base station 4c-03 (4c-11). In the LTE system, the physical channel is referred to as a physical random access channel (PRACH), and one or more UEs may simultaneously transmit random access preambles via the PRACH resource.

The random access preamble is a particular sequence specially designed to be received even though transmitted before complete synchronization with the base station and may have a plurality of preamble identifiers depending on standards. If there is a plurality of preamble identifies, the preamble transmitted by the UE may be a preamble randomly selected by the UE or may be a particular preamble designated by the base station.

When the base station receives the preamble, the base station 4c-03 transmits a random access response (hereinafter, "RAR") message to the UE in response (4c-13).

The RAR message includes identifier information on the preamble used in operation 4c-01, uplink transmission timing correction information, uplink resource allocation information to be used for a subsequent operation (that is, operation 4c-15), and temporary UE identifier information.

The identifier information on the preamble is transmitted to indicate which preamble the RAR message is transmitted in response to, for example, when a plurality of UEs transmits different preambles to attempt random access in operation 4c-11.

The uplink resource allocation information is detailed information on a resource to be used by the UE in operation 4c-15 and includes the physical position and size of the resource, a modulation and coding scheme used for transmission, and power adjustment information for transmission.

The temporary UE identifier information is a value transmitted for use where the UE does not have an identifier assigned by the base station for communication with the base station since the UE transmits a preamble for initial connection.

The RAR message needs to be transmitted within a specified period from a specific time after the preamble is transmitted, and the period is referred to as a RAR window. When the RAR message is transmitted, the base station schedules the RAR message through a PDCCH, corresponding scheduling information is scrambled using a random access-radio network temporary identifier (RA-RNTI), and the RA-RNTI is mapped with a PRACH resource used to transmit the message in 4c-11. Thus, the UE transmitting a preamble via a specific PRACH resource attempts to receive a PDCCH on the basis of a corresponding RA-RNTI and determines whether there is a corresponding RAR message.

Upon receiving the RAR message, the UE transmits a different message via a resource allocated through the RAR message according to the aforementioned various purposes (4c-15). Here, the third transmitted message may be referred to as Msg3 (that is, the preamble in operation 4c-11 is also referred to as Msg1, and the RAR in operation 4c-13 is also referred to as Msg2).

Examples of Msg3 transmitted by the UE may include an RRCConnectionRequest message as an RRC-layer message for initial connection, an RRCConnectionReestablishmentRequest message for reconnection, and an RRCConnectionReconfigurationComplete message for handover. Alternatively, a buffer status report (BSR) message for a resource request may be transmitted.

Subsequently, for initial transmission (that is, where Msg3 does not include base station identifier information previously allocated to the UE), the UE may receive a contention resolution message from the base station (4c-17).

The content resolution message includes the same content as transmitted by the UE via Msg3. Thus, even though a plurality of UEs selects the same preamble in operation 4c-11, it is possible to indicate which UE the contention resolution message is transmitted in response to.

FIG. 4D illustrates the structure of a frame used by a 5G system to which the present disclosure is applied.

The 5G system may consider a scenario of operating at high frequencies in order to secure a wide frequency bandwidth for high transmission rate. However, since signal transmission is difficult at high frequencies, a scenario in which a beam is generated to transmit data may be considered.

Accordingly, a scenario may be considered in which a base station or a transmission reception point (hereinafter, "TRP") 4d-01 communicates with UEs 4d-71, 4d-73, 4d-75, 4d-77, and 4d-79 in a cell using different beams. That is, in FIG. 4D, a scenario is assumed in which UE 1 4d-71 uses beam #1 4d-51 for communication, UE 2 4d-73 uses beam #5 4d-55 for communication, and UE 3 4d-75, UE 4 4d-77, and UE 5 4d-79 use beam #7 4d-57 for communication.

An overhead subframe (osf) 4d-03 exists in time in order to measure which beam a UE uses to communicate with the TRP. In the osf, the base station transmits a reference signal using a different beam for each symbol (or a plurality of symbols).

In FIG. 4D, it is assumed that there are 12 beams transmitted by the base station including #1 4d-51 to #12 4d-62 and each different beam is transmitted by sweeping for each symbol in the osf. That is, each beam is transmitted for each symbol (for example, beam #1 4d-51 is transmitted in a first symbol 4d-31) within the osf, and the UE measures the osf, thereby measuring which beam transmitted in the osf the strongest signal is from.

In FIG. 4D, it is assumed that the osf is repeated every 25 subframes and the remaining 24 subframes are data subframes (dsf) 4d-05 for transmitting and receiving general data.

Accordingly, it is assumed that, according to scheduling by the base station, UE 3 4d-75, UE 4 4d-77, and UE 5 4d-79 may perform communication commonly using beam #7 (4d-11), UE 1 4d-71 may perform communication using beam #1 (4d-13), and UE 2 4d-73 may perform communication using beam #5 (4d-15).

Although FIG. 4D illustrates a diagram of transmission beams #1 4d-51 to #12 4d-62 of the base station, a reception beam of the UE (for example, 4d-81, 4d-83, 4d-85, and 4d-87 of UE 1 4d-71) for receiving the transmission beams of the base station may be further considered.

In FIG. 4D, UE 1 has four beams 4d-81, 4d-83, 4d-85, and 4d-87 and performs beam sweeping to determine which beam has the best reception performance. Here, when a plurality of beams cannot be used at the same time, one reception beam may be used for each osf to receive as many osfs as the number of reception beams, thereby finding an optimal transmission beam for the base station and an optimal reception beam for the UE.

FIG. 4E illustrates the structure of a frame for performing random access proposed in the present disclosure. That is, FIG. 4E illustrates a procedure for performing the procedure described above in FIG. 4C in a system having the structure illustrated in FIG. 4D.

FIG. 4E is described on the basis of TDD, in which a downlink (DL: transmission from a base station to a terminal) subframe and an uplink (UL: transmission from a terminal to a base station) subframe coexist on the same frequency according to configurations from a base station. Further, PRACH resources 4e-11, 4e-13, 4e-15, and 4e-17 for transmitting the preamble in operation 4c-11 of FIG. 4c exist in particular UL subframes.

The PRACH resource may span one subframe, or only some of the symbols in one subframe may be used for the PRACH resource. For the convenience of explanation, it is assumed in FIG. 4E that the PRACH resource spans one subframe.

When a random access procedure is required, a UE selects one of the PRACH resources to transmit a preamble. The base station transmits a response message in response to the preamble (in operation 4c-13 of FIG. 4C), and the response message is transmitted in a RAR window mapped to each PRACH resource.

That is, a RAR window corresponding to the PRACH resource 4e-11 corresponds to a period 4e-21, a RAR window corresponding to the PRACH resource 4e-13 corresponds to a period 4e-23, a RAR window corresponding to the PRACH resource 4e-15 corresponds to a period 4e-25, and a RAR window corresponding to the PRACH resource 4e-17 corresponds to a period 4e-27.

The time (for example, 4e-31) from the PRACH resource to the RAR window time (that is, the start point of the RAR window) may be a predetermined value having a length in subframes defined in the standard or may be a predetermined value set by the base station for each PRACH resource or for one or more PRACH resource sets in a system information message broadcast by the base station.

Also, the RAR window size may be a predetermined value having a length in subframes defined in the standard or may be a predetermined value set by the base station for each PRACH resource or for one or more PRACH resource sets in the system information message broadcast by the base station.

For the convenience of description, FIG. 4E shows that each RAR window corresponding to each PRACH resource has a different start point assuming that each PRACH resource spans one subframe. However, when the PRACH resources are allocated to different symbols in one subframe, the RAR windows may overlap each other.

Accordingly, a UE that transmits a preamble through a particular PRACH resource may receive a RAR message in a RAR window corresponding to the PRACH resource. In order to receive the RAR message, it is determined whether there is a PDCCH resource (or a corresponding resource) including an RA-RNTI corresponding to the PRACH resource is present, thereby determining the presence or absence of the RAR message.

A method for determining the RA-RNTI may use the subframe index (t_id) of the PRACH on the time and the index (f_id) of the PRACH on the frequency. For example, the RA-RNTI may be calculated by the following equation.

$$\text{RA-RNTI} = 1 + \text{t_id} + \text{total number of subframes in frame} * \text{f_id}$$

Alternatively, the RA-RNTI value corresponding to each PRACH resource may be a predetermined value set by the base station for each PRACH resource or set in the system information message. Further, although not shown in FIG. 4E, if the PRACH resources are allocated to different symbols in one subframe, a symbol value (s_id) for a PRACH transmitting a preamble may further be used when calculating each RA-RNTI value. For example, the RA-RNTI may be calculated by the following equation.

$$RA\text{-}RNTI = 1 + s_id + \text{total number of symbols in subframe} * t_id + \text{total number of subframes in frame} * f_id$$

Since the present disclosure assumes a beam-based system, the UE may transmit the same preamble or different preambles via different PRACH resources (for example, 4e-11, 4e-13, 4e-15, and 4e-17 in FIG. 4E) using a plurality of beams (for example, 4d-81, 4d-83, 4d-85, and 4d-87 in FIG. 4D) for preamble transmission.

Accordingly, the UE may receive corresponding RAR messages in RAR windows (for example, 4e-21, 4e-23, 4e-25, and 4e-27 in FIG. 4E) corresponding to the respective PRACH resources. The RAR messages may include reception strength information on a received preamble in addition to the information described above in FIG. 4C.

Subsequently, the UE may transmit the same Msg3 for each received RAR message, or the UE may transmit Msg3 via one resource allocated through a RAR selected RAR according to the reception strength information on the preamble received by the base station, which is included in each RAR message, and the reception strength of the RAR message.

FIG. 4F is a flowchart illustrating the operation of a UE according to the present disclosure.

As described above in FIG. 4D, the UE in the idle mode measures a downlink beam signal transmitted from a base station and selects a combination of an optimal downlink transmission beam and an optimal downlink reception beam for the UE, which satisfy a predetermined condition (4f-03). The UE camps on the selected beam and may monitor a paging message transmitted by the base station via the beam (4f-05). The paging message is a message used to report to the UE that there is data (including a call) to be transmitted from the network to the UE.

In addition, the UE receives system information via the selected downlink beam for the base station, thereby obtaining information on an uplink PRACH resource (position and size of a resource in time and frequency) for transmitting a preamble for random access and information on the start point of a RAR window mapped to each PRACH resource and the length of the RAR window in time (4f-07).

The PRACH resource may span one subframe, or only some of the symbols in one subframe may be used for the PRACH resource. The RAR window may also be signaled on a subframe basis.

When the UE has data to transmit or receives paging via the downlink, the UE selects PRACH resources to use using information obtained from the system information in order to perform random access (4f-09). The UE transmits preambles via the selected PRACH resources, in which the UE transmits the preambles by rotating the uplink transmission beam for the PRACH resources (4f-11).

Subsequently, the UE monitors whether a RAR is transmitted in response to each transmitted preamble using an RA-RNTI corresponding to a corresponding PRACH resource during a corresponding RAR window according to the received information on the start point of the RAR window and the length of the RAR window in time (4f-13).

Accordingly, the UE may receive one RAR message or a plurality of RAR messages (4f-15). The RAR message may include information on an uplink transmission beam used by the UE, resource allocation information for Msg3 transmission, and information on reception power for the base station relating to the preambles transmitted in operation 4f-11.

If the UE receives a plurality of RARs, the UE determines which RAR to select using the included information (4f-17) and transmits Msg3 using resource allocation information for Msg3 transmission in the RAR message selected for use (4f-19). Msg3 may include information on a downlink transmission beam preferred by the UE. Msg3 may be transmitted using an uplink transmission beam included in the RAR message.

FIG. 4G is a block diagram illustrating the configuration of a UE according to an embodiment of the present disclosure.

Referring to FIG. 4G, the UE includes a radio frequency (RF) processor 4g-10, a baseband processor 4g-20, a storage unit 4g-30, and a controller 4g-40.

The RF processor 4g-10 performs a function for transmitting or receiving a signal through a wireless channel, such as band conversion and amplification of a signal. That is, the RF processor 4g-10 upconverts a baseband signal, provided from the baseband processor 4g-20, into an RF band signal to transmit the RF band signal through an antenna and downconverts an RF band signal, received through the antenna, into a baseband signal.

For example, the RF processor 4g-10 may include a transmission filter, a reception filter, an amplifier, a mixer, an oscillator, a Digital-to-Analog Converter (DAC), and an Analog-to-Digital Converter (ADC). Although FIG. 4G shows only one antenna, the UE may include a plurality of antennas. In addition, the RF processor 4g-10 may include a plurality of RF chains.

Further, the RF processor 4g-10 may perform beamforming. For beamforming, the RF processor 4g-10 may adjust the phase and strength of each of signals transmitted and received through a plurality of antennas or antenna elements.

The baseband processor 4g-20 performs a function of converting a baseband signal and a bit stream according to the physical-layer specification of a system. For example, in data transmission, the baseband processor 4g-20 encodes and modulates a transmission bit stream, thereby generating complex symbols.

In data reception, the baseband processor 4g-20 demodulates and decodes a baseband signal, provided from the RF processor 4g-10, thereby reconstructing a reception bit stream. For example, according to OFDM, in data transmission, the baseband processor 4g-20 generates complex symbols by encoding and modulating a transmission bit stream, maps the complex symbols to subcarriers, and constructs OFDM symbols through Inverse Fast Fourier Transform (IFFT) and Cyclic Prefix (CP) insertion.

In data reception, the baseband processor 4g-20 divides a baseband signal, provided from the RF processor 4g-10, into OFDM symbols, reconstructs signals mapped to subcarriers through Fast Fourier Transform (FFT), and reconstructs a reception bit stream through demodulation and decoding.

As described above, the baseband processor 4g-20 and the RF processor 4g-10 transmit and receive signals. Accordingly, the baseband processor 4g-20 and the RF processor 4g-10 may be referred to as a transmitter, a receiver, a transceiver, or a communication unit. Further, at least one of the baseband processor 4g-20 and the RF processor 4g-10 may include different communication modules for processing signals in different frequency bands. The different frequency bands may include a super high frequency (SHF) band (for example, 2.5 GHz and 5 GHz) and a millimeter wave band (for example, 60 GHz).

The storage unit 4g-30 stores data, such as a default program, an application, and configuration information for operating the UE.

The controller 4g-40 controls overall operations of the UE. For example, the controller 4g-40 transmits and receives signals through the baseband processor 4g-20 and the RF processor 4g-10. Further, the controller 4g-40 records and reads data in the storage unit 4g-40.

To this end, the controller 4g-40 may include at least one processor. For example, the controller 4g-40 may include a Communication processor (CP) to perform control for communication and an application processor (AP) to control an upper layer, such as an application.

Further, according to an embodiment of the present disclosure, the controller 4g-40 may include a multi-connection processor 4g-42 to perform processing for an operation in a multi-connection mode. For example, the controller 4g-40 may control the UE to perform the procedure illustrated in the operation of the UE illustrated in FIG. 4F.

According to an embodiment of the present disclosure, the controller 4g-40 of the UE may instruct the RF processor and the baseband processor of the UE to transmit a preamble via a selected PRACH. Subsequently, if a RAR message(s) is received in a given period and the controller 4g-40 of the UE may instruct the RF processor and the baseband processor of the UE to select one RAR message and to transmit Msg3 via a corresponding resource.

Methods stated in claims and/or specifications according to various embodiments may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present disclosure as defined by the appended claims and/or disclosed herein.

The programs (software modules or software) may be stored in non-volatile memories including a random access memory and a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access, via an external port, the electronic device that performs embodiments of the present disclosure. Further, a separate storage device on the communication network may access a portable electronic device.

<Fourth Embodiment>

The present disclosure relates to a method and an apparatus for a UE efficiently to construct and report a power headroom report (hereinafter, "PHR") to NR and LTE in a communication environment where a next-generation mobile communication system (NR or 5G) and LTE interwork to serve the UE. A UE operation includes the following operations.

- Operation in which the UE receives an RRC control message from a serving cell of the LTE and sets a serving cell or serving beam for the NR, or operation in which the UE receives an RRC control message from a serving cell or serving beam of the NR and sets a serving cell for the LTE

- Operation in which the UE performs a first procedure (for example, random access) on the serving cell or serving beam of the NR in order to determine initial uplink transmission power to be used for the NR, or operation in which the UE performs a first procedure (for example, random access) on the serving cell of the LTE in order to determine initial uplink transmission power to be used for the LTE
- Operation in which a condition for triggering a PHR is satisfied in an entity for the NR of the UE, or operation in which a condition for triggering a PHR is satisfied in an entity for the LTE of the UE
- Operation in which the UE generates PHR format 1, format 2, format 3, format 4, or format 5 and transmits the generated format to one of the LTE serving cells if a PHR triggering condition preset in the serving cell of the LTE is satisfied
- Operation in which the UE generates PHR format 1, format 2, format 3, format 4, or format 5 and transmits the generated format to one of the NR serving beams or cells if a PHR triggering condition preset in the serving beam or cell of the NR is satisfied
- A PHR in PHR format 1, format 2, format 3, format 4, or format 5 may include the power headroom (PH) of the serving cell of the LTE measured during a first time unit or the PH of the serving beam or cell of the NR measured during a second time unit for the UE to report to the LTE base station.
- A PHR in PHR format 1, format 2, format 3, format 4, or format 5 may include the power headroom (PH) of the serving beam or cell of the NR measured during a third time unit or the PH of the serving cell of the LTE measured during a fourth time unit for the UE to report to the NR base station.
- The first time unit, the second time unit, the third time unit, and the fourth time unit may be all the same, partially the same, or all different. For example, the second time unit and the third time unit may be the same.

As used herein, a term for identifying an access node, terms for indicating network entities, terms for indicating messages, a term for indicating an interface between network entities, terms for indicating various pieces of identification information are illustrated for the convenience of explanation. Therefore, the present disclosure is not limited by the following terms, and other terms having equivalent technical meanings may be used to indicate these objects.

For the convenience of explanation, the present disclosure uses terms and names defined in 3rd Generation Partnership Project Long Term Evolution (3GPP LTE). However, the present disclosure is not limited by these terms and names and may be equally applied to systems according to other standards.

FIG. 5A illustrates the structure of a next-generation mobile communication system.

Referring to FIG. 5A, a radio access network of the next-generation mobile communication system includes a new radio Node B (hereinafter, "NR NB") 5a-10 and a new radio core network (NR CN) 5a-05. A new radio user equipment (hereinafter, "NR UE" or "UE") 5a-15 accesses an external network through the NR NB 5a-10 and the NR CN 5a-05.

In FIG. 5A, the NR NB 5a-10 corresponds to an evolved Node B (eNB) of an existing LTE system. The NR NB is connected to the NR UE 5a-15 via a radio channel and may provide a superior service to the existing Node B. In the next-generation mobile communication system, since all user traffic is served through a shared channel, a device that performs scheduling by collecting state information on UEs, such as a buffer state, an available transmission power state, and a channel state, is needed, and the NR NB 5a-10 function as this device.

One NR NB generally controls a plurality of cells. In order to realize ultrahigh-speed data transmission compared to the existing LTE, it is possible to additionally employ a beamforming technique that can provide an existing maximum bandwidth or greater using orthogonal frequency division multiplexing (hereinafter, "OFDM") as a radio access technology. In addition, an adaptive modulation and coding (hereinafter, "AMC") scheme that determines a modulation scheme and a channel coding rate according to the channel state of a UE is employed.

The NR CN 5a-05 performs functions, such as mobility support, bearer setup, and QoS setup. The NR CN is a device that performs various control functions in addition to a mobility management function for a UE, and is connected to a plurality of base stations. Also, the next-generation mobile communication system may interwork with the existing LTE system, and the NR CN is connected to an MME 5a-25 through a network interface. The MME is connected to an eNB 5a-30 which is an existing base station.

NR is aimed at supporting increased data transmission speed as compared to existing LTE. To increase data transmission speed in NR, a method for transmitting a signal using a wide frequency band existing in a frequency band of 6 GHz or more is considered.

That is, it is considered to increase transmission rate by using a millimeter wave (hereinafter, "mmWave") band, such as a 28 GHz band or 60 GHz band. Since a frequency band considered for mmWave has relatively large signal attenuation per distance, transmission based on a directional beam generated using multiple antennas is required to secure coverage.

Directional beam-based transmission has difficulty in transmitting or receiving a signal at a position where no beam is formed, and thus a beam sweeping technique is used to overcome this problem. Beam sweeping is a technique in which a transmission apparatus sequentially transmits directional beams having a certain beam width by sweeping or rotating the beams so that the beams are received by a reception apparatus within the range of the beams from the transmission apparatus.

For example, a transmission reception point 5b-05 (TRP, a device for transmitting and receiving a radio signal in a network, which may be a 5G NB or a device connected to a 5G NB) transmits a directional beam having a certain width in a direction at time t1 and transmits the directional beam having the same width in a different direction at time t2 so that the beam covers all the directions during a predetermined period. As a result, a downlink signal transmitted from a base station arrives at a UE 5b-15 at t9 and arrives at a UE 5b-10 at t4.

Beam sweeping is generally used when the base station does not know the direction of a directional beam to be applied to the UE, and a common overhead signal to be transmitted to the UE in the idle state is transmitted by beam sweeping.

To increase the efficiency of beams, not only a directional transmission beam but also a directional reception beam may be used. When a directional reception beam is used, the directivity/direction of a transmission beam and the directivity/direction of a reception beam need to be coordinated with each other. For example, even though the UE is located in the area of the transmission beam, if the directivity of the reception beam is not coordinated with the directivity of the transmission beam (5b-20), the UE cannot receive the transmission beam. However, if the directivity of the transmission beam is coordinated with the directivity of the reception beam (5b-25), the UE can transmit and receive data at much higher efficiency than in a case where no reception beam is used.

The reception apparatus searches for a reception beam that provides the best reception quality by applying different reception beams to the same transmission beam in order to find a reception beam to coordinate with the transmission beam. This process is referred to as reception beam sweeping.

In a mobile communication system using a directional beam, an analog beam, or a hybrid beam, the common overhead signal is transmitted in a specific subframe by beam sweeping and a directional beam in a single direction is used in another subframe, thereby transmitting and receiving user data with a particular UE.

The subframe 5c-05 (hereinafter, "overhead subframe (OSF)") including the overhead signal is repeatedly transmitted on a certain cycle 5c-10. One subframe includes a plurality of symbols, and one directional beam is transmitted per symbol in the OSF. For example, when a first symbol 5c-15 of the OSF corresponds to t1, a second symbol 5c-20 corresponds to t2, an eleventh symbol 5c-25 corresponds to t11, and the symbols have the same beam width, directional beams (or analog beams) covering different areas and having directivity set in different directions are transmitted via the respective symbols.

The following overhead signals may be transmitted via each symbol of the OSF.

- A signal for establishing downlink synchronization, such as a primary synchronization signal (PSS) and a secondary synchronization signal (SSS)
- A beam reference signal (BRS) for measuring received signal strength or received signal quality per beam
- System information, a master information block (MIB) or a physical broadcast channel (PBCH)
- The PBCH includes essential information for the UE to access the system, for example, the bandwidth of a downlink beam and a system frame number.

For reference, a PLMN identifier may be broadcast through a channel other than the MIB.

In a subframe other than the OSF periodically transmitted, the same beam is transmitted over a plurality of contiguous symbols, and user data for a UE in a particular connection state may be transmitted through the beam. This subframe is referred to as a data subframe (DSF) 5c-30 hereinafter.

FIG. 5D schematically illustrates an intra-base station carrier aggregation operation in an LTE system according to an embodiment of the present disclosure.

Referring to FIG. 5D, one base station may generally transmit and receive multiple carriers over a plurality of frequency bands. For example, when a carrier 5d-05 having a forward center frequency of f1 and a carrier 5d-10 having a forward center frequency of f2 are transmitted from a base station 5d-01, one UE may transmit/receive data using one of the two carriers.

Further, a UE having a carrier aggregation capability may transmit/receive data through a plurality of carriers at the same time. The base station 5d-01 may allocate more carriers to a UE 5d-02 having a carrier aggregation capability depending on the situation, thereby increasing the transmission speed of the UE 5d-02.

As described above, the aggregation of a forward carrier and uplink carriers transmitted and received by one base station is referred to as intra-base station carrier aggregation. However, although not shown in FIG. 5D, it may be necessary to aggregate forward carriers and reverse carriers transmitted and received by different base stations depending on cases.

FIG. 5D illustrates an intra-base station carrier aggregation operation in an LTE system according to an embodiment of the present disclosure. FIG. 5E describes an inter-base station carrier aggregation operation in an LTE system according to an embodiment of the present disclosure.

FIG. 5E schematically illustrates an inter-base station carrier aggregation operation in an LTE system according to an embodiment of the present disclosure.

Referring to FIG. 5E, when base station 1 5e-01 transmits/receives a carrier having a center frequency of f1 and base station 2 5e-02 transmits/receives a carrier having a center frequency of f2, a UE 5e- 03 aggregates (combines) the carrier having a forward center frequency of f1 and the carrier having a forward center frequency of f2, so that one aggregates carriers transmitted/received from two or more base stations.

In the embodiment of the present disclosure, this is referred to as inter-base station (inter-ENB) carrier aggregation (or inter-base station CA). In the embodiment of the present disclosure, inter-base station carrier aggregation is referred to as dual connectivity (hereinafter, "DC").

For example, DC being established indicates that carrier aggregation between base stations is set up, that one or more cell groups are set up, that a secondary cell group (SCG) is set up, that at least one secondary cell (hereinafter, "SCell") controlled by a base station other than a serving base station is set up, that a primary SCell (pSCell) is set up, that an MAC entity for a serving eNB (hereinafter, "SeNB") is set up, and that two MAC entities are set up in a UE.

Hereinafter, terms to be frequently used in describing embodiments of the present disclosure will be schematically explained as follows.

In the conventional sense, assuming that one forward carrier transmitted by one base station and one uplink carrier received by the base station constitute one cell, carrier aggregation may be construed such that a UE simultaneously transmits and receives data through a plurality of cells. Here, the maximum transmission speed has a positive correlation with the number of carriers to be aggregated.

Hereinafter, in embodiments of the present disclosure, a UE receiving data through a forward carrier or transmitting data through an uplink carrier has the same meaning as data being transmitted/received using a center frequency characterizing the carrier and a control channel and a data channel provided by a cell corresponding to a frequency band. Particularly, in embodiments of the present disclosure, carrier aggregation is expressed as "a plurality of serving cells is set up", in which terms "primary serving cell (hereinafter, "PCell")", "secondary serving cell (hereinafter, "SCell")", and "activated serving cell" are used. These terms have the same meanings as used in an LTE mobile communication system. It should be noted that in embodiments of the present disclosure, terms "carrier", "component carrier", and "serving cell" are interchangeably used.

In embodiments of the present disclosure, a set of serving cells controlled by the same base station is defined as a cell group or a carrier group (hereinafter, "CG"). The cell groups are divided into a master cell group (hereinafter, "MCG") and a secondary cell group (hereinafter, "SCG").

The MCG is a set of serving cells controlled by a base station that controls a PCell (hereinafter, "master base station" or "MeNB"). The SCG is a set of serving cells controlled by a base station that is not the base station controlling the PCell, that is, a base station that controls only SCells (hereinafter, "slave base station" or "SeNB"). A base station notifies a UE whether a particular serving cell belongs to the MCG or the SCG while setting up the serving cell.

One MCG and one or more SCGs may be set for one UE. Embodiments of the present disclosure consider that only one SCG is set for the convenience of description. However, even though more than one SCG is set up, the same details of the present disclosure may be applied without making any modification.

"PCell" and "SCell" are terms to indicate the type of a serving cell to be set for a UE. There is a plurality of differences between a PCell and an SCell. For example, the PCell always maintains an active state, while the SCell repeatedly switches between the active state and an inactive state according to an instruction from a base station. The mobility of a UE is controlled by the PCell, and the SCell may be construed as an additional serving cell for data transmission and reception. In the embodiments of the present disclosure, the PCell and the SCell refer to a PCell and a SCell defined in LTE 36.331 or 36.321.

Embodiments of the present disclosure consider the coexistence of a macrocell and a picocell. The macrocell is a cell controlled by a macro base station and provides a service in a relatively large area. The picocell is a cell controlled by a SeNB and provides a service generally in an area that is significantly smaller than that of the macrocell.

Although there is no strict criterion for classifying the macrocell and the picocell, for example, it may be assumed that the area of the macrocell has a radius of about 500 m and the area of the picocell has a radius of dozens of meters. In embodiments of the present disclosure, terms "picocell" and "small cell" are interchangeably used.

Referring back to FIG. 5E, if base station 1 5e-01 is a MeNB and base station 2 5e-02 is a SeNB, a serving cell 5e-05 having a center frequency of f1 is a serving cell belonging to an MCG and a serving cell 5e-10 having a center frequency of f2 is a serving cell belonging to an SCG.

These terms are used mainly to indicate which cell is under the control of a base station controlling the PCell of a particular UE, and the operation modes of the UE and the cell may change depending on whether the cell is controlled by the base station controlling the PCell of the particular UE. One SCG or one or more SCGs may be set for the UE.

In general intra-base station CA, a UE transmits not only a hybrid automatic repeat request (hereinafter, "HARQ") feedback and channel state information (hereinafter, "CSI") on a PCell but also an HARQ feedback and CSI on a SCell through a physical uplink control channel (hereinafter, "PUCCH") for the PCell, which is for applying a CA operation even to a UE that cannot perform simultaneous uplink transmissions.

In inter-base station CA (dual connectivity), it may be practically impossible to transmit an HARQ feedback and CSI on SCG SCells through a PUCCH for a PCell, because the HARQ feedback needs to be delivered within an HARQ round trip time (hereinafter, "RTT") (generally 8 ms), but a delay in transmission between a MeNB and a SeNB may be longer than the HARQ RTT. Due to this problem, a PUCCH transmission resource is set up in one of the SCells belonging to the SCG, and HARQ feedback, CSI, and the HARQ feedback and the CSI on the SCG SCells are transmitted through the PUCCH. The special SCell is referred to as a primary SCell (pSCell).

In the present disclosure, inter-base station CA may be interchangeable with dual connectivity between different base stations. The different base stations may be different base stations in an LTE system, different base stations in an NR system, and different base stations respectively in an LTE system and an NR system.

FIGS. 5F and 5G schematically illustrate a dual connectivity operation between a base station of an LTE system and a base station of an NR system according to an embodiment of the present disclosure.

In a next-generation mobile communication system (hereinafter, "NR system"), one base station may have a plurality of TRPs. Each TRP may transmit data that the base station of the NR system intends to transmit to a UE using digital beamforming, hybrid beamforming, or analog beamforming. Each TRP may form one beam per hour and may form a plurality of beams. However, in the present disclosure, it is assumed that each TRP can form one beam per hour for the convenience of explanation. Beams formed by the respective TRPs may use the same frequency or different frequencies.

Referring to FIGS. 5F and 5G, NR TRP1 5f-01 or NR TRP2 5f-02 may be a MeNB of a dual connectivity technology, and an LTE base station 5f-03 may be a SeNB of the dual connectivity technology. On the contrary, NR TRP1 5f-01 or NR TRP2 (5f-02) may be a SeNB of the dual connectivity technology, and the LTE base station 5f-03 may be a MeNB of the dual connectivity technology.

Beams 5f-05 and 5f-10 generated by the respective TRPs may be serving beams belonging to an MCG, and a serving cell 5f-15 having a center frequency of f1 may be a serving cell belonging to an SCG. On the contrary, the beams 5f-05 and 5f-10 generated by the respective TRPs may be serving beams belonging to the SCG, and the serving cell 5f-15 having a center frequency of f1 may be a serving cell belonging to the MCG.

A UE 5f-04 may simultaneously receive services from one or more base stations of the LTE system and one or more TRPs of the NR system using the dual connectivity technology. The UE 5f-04 may form a plurality of transmission and reception beams.

Since reverse transmission causes interference in a different cell in the reverse direction, reverse transmission output needs to be maintained at an appropriate level. To this end, in performing reverse transmission, a UE calculates reverse transmission output using a predetermined function and performs reverse transmission using the calculated reverse transmission output.

For example, the UE calculates a required reverse transmission output value by entering input values for estimating scheduling information, such as the amount of allocated and the level of a modulation coding scheme (MCS) to be applied, and a channel condition, such as a path loss value, into the predetermined function and performs reverse transmission on the basis of the calculated required reverse transmission output value.

A reverse transmission output value applicable by the UE is limited by the maximum transmission value for the UE. If the calculated required transmission output value exceeds the maximum transmission value for the UE, the UE performs reverse transmission by applying the maximum transmission value. In this case, since adequate reverse transmission output is not applied, the quality of reverse transmission may deteriorate.

Therefore, a base station preferably performs scheduling so that the required transmission output does not exceed the maximum transmission output. However, since the base station cannot identify several parameters, such as path loss, if necessary, the UE transmits a power headroom report (hereinafter, "PHR"), thereby reporting the power headroom (hereinafter, "PH") state thereof to the base station.

Factors affecting the power headroom of the LTE system or NR system may include 1) the amount of allocated transmission resources, 2) an MCS to be applied to reverse transmission, 3) the path loss of an associated forward carrier, 4) the accumulated value of an output adjustment command, 5) the number of beams that a base station or a UE can form, 6) the width of a beam that that a base station or a UE can form, 7) the (maximum) beam gain of a base station or a UE, 8) the antenna gain or array gain of a base station or a UE, 9) the antenna pattern or antenna configuration of a base station or a UE, 10) the beamforming resolution of a base station or a UE, 11) the maximum transmission power of a base station or a UE, and 12) the beam sweeping length of a base station or a UE.

Since these values may change for each reverse carrier, it is preferable to set whether to transmit a PHR for each reverse carrier or each reverse beam when a plurality of reverse carriers or beams is accumulated for one UE. However, for efficient PHR transmission, the UE may report all PHs for the plurality of reverse carriers or beams via one reverse carrier or beam.

Depending on operational strategies, PH for a carrier on which actual PUSCH transmission does not occur may be needed. Thus, in this case, a method of reporting all PHs for a plurality of reverse carriers via one reverse carrier may be more efficient.

For example, a plurality of PHs to be included in one PHR may be configured in a predetermined order. If five reverse carriers or beams are accumulated for one UE, only one of the reverse carriers or beams may be set to transmit all PHs for the five reverse carriers.

In the LTE system, a PHR may be triggered when the path loss of a connected forward carrier is changed to a predetermined reference value or greater, when a prohibit PHR timer expires, or when a predetermined period of time elapses after the PHR is generated.

On the other hand, in the NR system, a PHR may be triggered 1) when path loss is changed, 2) when a predetermined timer expires, 3) when a beam is changed (which can be distinguished by a beam identifier), 4) when beam width is changed, 5) when beam gain is changed, 6) when an antenna pattern is changed, and 7) when other beam-related settings are changed.

Even though a PHR is triggered, the UE does not immediately transmit the PHR but waits for the time when reverse transmission is possible, for example, the time when a reverse transmission resource is allocated, because the PHR is not information that needs to be processed very quickly.

FIG. 5H illustrates the configuration of a PHR that is transmitted via one serving cell or one serving beam when a service is received via the one serving cell (carrier) or the serving beam from an LTE system or an NR system according to embodiment 1 of the present disclosure.

In FIG. 5H, after a PHR is triggered, a UE performs first reverse transmission including the PHR. The PHR is an MAC control element (MAC CE) and has a size of eight bits. First two bits of the PHR are not used, and the remaining six bits are used to indicate one value in the range from -23 dB to 40 dB, which may indicate the power headroom of the UE.

FIG. 5H shows the configuration of a PHR according to an embodiment of the present disclosure. An MAC PDU is largely divided into a header 5h-05 and a payload 5h-10. The header includes a plurality of subheaders, and each subheader indicates information on data included in the payload, that is, an ID (LCID) indicating the type of the data and the size (L) of the data.

The PHR is also transmitted to a base station via the MAC PDU. To transmit the PHR, one subheader 5h-15 associated with the PHR is added to the header. This subheader may be allocated a particular LCID as first PHR format 1 indicating the PHR for one serving cell (carrier) or one serving beam of the LTE system or NR system.

If the size of the PHR is a fixed value, the subheader for the PHR may not include information indicating the size of the data. Along with the subheader, a one-byte PHR 5h-20 is included in the payload. First two bits of the PHR are not used, and the remaining six bits are used to indicate one value in the range from -23 dB to 40 dB, which may indicate the power headroom of the UE.

If the LTE system or the NR system in which a plurality of cells (carriers) or a plurality of beams is aggregated needs to report PHs for a plurality of serving cells (carriers) or a plurality of serving beams, the PHs may be transmitted via one PHR. This method makes it possible to reduce signal overhead compared to transmitting PH for each cell (carrier) or each beam and to obtain PH information even on a cell (carrier) or a beam where actual PUSCH transmission is not performed.

FIG. 51 illustrates a method for storing all PHs for a plurality of serving cells (carriers) or a plurality of serving beams in one PHR when a service is received via the plurality of serving cells (carriers) or the plurality of serving beams from an LTE system or an NR system according to an embodiment of the present disclosure.

FIG. 5I describes a method for storing all PHs for a plurality of cells (carriers) or a plurality of beams in one PHR. When one UE uses four cells (carriers) or beams, CC 1 or beam 1 5i-15 may carry PHs for not only CC 1 or beam 1 but also the other three CCs or beams. An MAC PDU 51-10 transmitted via CC 1 or beam 1 5i-15 includes one PHR 5i-05, and the PHR may include all the PHs for CC 1 (or beam 1) to CC 4 (or beam 4).

The present disclosure proposes a method in which a UE efficiently constructs and transmits PH information when the UE receives a service through dual connectivity between a base station of an LTE system and a base station of an NR system as in FIGS. 5F and 5G according to an embodiment of the present disclosure.

FIG. 5J illustrates PHR format 2 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 2 of the present disclosure.

FIG. 5J considers a scenario of dual connectivity between the base station of the LTE system and the base station of the NR system as in FIGS. 5F and 5G. In this scenario, the UE may separately have an MAC entity for the LTE base station and an MAC entity for the NR base station.

Therefore, a condition for triggering a PHR for the LTE base station may be different from a condition for triggering a PHR for the NR base station. The condition for triggering the PHR for the LTE base station may be that the path loss of a forward cell (carrier) for receiving a service is changed to a predetermined reference value or greater, that a prohibit PHR timer expires, or that a predetermined period elapses after the PHR is generated.

The condition for triggering the PHR for the NR base station may be that 1) the path loss of a cell (carrier) or beam for receiving a service is changed, 2) a predetermined timer expires, 3) the beam is changed (which can be distinguished by a beam identifier), 4) when beam width is changed, 5) beam gain is changed, 6) an antenna pattern is changed, and 7) other beam-related settings are changed.

Also, a time unit for calculating PH for a cell (carrier) for the LTE base station may be defined as time unit 1 in the configuration of the PHR to be transmitted to the LTE base station, and a time unit for calculating PH for a beam or cell for the NR base station may be defined as time unit 3 in the configuration of the PHR to be transmitted to the NR base station. Here, time unit 1 and time unit 3 may be different or may be the same.

When the UE triggers the PHR for the LTE base station, the UE may configure PHR information to transmit the PHR information to the LTE base station. The PHR information may be defined as PHR format 2 in embodiment 2 (FIG. 5J). In format 2, only PH for a cell (carrier) for the LTE base station may be included. PHR format 2 includes PH information on a plurality of cells (carriers), and PH information on each cell (carrier) may be selectively required. Therefore, the size of the PHR may vary depending on the situation.

In embodiment 2, considering these features, an L field as a value indicating a size may be newly defined in a PHR subheader (5j-15). Further, in a rear portion, an E field indicating the presence or absence of another header may be defined, and an F field value indicating whether the size of data corresponding to the subheader or an MAC CE is greater than a predetermined value may be defined (Sj-15).

In addition, in embodiment 2, a bitmap may be added to the PHR configuration of a payload 5j-10 in order to indicate a cell (carrier) via which PH information is transmitted among actually activated cells (carriers) (5j-20), which helps to more efficiently transmit the PH information. A new LCID indicating the PHR of embodiment 2 (PHR Format 2) may be defined in the PHR subheader and may be applied.

As described above, since the size of the extended PHR is variable, information indicating whether PH information on each cell (carrier) is included may be included in a first predetermined byte 5j-20 in order to estimate the size of the extended PHR. This byte is configured in a bitmap form and may indicate whether PH for a cell (for example, PCell) transmitting and receiving control information and data is included and whether Type 2 PH for the PCell is included.

In the present disclosure, for convenience, PH of type 1 is referred to as PH, and PH of type 2 is referred to as Type 2 PH. In the present disclosure, type 1 and type 2 may be defined as follows. Type 2 PH is for a case where signals are simultaneously transmitted via a PUCCH and a PUSCH, in which power headroom (PH) is calculated in view of transmission power for the two channels. Therefore, Type 2 PH for a cell (for example, PCell) capable of transmitting and receiving control information and data is applied when a control information transmission channel (PUCCH) and a data transmission channel (PUSCH) are simultaneously used in a reverse link, and may be defined by the following equation.

$$\text{Type 2 PH} = P_{cmax} - P_{PUSCH} - P_{PUCCH} \text{ (Equation 1)}$$

For Type 1 PH, power headroom (PH) is calculated in view of transmission power for the transmission of a signal only via a PUSCH. Therefore, Type 1 PH for a cell (for example, PCell) transmitting control information and data and a cell (for example, SCell) transmitting and receiving data is applied when only a PUSCH is used in the reverse link, and may be defined by the following equation.

$$\text{Type 1 PH} = P_{cmax} - P_{PUSCH} \text{ (Equation 2)}$$

Generally, it may be assumed that PH for a cell (for example, PCell) transmitting and receiving control information is always included, in which case it may not be necessary to separately allocate a bitmap for indicating this information (5j-20). Also, it may be indicated using a bitmap whether PH for cells (for example, SCells) transmitting and receiving data is included.

Unlike a cell (for example, PCell) transmitting and receiving control information and data, a cell (for example, SCell) transmitting and receiving data cannot simultaneously transmit a PUSCH and a PUCCH and thus can have only Type 1 PH without Type 2 PH. However, if Type 2 PH is set by a network as necessary, the cell (SCell) transmitting and receiving data may also have Type 2 PH.

The order in which PH information on each cell (carrier) is stored in consecutive bytes may be the ascending order of Type 2 PH for a cell (for example, PCell) transmitting and receiving control information and data, Type 1 PH for the cell (for example, PCell) transmitting and receiving control information and data, and an index of a cell (for example, SCell) transmitting and receiving data (5j-25, 5j-30, 5j-35, and 5j-40).

Each of the predetermined bytes 5j-25, 5j-30, 5j-35, and 5j-40 including PH in PHR format 2 may include Pcmax. Pcmax may represent maximum power for the UE to use for a cell (carrier) corresponding to the reported PH.

Further, each of the predetermined bytes 5j-25, 5j-30, 5j-35, and 5j-40 including PH in PHR format 2 may include particular bits. The particular bits may include 1) bits indicating whether a reference value is used when the measured value of actual transmission power for a cell (carrier) to report PH is unavailable, 2) bits indicating whether transmission power is reduced to lessen damage caused by electromagnetic waves when an approach to the human body is detected through a proximity sensor of the UE, 3) bits indicating whether PH to be reported is about a cell (carrier) of the LTE system or a beam or cell of the NR system, 4) bits indicating which time unit is used to calculate PH to be reported, 5) bits indicating information on a method for calculating PH to be reported, and 6) reserved bits to be used later. In FIG. 5J, RAT 1 may indicate the LTE system when the UE reports a PHR to the LTE base station, while RAT 1 may indicate the NR system when the UE reports a PHR to the NR base station.

When the UE triggers the PHR for the NR base station, the UE may configure PHR information to transmit the PHR information to the NR base station. The PHR information may be defined as PHR format 2 in embodiment 2 (FIG. 5J). In format 2, only PH for a beam or cell for the NR base station may be included. PHR format 2 includes PH information on a plurality of beams or cells, and PH information on each beam or cell may be selectively required. Therefore, the size of the PHR may vary depending on the situation.

In embodiment 2, considering these features, an L field as a value indicating a size may be newly defined in a PHR subheader (5j-15). Further, in a rear portion, an E field indicating the presence or absence of another header may be defined, and an F field value indicating whether the size of data corresponding to the subheader or an MAC CE is greater than a predetermined value may be defined (5j-15). In addition, in embodiment 2, a bitmap may be added to the PHR configuration of a payload 5j-10 in order to indicate a beam or cell via which PH information is transmitted among actually activated beams or cells (5j-20), which helps to more efficiently transmit the PH information.

A new LCID indicating the PHR of embodiment 2 (PHR Format 2) may be defined in the PHR subheader and may be applied. Further, as described above, since the size of the extended PHR is variable, information indicating whether PH information on each beam or cell is included may be included in a first predetermined byte 5j-20 in order to estimate the size of the extended PHR. This byte is configured in a bitmap form and may indicate whether PH for a beam or cell transmitting and receiving control information and data is included and whether Type 2 PH for the beam or cell is included.

In the present disclosure, for convenience, PH of type 1 is referred to as PH, and PH of type 2 is referred to as Type 2 PH. In the present disclosure, type 1 and type 2 may be defined as follows. Type 2 PH is for a case where signals are simultaneously transmitted via a control information transmission channel (PUCCH) and a data transmission channel (PUSCH), in which power headroom (PH) is calculated in view of transmission power for the two channels. Therefore, Type 2 PH for a beam or cell capable of transmitting and receiving control information and data is applied when a control information transmission channel (PUCCH) and a data transmission channel (PUSCH) are simultaneously used in a reverse link, and may be defined by the following equation.

$$\text{Type 2 PH} = P_{cmax} - P_{PUSCH} - P_{PUCCH} \text{ (Equation 1)}$$

For Type 1 PH, power headroom (PH) is calculated in view of transmission power for the transmission of a signal only via a PUSCH. Therefore, Type 1 PH for a beam or cell transmitting control information and data and a beam or cell transmitting and receiving data is applied when only a PUSCH is used in the reverse link, and may be defined by the following equation.

$$\text{Type 1 PH} = P_{cmax} - P_{PUSCH} \text{ (Equation 2)}$$

Generally, it may be assumed that PH for a beam or cell transmitting and receiving control information and data information is always included, in which case it may not be necessary to separately allocate a bitmap for indicating this information (5j-20). Also, it may be indicated using a bitmap whether PH for beams or cells transmitting and receiving data is included. Unlike a beam or cell transmitting and receiving control information and data, a beam or cell transmitting and receiving data cannot simultaneously transmit a PUSCH and a PUCCH and thus can have only Type 1 PH without Type 2 PH.

However, if Type 2 PH is set by a network as necessary, the cell transmitting and receiving data may also have Type 2 PH. The order in which PH information on each beam or cell is stored in consecutive bytes may be the ascending order of Type 2 PH for a beam or cell transmitting and receiving control information and data, Type 1 PH for the beam or cell transmitting and receiving control information and data, and an index of a beam or cell transmitting and receiving data (5j-25, 5j-30, 5j-35, and 5j-40).

Each of the predetermined bytes 5j-25, 5j-30, 5j-35, and 5j-40 including PH in PHR format 2 may include Pcmax. Pcmax may represent maximum power for the UE to use for a beam or cell corresponding to the reported PH. Further, each of the predetermined bytes 5j-25, 5j-30, 5j-35, and 5j-40 including PH in PHR format 2 may include particular bits.

The particular bits may include 1) bits indicating whether a reference value is used when the measured value of actual transmission power for a beam or cell to report PH is unavailable, 2) bits indicating whether transmission power is reduced to lessen damage caused by electromagnetic waves when an approach to the human body is detected through a proximity sensor of the UE, 3) bits indicating whether PH to be reported is about a cell (carrier) of the LTE system or a beam or cell of the NR system, 4) bits indicating which time unit is used to calculate PH to be reported, 5) bits indicating information on a method for calculating PH to be reported, 6) bits including beam-related information, such as the direction of transmission and reception beams for the UE, beam width, beam gain, and an antenna pattern, 7) information on the number of a subframe for measuring PH or transmitting a PHR or the number of symbol for measuring PH or transmitting a PHR, and 8) reserved bits to be used later. In FIG. 5J, RAT 1 may indicate the LTE system when the UE transmits a PHR to the LTE base station, while RAT 1 may indicate the NR system when the UE transmits a PHR to the NR base station.

FIG. 5K illustrates PHR format 3 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 3 of the present disclosure.

FIG. 5K considers a scenario of dual connectivity between the base station of the LTE system and the base station of the NR system as in FIGS. 5F and 5G. In this scenario, the UE may separately have an MAC entity for the LTE base station and an MAC entity for the NR base station. Therefore, a condition for triggering a PHR for the LTE base station may be different from a condition for triggering a PHR for the NR base station.

The condition for triggering the PHR for the LTE base station may be that the path loss of a forward cell (carrier) for receiving a service is changed to a predetermined reference value or greater, that a prohibit PHR timer expires, or that a predetermined period elapses after the PHR is generated.

The condition for triggering the PHR for the NR base station may be that 1) the path loss of a cell (carrier) or beam for receiving a service is changed, 2) a predetermined timer expires, 3) the beam is changed (which can be distinguished by a beam identifier), 4) when beam width is changed, 5) beam gain is changed, 6) an antenna pattern is changed, and 7) other beam-related settings are changed.

Also, a time unit for calculating PH for a cell (carrier) for the LTE base station may be defined as time unit 1 in the configuration of the PHR to be transmitted to the LTE base station, and a time unit for calculating PH for a beam or cell for the NR base station may be defined as time unit 2. A time unit for calculating PH for a beam or cell for the NR base station may be defined as time unit 3 in the configuration of the PHR to be transmitted to the NR base station, and a time unit for calculating PH for a cell (carrier) for the LTE base station may be defined as time unit 4. Here, time unit 1, time unit 2, time unit 3, and time unit 4 may be entirely different, or some or all thereof may be the same. For example, time unit 2 may be the same as time unit 3.

When the UE triggers the PHR for the LTE base station or the NR base station, the UE may configure PHR information to transmit the PHR information to the LTE base station or the NR base station. The PHR information may be defined as PHR format 3 in embodiment 3 (FIG. 5K).

In format 3, PH for a cell (carrier) for the LTE base station or PH for a beam or cell for the NR base station may be included. PHR format 3 includes PH information on a plurality of beams or cells, and PH information on each beam or cell may be selectively required. Therefore, the size of the PHR may vary depending on the situation.

In embodiment 3, considering these features, an L field as a value indicating a size may be newly defined in a PHR subheader (Sk-15). Further, in a rear portion, an E field indicating the presence or absence of another header may be defined, and an F field value indicating whether the size of data corresponding to the subheader or an MAC CE is greater than a predetermined value may be defined (5k-15).

In addition, in embodiment 3, a bitmap may be added to the PHR configuration of a payload 5k-10 in order to indicate a beam or cell via which PH information is transmitted among actually activated beams or cells (5k-20), which helps to more efficiently transmit the PH information. A new LCID indicating the PHR of embodiment 3 (PHR Format 3) may be defined in the PHR subheader and may be applied.

As described above, since the size of the extended PHR is variable, information indicating whether PH information on each beam or cell is included may be included in a first predetermined byte 5k-20 in order to estimate the size of the extended PHR. This byte is configured in a bitmap form and may indicate whether PH for a beam or cell transmitting and receiving control information and data is included and whether Type 2 PH is included.

In the present disclosure, for convenience, PH of type 1 is referred to as PH, and PH of type 2 is referred to as Type 2 PH. In the present disclosure, type 1 and type 2 may be defined as follows. Type 2 PH is for a case where signals are simultaneously transmitted via a PUCCH and a PUSCH, in which power headroom (PH) is calculated in view of transmission power for the two channels. Therefore, Type 2 PH for a beam or cell capable of transmitting and receiving control information and data is applied when a control information transmission channel (PUCCH) and a data transmission channel (PUSCH) are simultaneously used in a reverse link, and may be defined by the following equation.

$$\text{Type 2 PH} = P_{cmax} - P_{PUSCH} - P_{PUCCH} \text{ (Equation 1)}$$

For Type 1 PH, power headroom (PH) is calculated in view of transmission power for the transmission of a signal only via a PUSCH. Therefore, Type 1 PH for a beam or cell transmitting control information and data and a beam or cell transmitting and receiving data is applied when only a PUSCH is used in the reverse link, and may be defined by the following equation.

$$\text{Type 1 PH} = P_{cmax} - P_{PUSCH} \text{ (Equation 2)}$$

Generally, it may be assumed that PH for a beam or cell transmitting and receiving control information is always included, in which case it may not be necessary to separately allocate a bitmap for indicating this information (5k-20). Also, it may be indicated using a bitmap whether PH for beams or cells transmitting and receiving data is included. Unlike a beam or cell transmitting and receiving control information and data, a beam or cell transmitting and receiving data cannot simultaneously transmit a PUSCH and a PUCCH and thus can have only Type 1 PH without Type 2 PH.

However, if Type 2 PH is set by a network as necessary, the cell transmitting and receiving data may also have Type 2 PH. The order in which PH information on each cell (carrier) is stored in consecutive bytes may be the ascending order of Type 2 PH for a beam or cell transmitting and receiving control information and data, Type 1 PH for the beam or cell transmitting and receiving control information and data, and an index of a beam or cell transmitting and receiving data (5k-25, 5k-30, 5k-35, 5k-40, 5k-45, and 5k-50).

Each of the predetermined bytes 5k-25, 5k-30, 5k-35, 5k-40, 5k-45, and 5k-50 including PH in PHR format 3 may include Pcmax. Pcmax may represent maximum power for the UE to use for a beam or cell corresponding to the reported PH. Further, each of the predetermined bytes 5k-25, 5k-30, 5k-35, 5k-40, 5k-45, and 5k-50 including PH in PHR format 3 may include particular bits.

The particular bits may include 1) bits indicating whether a reference value is used when the measured value of actual transmission power for a cell (carrier) to report PH is unavailable, 2) bits indicating whether transmission power is reduced to lessen damage caused by electromagnetic waves when an approach to the human body is detected through a proximity sensor of the UE, 3) bits indicating whether PH to be reported is about a cell (carrier) of the LTE system or a beam or cell of the NR system, 4) bits indicating which time unit is used to calculate PH to be reported, 5) bits indicating information on a method for calculating PH to be reported, 6) bits including beam-related information, such as the direction of transmission and reception beams for the UE, beam width, beam gain, and an antenna pattern, 7) information on the number of a subframe for measuring PH or transmitting a PHR or the number of symbol for measuring PH or transmitting a PHR, and 8) reserved bits to be used later. In FIG. 5K, RAT 1 and RAT 2 may indicate the LTE system and the NR system, respectively. For example, when the UE transmits a PHR to the LTE base station, RAT 1 may indicate the LTE system and RAT 2 may indicate the NR system. On the contrary, when the UE transmits a PHR to the NR base station, RAT 1 may indicate the NR system and RAT 2 may indicate the LTE system.

FIG. 5L illustrates PHR format 4 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 4 of the present disclosure.

PHR format 4 of FIG. 5L is the same as PHR format 3 of FIG. 5K except for 5L-20 and 5L-25. In PHR format 3 of FIG. 5K, when a beam or cell in which PH information is transmitted among actually activated beams or cells for RAT 1 and RAT 2 is indicated in a bitmap, all of these beams or cells are indicated together in a predetermined byte 5k-20. In PHR format 4 of FIG. 5L, however, a beam or cell in which PH information is transmitted among actually activated beams or cells for RAT 1 and a beam or cell in which PH information is transmitted among actually activated beams or cells for RAT 2 are separately indicated in 51-20 and 51-25, respectively. In FIG. 5L, RAT 1 and RAT 2 may indicate the LTE system and the NR system, respectively.

FIG. 5M illustrates PHR format 5 for configuring PH information in a case where a UE transmits a PHR on a plurality of serving cells (carriers) of an LTE base station or a plurality of serving beams of an NR base station to the LTE base station or the NR base station when the UE receives a service through dual connectivity between the base station of an LTE system and the base station of an NR system according to embodiment 5 of the present disclosure.

FIG. 5M considers a scenario of dual connectivity between the base station of the LTE system and the base station of the NR system as in FIGS. 5F and 5G. In this scenario, the UE may separately have an MAC entity for the LTE base station and an MAC entity for the NR base station. Therefore, a condition for triggering a PHR for the LTE base station may be different from a condition for triggering a PHR for the NR base station.

The condition for triggering the PHR for the LTE base station may be that the path loss of a forward cell (carrier) for receiving a service is changed to a predetermined reference value or greater, that a prohibit PHR timer expires, or that a predetermined period elapses after the PHR is generated.

The condition for triggering the PHR for the NR base station may be that 1) the path loss of a cell (carrier) or beam for receiving a service is changed, 2) a predetermined timer expires, 3) the beam is changed (which can be distinguished by a beam identifier), 4) when beam width is changed, 5) beam gain is changed, 6) an antenna pattern is changed, and 7) other beam-related settings are changed.

Also, a time unit for calculating PH for a cell (carrier) for the LTE base station may be defined as time unit 1 in the configuration of the PHR to be transmitted to the LTE base station, and a time unit for calculating PH for a beam or cell for the NR base station may be defined as time unit 2. A time unit for calculating PH for a beam or cell for the NR base station may be defined as time unit 3 in the configuration of the PHR to be transmitted to the NR base station, and a time unit for calculating PH for a cell (carrier) for the LTE base station may be defined as time unit 4. Here, time unit 1, time unit 2, time unit 3, and time unit 4 may be entirely different, or some or all thereof may be the same. For example, time unit 2 may be the same as time unit 3.

When the UE triggers the PHR for the LTE base station or the NR base station, the UE may configure PHR information to transmit the PHR information to the LTE base station or the NR base station. The PHR information may be defined as PHR format 5 in embodiment 5 (FIG. 5M).

In format 5, PH for a cell (carrier) for the LTE base station or PH for a beam or cell for the NR base station may be included. PHR format 5 includes PH information on a plurality of beams or cells, and PH information on each beam or cell may be selectively required. Therefore, the size of the PHR may vary depending on the situation.

In embodiment 5, considering these features, an L field as a value indicating a size may be newly defined in a PHR subheader can be newly defined (5m-15). Further, in a rear portion, an E field indicating the presence or absence of another header may be defined, and an F field value indicating whether the size of data corresponding to the subheader or an MAC CE is greater than a predetermined value may be defined (5m-15).

In addition, in embodiment 2, a bitmap may be added to the PHR configuration of a payload 5m-10 in order to indicate a beam or cell via which PH information is transmitted among actually activated beams or cells (5m-20), which helps to more efficiently transmit the PH information. A new LCID indicating the PHR of embodiment 5 (PHR Format 3) may be defined in the PHR subheader and may be applied. As described above, since the size of the extended PHR is variable, information indicating whether PH information on each beam or cell is included may be included in a first predetermined byte 5m-20 in order to estimate the size of the extended PHR.

This byte is configured in a bitmap form and may indicate whether PH for a beam or cell transmitting and receiving control information and data is included and whether Type 2 PH is included. In the present disclosure, for convenience, PH of type 1 is referred to as PH, and PH of type 2 is referred to as Type 2 PH. In the present disclosure, type 1 and type 2 may be defined as follows. Type 2 PH is for a case where signals are simultaneously transmitted via a PUCCH and a PUSCH, in which power headroom (PH) is calculated in view of transmission power for the two channels.

Therefore, Type 2 PH for a beam or cell capable of transmitting and receiving control information and data is applied when a control information transmission channel (PUCCH) and a data transmission channel (PUSCH) are simultaneously used in a reverse link, and may be defined by the following equation.

$$\text{Type 2 PH} = P_{cmax} - P_{PUSCH} - P_{PUCCH} \text{ (Equation 1)}$$

For Type 1 PH, power headroom (PH) is calculated in view of transmission power for the transmission of a signal only via a PUSCH. Therefore, Type 1 PH for a beam or cell transmitting control information and data and a beam or cell transmitting and receiving data is applied when only a PUSCH is used in the reverse link, and may be defined by the following equation.

$$\text{Type 1 PH} = P_{cmax} - P_{PUSCH} \text{ (Equation 2)}$$

Generally, it may be assumed that PH for a beam or cell transmitting and receiving control information is always included, in which case it may not be necessary to separately allocate a bitmap for indicating this information (5m-20). Also, it may be indicated using a bitmap whether PH for beams or cells transmitting and receiving data is included. Unlike a beam or cell transmitting and receiving control information and data, a beam or cell transmitting and receiving data cannot simultaneously transmit a PUSCH and a PUCCH and thus can have only Type 1 PH without Type 2 PH.

However, if Type 2 PH is set by a network as necessary, the cell (SCell) transmitting and receiving data may also have Type 2 PH. The order in which PH information on each cell (carrier) is stored in consecutive bytes may be the ascending order of Type 2 PH for a beam or cell transmitting and receiving control information and data, Type 1 PH for the beam or cell transmitting and receiving control information and data, and an index of a beam or cell transmitting and receiving data (5m-25, 5m-30, and 5m-35).

Each of the predetermined bytes 5m-25, 5m-30, and 5m-35 including PH in PHR format 3 may include Pcmax. Pcmax may represent maximum power for the UE to use for a beam or cell corresponding to the reported PH. Further, each of the predetermined bytes 5m-25, 5m-30, and 5m-35 including PH in PHR format 3 may include particular bits.

The particular bits may include 1) bits indicating whether a reference value is used when the measured value of actual transmission power for a cell (carrier) to report PH is unavailable, 2) bits indicating whether transmission power is reduced to reduce damage from electromagnet waves when an approach to the human body is detected through a proximity sensor of the UE, 3) bits indicating whether PH to be reported is about a cell (carrier) of the LTE system or a beam or cell of the NR system, 4) bits indicating which time unit is used to calculate PH to be reported, 5) bits indicating information on a method for calculating PH to be reported, 6) bits including beam-related information, such as the direction of transmission and reception beams for the UE, beam width, beam gain, and an antenna pattern, 7) information on the number of a subframe for measuring PH or transmitting a PHR or the number of symbol for measuring PH or transmitting a PHR, and 8) reserved bits to be used later. In FIG. 5M, RAT 1 and RAT 2 may indicate the LTE system and the NR system, respectively.

For example, when the UE transmits a PHR to the LTE base station, RAT 1 may indicate the LTE system and RAT 2 may indicate the NR system. On the contrary, when the UE transmits a PHR to the NR base station, RAT 1 may indicate the NR system and RAT 2 may indicate the LTE system. A summary report 5m-40 on a PHR on RAT2 may include predetermined pieces of information.

If RAT 2 indicates the LTE system, the predetermined information may include 1) information on a time unit used for calculating PH for a cell (carrier) for the LTE system, 2) information on the average, maximum value, or minimum value of PHs measured and calculated for a predetermined time unit, (3) information on the number of cells (carriers) activated and used for the LTE system, a frequency range, or maximum transmission power, 4) information on a method for calculating PH to be reported, 5) information on whether an actually measured value is used or a reference value is used to calculate PH for each cell (carrier), and 6) information on whether transmission power is reduced to lessen damage caused by electromagnetic waves to the human body.

If RAT2 indicates the NR system, the predetermined information may include 1) information on a time unit used for calculating PH for a beam or cell for the NR system, 2) information on the average, maximum value, or minimum value of PHs measured and calculated for a predetermined time unit, (3) information on the number of beams or cells activated and used for the NR system, a frequency range, or maximum transmission power, 4) information on a method for calculating PH to be reported, 5) information on whether an actually measured value is used or a reference value is used to calculate PH for each beam or cell, 6) information on whether transmission power is reduced to lessen damage caused by electromagnetic waves to the human body, and 7) beam-related information, such as the direction of transmission and reception beams for the UE, the width of a beam, the gain of a beam, and an antenna pattern.

FIG. 5N is a block diagram illustrating a UE operation in embodiments 1, 2, 3, 4, and 5.

Referring to FIG. 5N, a PHR is triggered in operation 5n-05. In operation Sn-10, the UE checks whether the PHR is a PHR for an LTE base station or a PHR for an NR base station. If the PHR is for the LTE base station, the UE configures a subheader and the PHR according to the format illustrated in embodiment 1, 2, 3, 4, or 5 of the present disclosure in operations 5n-15. If the PHR is for the NR base station, the UE configures a subheader and the PHR according to the format illustrated in embodiment 1, 2, 3, 4, or 5 of the present disclosure in operations 5n-20. The configured subheader and PHR are transmitted via an MAC PDU to the LTE base station or the NR base station in operation 5n-25.

FIG. 5O illustrates the structure of a UE.

Referring to FIG. 50, the UE includes a radio frequency (RF) processor So-10, a baseband processor 5o-20, a storage unit 5o-30, and a controller 5o-40.

The RF processor 5o-10 performs a function for transmitting or receiving a signal through a wireless channel, such as band conversion and amplification of a signal. That is, the RF processor 5o-10 upconverts a baseband signal, provided from the baseband processor 5o-20, into an RF band signal to transmit the RF band signal through an antenna and downconverts an RF band signal, received through the antenna, into a baseband signal. For example, the RF processor 5o-10 may include a transmission filter, a reception filter, an amplifier, a mixer, an oscillator, a Digital-to-Analog Converter (DAC), and an Analog-to-Digital Converter (ADC). Although FIG. 5O shows only one antenna, the UE may include a plurality of antennas. In addition, the RF processor 5o-10 may include a plurality of RF chains. Further, the RF processor 5o-10 may perform beamforming. For beamforming, the RF processor 5o-10 may adjust the phase and strength of each of signals transmitted and received through a plurality of antennas or antenna elements. The RF processor may perform MIMO and may receive a plurality of layers when performing MIMO. The RF processor 5o-10 may perform reception beam sweeping by appropriately setting the plurality of antennas or antenna elements under the control of the controller, or may adjust the orientation and width of a reception beam such that the reception beam is coordinated with a transmission beam.

The baseband processor 5o-20 performs a function of converting a baseband signal and a bit stream according to the physical-layer specification of a system. For example, in data transmission, the baseband processor 5o-20 encodes and modulates a transmission bit stream, thereby generating complex symbols. In data reception, the baseband processor 5o-20 demodulates and decodes a baseband signal, provided from the RF processor 5o-10, thereby reconstructing a reception bit stream.

For example, according to OFDM, in data transmission, the baseband processor 5o-20 generates complex symbols by encoding and modulating a transmission bit stream, maps the complex symbols to subcarriers, and constructs OFDM symbols through Inverse Fast Fourier Transform (IFFT) and Cyclic Prefix (CP) insertion.

In data reception, the baseband processor 5o-20 divides a baseband signal, provided from the RF processor 5o-10, into OFDM symbols, reconstructs signals mapped to subcarriers through Fast Fourier Transform (FFT), and reconstructs a reception bit stream through demodulation and decoding.

As described above, the baseband processor 5o-20 and the RF processor 5o-10 transmit and receive signals. Accordingly, the baseband processor 5o-20 and the RF processor 5o-10 may be referred to as a transmitter, a receiver, a transceiver, or a communication unit. At least one of the baseband processor 5o-20 and the RF processor 5o-10 may include a plurality of communication modules to support a plurality of different radio access technologies.

Further, at least one of the baseband processor 5o-20 and the RF processor 5o-10 may include different communication modules for processing signals in different frequency bands. For example, the different radio access technologies may include an LTE network, an NR network, and the like. In addition, the different frequency bands may include a super high frequency (SHF) band (for example, 2.5 GHz and 5 GHz) and a millimeter wave band (for example, 60 GHz).

The storage unit 5o-30 stores data, such as a default program, an application, and configuration information for operating the UE. The storage unit 5o-30 provides stored data upon request from the controller 5o-40.

The controller 5o-40 controls overall operations of the UE. For example, the controller 5o-40 transmits and receives signals through the baseband processor 5o-20 and the RF processor 5o-10. Further, the controller 5o-40 records and reads data in the storage unit 5o-40. To this end, the controller 5o-40 may include at least one processor.

For example, the controller 5o-40 may include a Communication processor (CP) to perform control for communication and an application processor (AP) to control an upper layer, such as an application. Further, according to an embodiment of the present disclosure, the controller 5o-40 may include a multi-connection processor 5o-42 to perform processing for an operation in a multi-connection mode.

FIG. 5P is a block diagram illustrating the configuration of a TRP in a wireless communication system according to an embodiment of the present disclosure.

Referring to FIG. 5P, the base station includes an RF processor 5p-10, a baseband processor 5p-20, a backhaul communication unit 5p-30, a storage unit 5p-40, and a controller 5p-50.

The RF processor 5p-10 performs a function for transmitting or receiving a signal through a wireless channel, such as band conversion and amplification of a signal. That is, the RF processor 5p-10 upconverts a baseband signal, provided from the baseband processor 5p-20, into an RF band signal to transmit the RF band signal through an antenna and downconverts an RF band signal, received through the antenna, into a baseband signal.

For example, the RF processor 5p-10 may include a transmission filter, a reception filter, an amplifier, a mixer, an oscillator, a DAC, and an ADC. Although FIG. 1Q shows only one antenna, the first access node may include a plurality of antennas.

In addition, the RF processor 5p-10 may include a plurality of RF chains. Further, the RF processor 5p-10 may perform beamforming. For beamforming, the RF processor 5p-10 may adjust the phase and strength of each of signals transmitted and received through a plurality of antennas or antenna elements. The RF processor may transmit one or more layers, thereby performing downlink MIMO.

The baseband processor 5p-20 performs a function of converting a baseband signal and a bit stream according to the physical-layer specification of a first radio access technology. For example, in data transmission, the baseband processor 5p-20 encodes and modulates a transmission bit stream, thereby generating complex symbols.

In data reception, the baseband processor 5p-20 demodulates and decodes a baseband signal, provided from the RF processor 5p-10, thereby reconstructing a reception bit stream. For example, according to OFDM, in data transmission, the baseband processor 5p-20 generates complex symbols by encoding and modulating a transmission bit stream, maps the complex symbols to subcarriers, and constructs OFDM symbols through IFFT and CP insertion.

In data reception, the baseband processor 5p-20 divides a baseband signal, provided from the RF processor 5p-10, into OFDM symbols, reconstructs signals mapped to subcarriers through FFT, and reconstructs a reception bit stream through demodulation and decoding. As described above, the baseband processor 5p-20 and the RF processor 5p-10 transmit and receive signals. Accordingly, the baseband processor 5p-20 and the RF processor 5p-10 may be referred to as a transmitter, a receiver, a transceiver, a communication unit, or a wireless communication unit.

The communication unit 5p-30 provides an interface for performing communication with other nodes in a network.

The storage unit 5p-40 stores data, such as a default program, an application, and configuration information for operating the base station. In particular, the storage unit 5p-40 may store information on a bearer allocated to a connected UE, a measurement result reported from a connected UE, and the like. In addition, the storage unit 5p-40 may store information as a criterion for determining whether to provide or stop a multi-connection to a UE. The storage unit 5p-40 provides stored data upon request from the controller 5p-50.

The controller 5p-50 controls overall operations of the main base station. For example, the controller 5p-50 transmits and receives signals through the baseband processor 5p-20 and the RF processor 5p-10 or through the backhaul communication unit 5p-30. Further, the controller 5p-50 records and reads data in the storage unit 5p-40. To this end, the controller 5p-50 may include at least one processor. Further, according to an embodiment of the present disclosure, the controller 5p-50 may include a multi-connection processor 5p-52 to perform processing for an operation in a multi-connection mode.

In the above-described detailed embodiments of the present disclosure, a component included in the present disclosure is expressed in the singular or the plural according to a presented detailed embodiment. However, the singular form or plural form is selected for convenience of description suitable for the presented situation, and various embodiments of the present disclosure are not limited to a single element or multiple elements thereof. Further, either multiple elements expressed in the description may be configured into a single element or a single element in the description may be configured into multiple elements.

Although the embodiment has been described in the detailed description of the present disclosure, the present disclosure may be modified in various forms without departing from the scope of the present disclosure. Therefore, the scope of the present disclosure should not be defined as being limited to the embodiments, but should be defined by the appended claims and equivalents thereof.

In addition to the foregoing explanations, the following enumerated Aspects 1 to 15 are also relevant for the present disclosure as part of the specification which must not be confused with the appended claims (that follow after the specification):

Aspect 1. A method for performing random access by a user equipment (UE) in a wireless communication system supporting beamforming, the method comprising:

receiving, from a base station, uplink resource information for transmitting a preamble and random access response (RAR) information corresponding to the resource information;
determining a resource for transmitting at least one preamble by beam sweeping on the basis of the uplink resource information; and
transmitting the at least one preamble to the base station by the beam sweeping.

Aspect 2. The method of Aspect 1, wherein the determined resource is distinguished to correspond to a number of beams comprising the beam sweeping, and the transmitting transmits the preamble through a beam corresponding to the distinguished resource.

Aspect 3. The method of Aspect 2, further comprising:

determining, per beam, a RAR window for a preamble via each beam transmitted by the beam sweeping on the basis of the RAR information; and
monitoring whether a RAR message is received through each beam during a period of the determined RAR window for each beam.

Aspect 4. The method of Aspect 3, wherein the monitoring comprises:

determining a temporary identifier of each beam comprising the beam sweeping on the basis of an index value of each distinguished resource; and
monitoring whether the RAR message is received via each beam through a downlink resource allocated on the basis of the temporary identifier.

Aspect 5. The method of Aspect 2, further comprising:

receiving a RAR message determined on the basis of the preamble via each beam transmitted by the beam sweeping from the base station through each beam; and
transmitting message 3 to the base station on the basis of reception power information on the base station for a preamble comprised in the at least one received RAR message.

Aspect 6. A method for performing random access by a base station in a wireless communication system supporting beamforming, the method comprising:

transmitting, to a user equipment (UE), uplink resource information and random access response (RAR) information corresponding to the resource information; and
receiving a preamble from the UE through at least one beam comprising beam sweeping,
wherein the preamble is received through a resource determined on the basis of the uplink resource information.

Aspect 7. The method of Aspect 6, wherein the determined resource is distinguished to correspond to a number of beams comprising the beam sweeping, and the receiving receives the preamble through a beam corresponding to the distinguished resource.
Aspect 8. The method of Aspect 7, further comprising:

determining a RAR message corresponding to each preamble on the basis of the preamble received via each beam by the beam sweeping;
transmitting reception power information on the base station to the UE via the at least one determined RAR message; and
receiving message 3 determined on the basis of the reception power information from the UE.

Aspect 9. A user equipment (UE) of a wireless communication system supporting beamforming, the UE comprising:

a transceiver configured to transmit and receive a signal; and
a controller configured to control the transceiver to receive, from a base station, uplink resource information for transmitting a preamble and random access response (RAR) information corresponding to the resource information, to determine a resource for transmitting at least one preamble by beam sweeping on the basis of the uplink resource information, and to control the transceiver to transmit the at least one preamble to the base station by the beam sweeping.

Aspect 10. The UE of Aspect 9, wherein the determined resource is distinguished to correspond to a number of beams comprising the beam sweeping, and the controller controls the transceiver to transmit the preamble through a beam corresponding to the distinguished resource.
Aspect 11. The UE of Aspect 10, wherein the controller determines, per beam, a RAR window for a preamble via each beam transmitted by the beam sweeping on the basis of the RAR information and monitors whether a RAR message is received through each beam during a period of the determined RAR window for each beam.
Aspect 12. The UE of Aspect 11, wherein the controller determines a temporary identifier of each beam comprising the beam sweeping on the basis of an index value of each distinguished resource and monitors whether the RAR message is received via each beam through a downlink resource allocated on the basis of the temporary identifier.
Aspect 13. The UE of Aspect 10, wherein the controller controls the transceiver to receive at least one RAR message determined on the basis of the preamble via each beam transmitted by the beam sweeping from the base station through each beam and controls the transceiver to transmit message 3 to the base station on the basis of reception power information on the base station for a preamble comprised in the at least one received RAR message..
Aspect 14. A base station of a wireless communication system supporting beamforming, the base station comprising:

a transceiver configured to transmit and receive a signal; and
a controller configured to control the transceiver to transmit, to a user equipment (UE), uplink resource information and random access response (RAR) information corresponding to the resource information and to control the transceiver to receive a preamble from the UE through at least one beam comprising beam sweeping, and the preamble is received through a resource determined on the basis of the uplink resource information.

Aspect 15. The base station of Aspect 14, wherein the determined resource is distinguished to correspond to a number of beams comprising the beam sweeping, and
the controller controls the transceiver to receive the preamble through a beam corresponding to the distinguished resource, determines a RAR message corresponding to each preamble on the basis of the preamble received via each beam by the beam sweeping, controls the transceiver to transmit reception power information on the base station to the UE via the at least one determined RAR message, and control the transceiver to receive message 3 determined on the basis of the reception power information from the UE.

## Claims

1. A method performed by a terminal communicating with at least one cell for a first base station associated with a first RAT (radio access technology) and at least one cell for a second base station associated with a second RAT in a wireless communication system, the method comprising:

 receiving, from the first base station, a radio resource control (RRC) message including configuration information related to a power headroom reporting;
 identifying whether a condition for triggering power headroom reporting is satisfied, wherein the condition for triggering power headroom reporting includes a beam change; and
 transmitting, to the first base station, a power headroom report including a first power headroom for a cell associated with the first RAT and a second power headroom for a cell associated with the second RAT based on the configuration information and based on the condition for triggering power headroom reporting being satisfied.

2. The method of claim 1,

 wherein the first RAT is associated with a new radio (NR), and
 wherein the second RAT is associated with a long term evolution (LTE).

3. The method of claim 1, wherein the condition for triggering power headroom reporting further includes at least one of information on a path loss change, or information on an expiry of a predetermined timer.

4. A method performed by a first base station associated with a first RAT (radio access technology) in a wireless communication system, the method comprising:

 transmitting, to a terminal, a radio resource control (RRC) message including configuration information related to a power headroom reporting; and
 receiving, from the terminal, a power headroom report including a first power headroom for a cell associated with the first RAT and a second power headroom for a cell associated with a second RAT based on the configuration information and based on a condition for triggering power headroom reporting being satisfied, wherein the condition for triggering power headroom reporting includes a beam change,
 wherein the terminal is communicated with at least one cell for the first base station associated with the first RAT and at least one cell for a second base station associated with a second RAT.

5. The method of claim 4,
 wherein the first RAT is associated with a new radio (NR).

6. The method of claim 4, wherein the condition for triggering power headroom reporting further includes at least one of information on a path loss change, or information on an expiry of a predetermined timer.

7. A terminal communicating with at least one cell for a first base station associated with a first RAT (radio access technology) and at least one cell for a second base station associated with a second RAT in a wireless communication system, the terminal comprising:

 a transceiver; and
 a controller coupled with the transceiver and configured to:

  control the transceiver to receive, from the first base station, a radio resource control (RRC) message including configuration information related to a power headroom reporting,
  identify whether a condition for triggering power headroom reporting is satisfied, wherein the condition for triggering power headroom reporting includes a beam change, and
  control the transceiver to transmit, to the base station, a power headroom report including a first power headroom for a cell associated with the first RAT and a second power headroom for a cell associated with the second RAT based on the configuration information and based on the condition for triggering power headroom reporting being satisfied.

**8.** The terminal of claim 7,

wherein the first RAT is associated with a new radio (NR), and
wherein the second RAT is associated with a long term evolution (LTE).

**9.** The terminal of claim 7, wherein the condition for triggering power headroom reporting further includes at least one of information on a path loss change, or information on an expiry of a predetermined timer.

**10.** A base station associated with a first RAT (radio access technology) in a wireless communication system, the base station comprising:

a transceiver; and
a controller coupled with the transceiver and configured to:

control the transceiver to transmit, to a terminal, a radio resource control (RRC) message including configuration information related to a power headroom reporting, and
control the transceiver to receive, from the terminal, a power headroom report including a first power headroom for a cell associated with the first RAT and a second power headroom for a cell associated with a second RAT based on the configuration information and based on a condition for triggering power headroom reporting being satisfied, wherein the condition for triggering power headroom reporting includes a beam change,
wherein the terminal is communicated with at least one cell for the first base station associated with the first RAT and at least one cell for a second base station associated with a second RAT.

**11.** The base station of claim 10,
wherein the first RAT is associated with a new radio (NR).

**12.** The base station of claim 10, wherein the condition for triggering power headroom reporting further includes at least one of information on a path loss change, or information on an expiry of a predetermined timer.

FIG. 1A

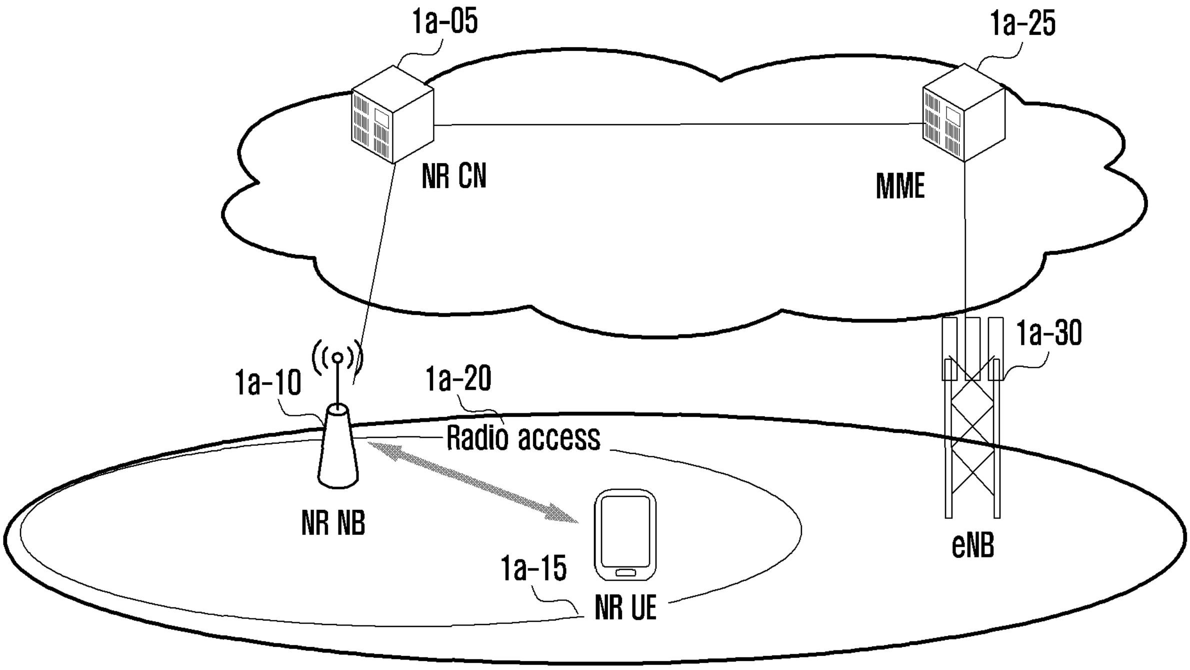
1a-05
1a-25
NR CN
MME
1a-10
1a-20
1a-30
Radio access
NR NB
eNB
1a-15
NR UE

FIG. 1B

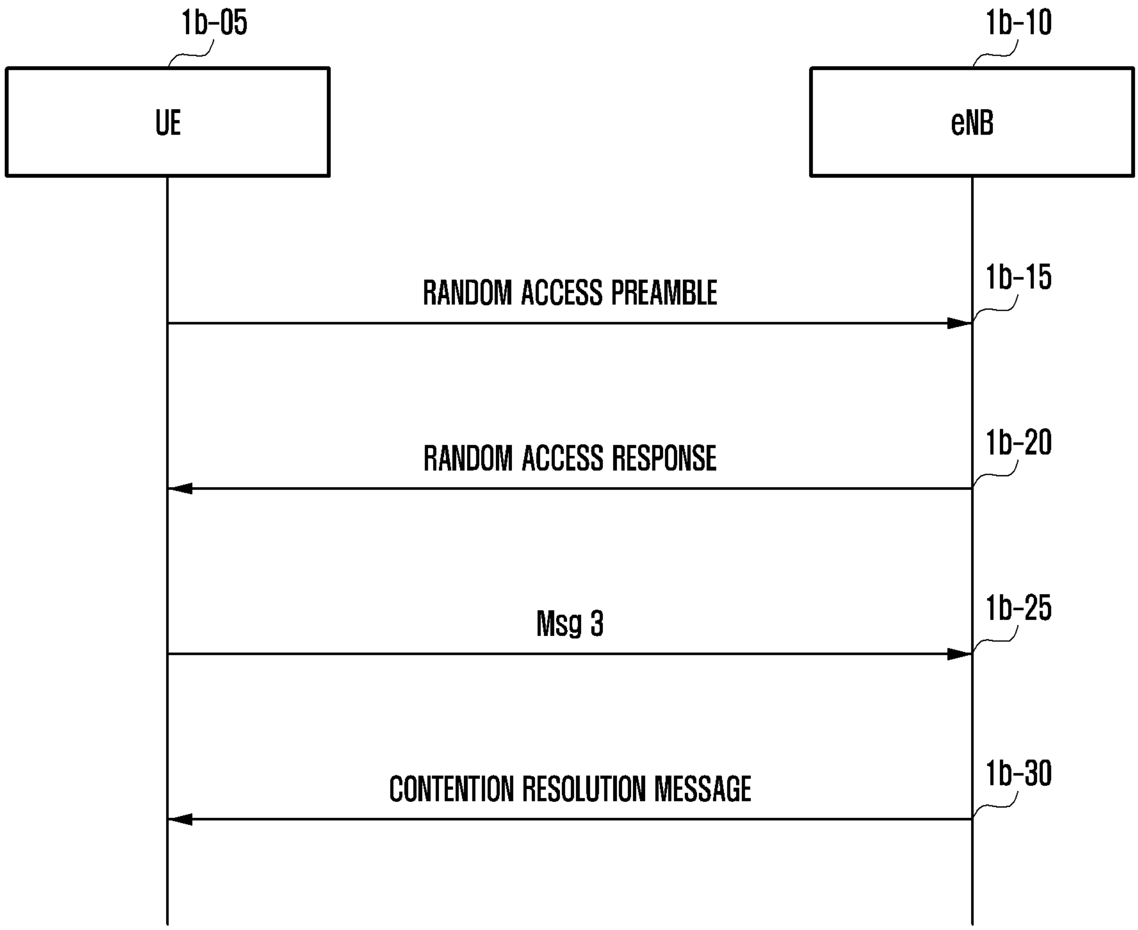
1b-05
1b-10
UE
eNB
RANDOM ACCESS PREAMBLE
1b-15
RANDOM ACCESS RESPONSE
1b-20
Msg 3
1b-25
CONTENTION RESOLUTION MESSAGE
1b-30

FIG. 1C

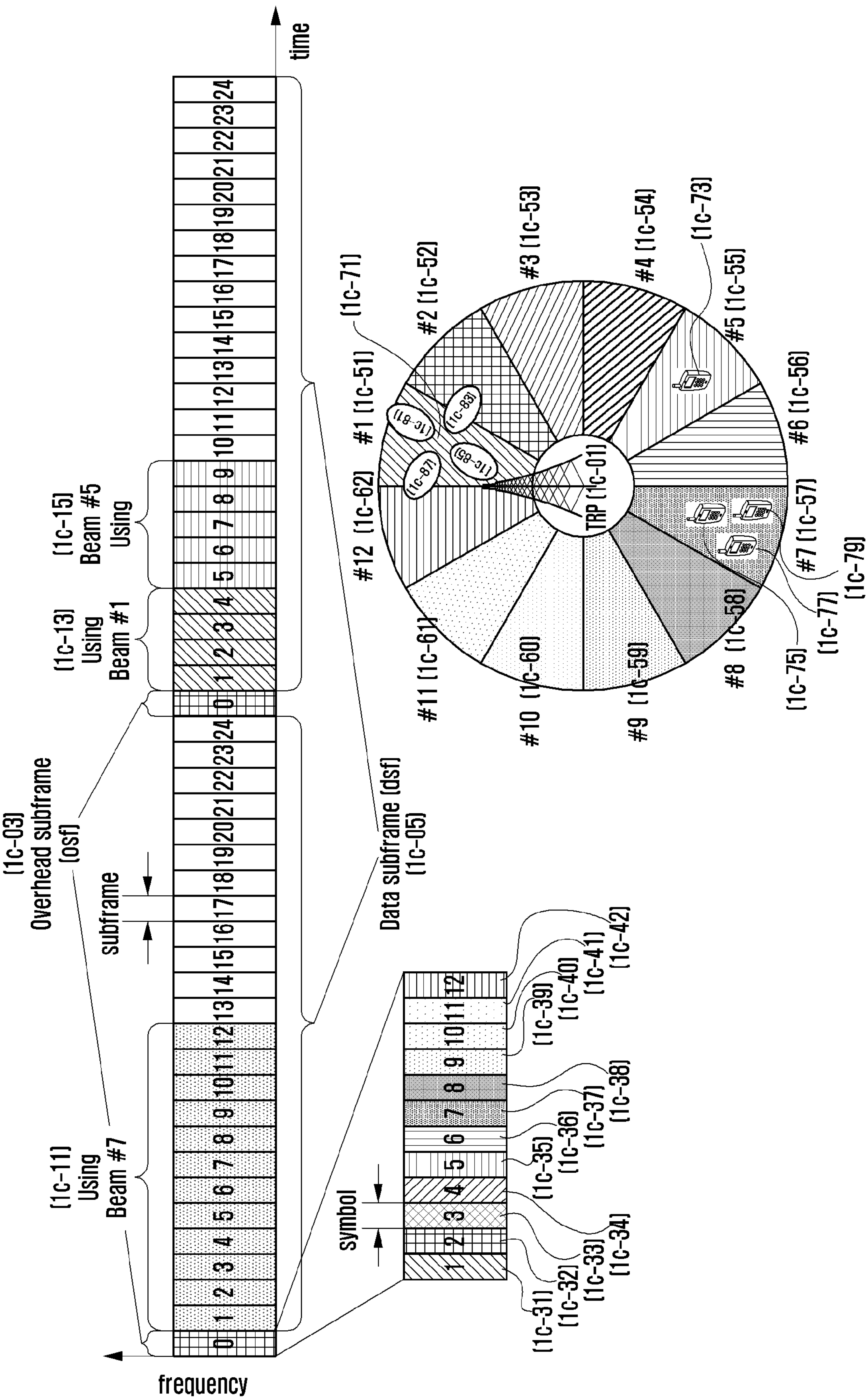
time
frequency
(1c-03) Overhead subframe (osf)
Data subframe (dsf) (1c-05)
subframe
(1c-11) Using Beam #7
(1c-13) Using Beam #1
(1c-15) Beam #5 Using
symbol
(1c-31)
(1c-32)
(1c-33)
(1c-34)
(1c-35)
(1c-36)
(1c-37)
(1c-38)
(1c-39)
(1c-40)
(1c-41)
(1c-42)
TRP (1c-01)
#1 (1c-51)
#2 (1c-52)
#3 (1c-53)
#4 (1c-54)
#5 (1c-55)
#6 (1c-56)
#7 (1c-57)
#8 (1c-58)
#9 (1c-59)
#10 (1c-60)
#11 (1c-61)
#12 (1c-62)
(1c-71)
(1c-73)
(1c-75)
(1c-77)
(1c-79)
(1c-81)
(1c-83)
(1c-85)
(1c-87)

FIG. 1D

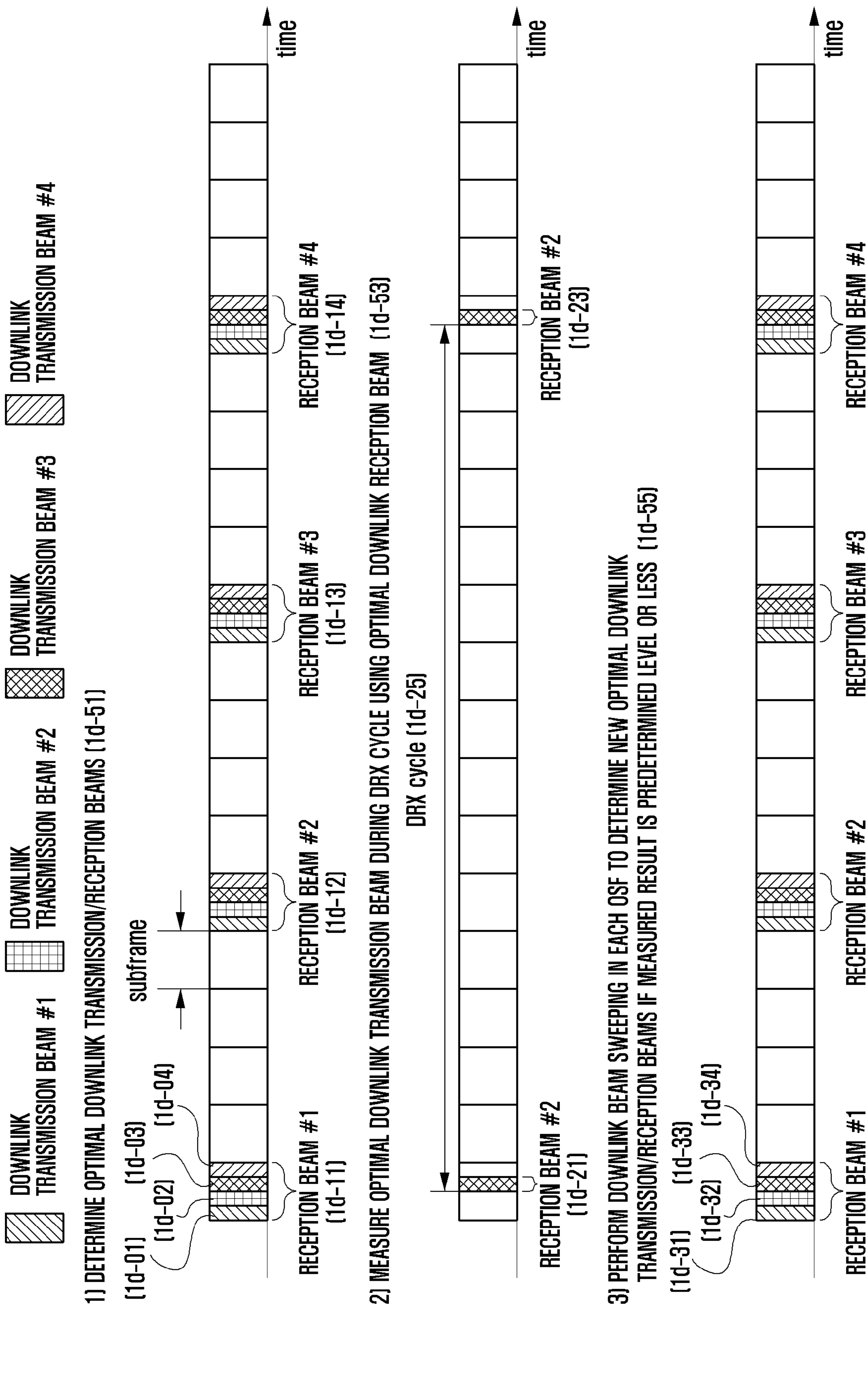
DOWNLINK TRANSMISSION BEAM #1
DOWNLINK TRANSMISSION BEAM #2
DOWNLINK TRANSMISSION BEAM #3
DOWNLINK TRANSMISSION BEAM #4
1) DETERMINE OPTIMAL DOWNLINK TRANSMISSION/RECEPTION BEAMS (1d-51)
(1d-01)
(1d-02)
(1d-03)
(1d-04)
subframe
time
RECEPTION BEAM #1 (1d-11)
RECEPTION BEAM #2 (1d-12)
RECEPTION BEAM #3 (1d-13)
RECEPTION BEAM #4 (1d-14)
2) MEASURE OPTIMAL DOWNLINK TRANSMISSION BEAM DURING DRX CYCLE USING OPTIMAL DOWNLINK RECEPTION BEAM (1d-53)
DRX cycle (1d-25)
time
RECEPTION BEAM #2 (1d-21)
RECEPTION BEAM #2 (1d-23)
3) PERFORM DOWNLINK BEAM SWEEPING IN EACH OSF TO DETERMINE NEW OPTIMAL DOWNLINK TRANSMISSION/RECEPTION BEAMS IF MEASURED RESULT IS PREDETERMINED LEVEL OR LESS (1d-55)
(1d-31)
(1d-32)
(1d-33)
(1d-34)
time
RECEPTION BEAM #1 (1d-41)
RECEPTION BEAM #2 (1d-42)
RECEPTION BEAM #3 (1d-43)
RECEPTION BEAM #4 (1d-44)

FIG. 1E

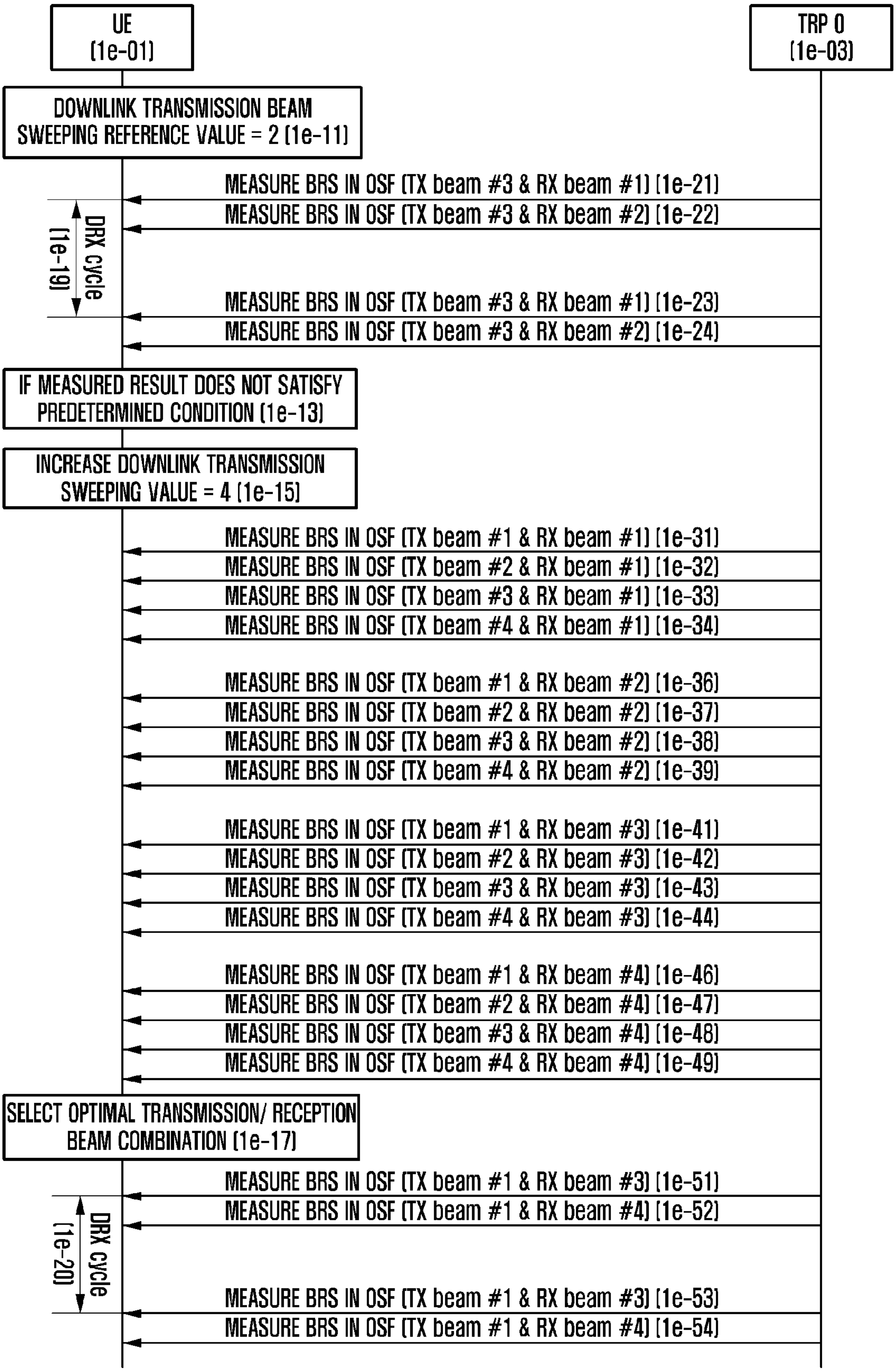
UE
(1e-01)
TRP 0
(1e-03)
DOWNLINK TRANSMISSION BEAM SWEEPING REFERENCE VALUE = 2 (1e-11)
MEASURE BRS IN OSF (TX beam #3 & RX beam #1) (1e-21)
MEASURE BRS IN OSF (TX beam #3 & RX beam #2) (1e-22)
DRX cycle
(1e-19)
MEASURE BRS IN OSF (TX beam #3 & RX beam #1) (1e-23)
MEASURE BRS IN OSF (TX beam #3 & RX beam #2) (1e-24)
IF MEASURED RESULT DOES NOT SATISFY PREDETERMINED CONDITION (1e-13)
INCREASE DOWNLINK TRANSMISSION SWEEPING VALUE = 4 (1e-15)
MEASURE BRS IN OSF (TX beam #1 & RX beam #1) (1e-31)
MEASURE BRS IN OSF (TX beam #2 & RX beam #1) (1e-32)
MEASURE BRS IN OSF (TX beam #3 & RX beam #1) (1e-33)
MEASURE BRS IN OSF (TX beam #4 & RX beam #1) (1e-34)
MEASURE BRS IN OSF (TX beam #1 & RX beam #2) (1e-36)
MEASURE BRS IN OSF (TX beam #2 & RX beam #2) (1e-37)
MEASURE BRS IN OSF (TX beam #3 & RX beam #2) (1e-38)
MEASURE BRS IN OSF (TX beam #4 & RX beam #2) (1e-39)
MEASURE BRS IN OSF (TX beam #1 & RX beam #3) (1e-41)
MEASURE BRS IN OSF (TX beam #2 & RX beam #3) (1e-42)
MEASURE BRS IN OSF (TX beam #3 & RX beam #3) (1e-43)
MEASURE BRS IN OSF (TX beam #4 & RX beam #3) (1e-44)
MEASURE BRS IN OSF (TX beam #1 & RX beam #4) (1e-46)
MEASURE BRS IN OSF (TX beam #2 & RX beam #4) (1e-47)
MEASURE BRS IN OSF (TX beam #3 & RX beam #4) (1e-48)
MEASURE BRS IN OSF (TX beam #4 & RX beam #4) (1e-49)
SELECT OPTIMAL TRANSMISSION/ RECEPTION BEAM COMBINATION (1e-17)
MEASURE BRS IN OSF (TX beam #1 & RX beam #3) (1e-51)
MEASURE BRS IN OSF (TX beam #1 & RX beam #4) (1e-52)
DRX cycle
(1e-20)
MEASURE BRS IN OSF (TX beam #1 & RX beam #3) (1e-53)
MEASURE BRS IN OSF (TX beam #1 & RX beam #4) (1e-54)

FIG. 1F

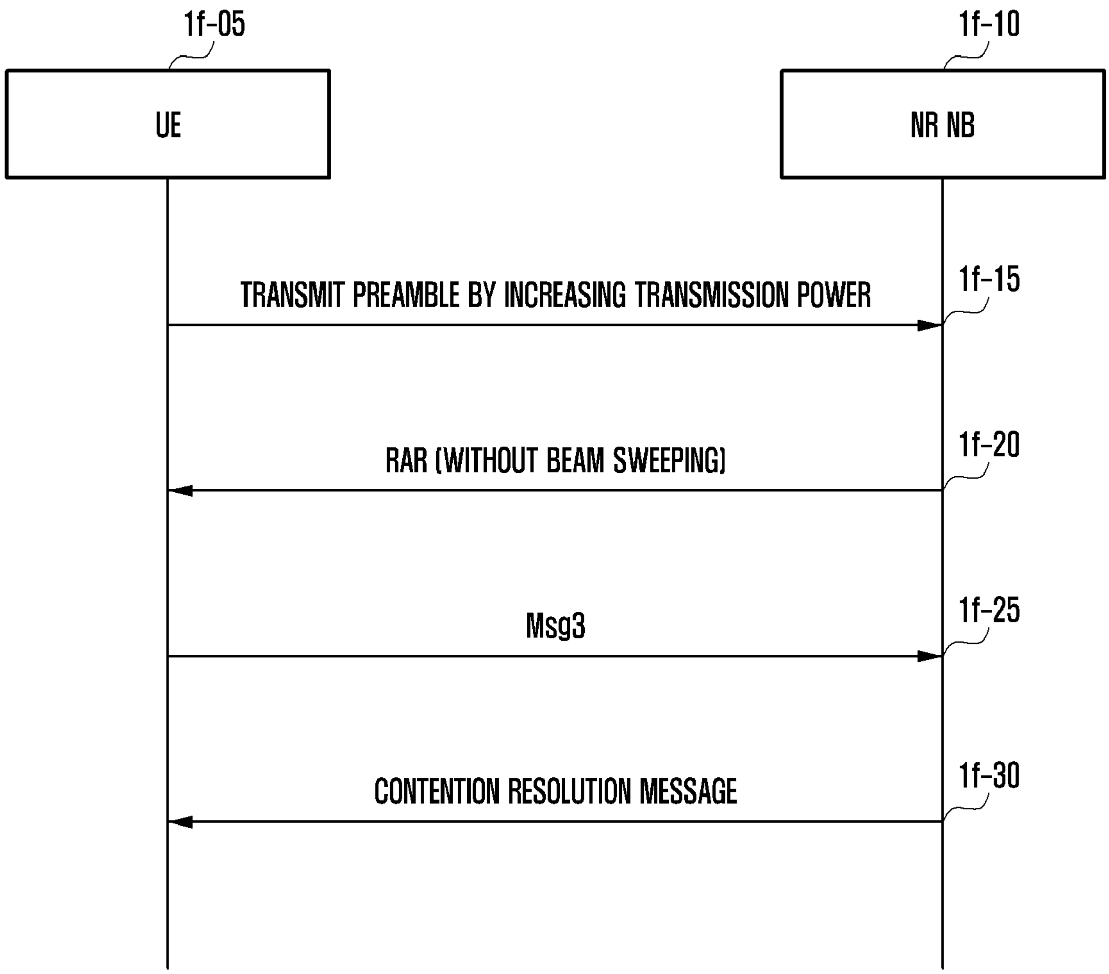
1f-05
UE
1f-10
NR NB
TRANSMIT PREAMBLE BY INCREASING TRANSMISSION POWER
1f-15
RAR (WITHOUT BEAM SWEEPING)
1f-20
Msg3
1f-25
CONTENTION RESOLUTION MESSAGE
1f-30

FIG. 1G

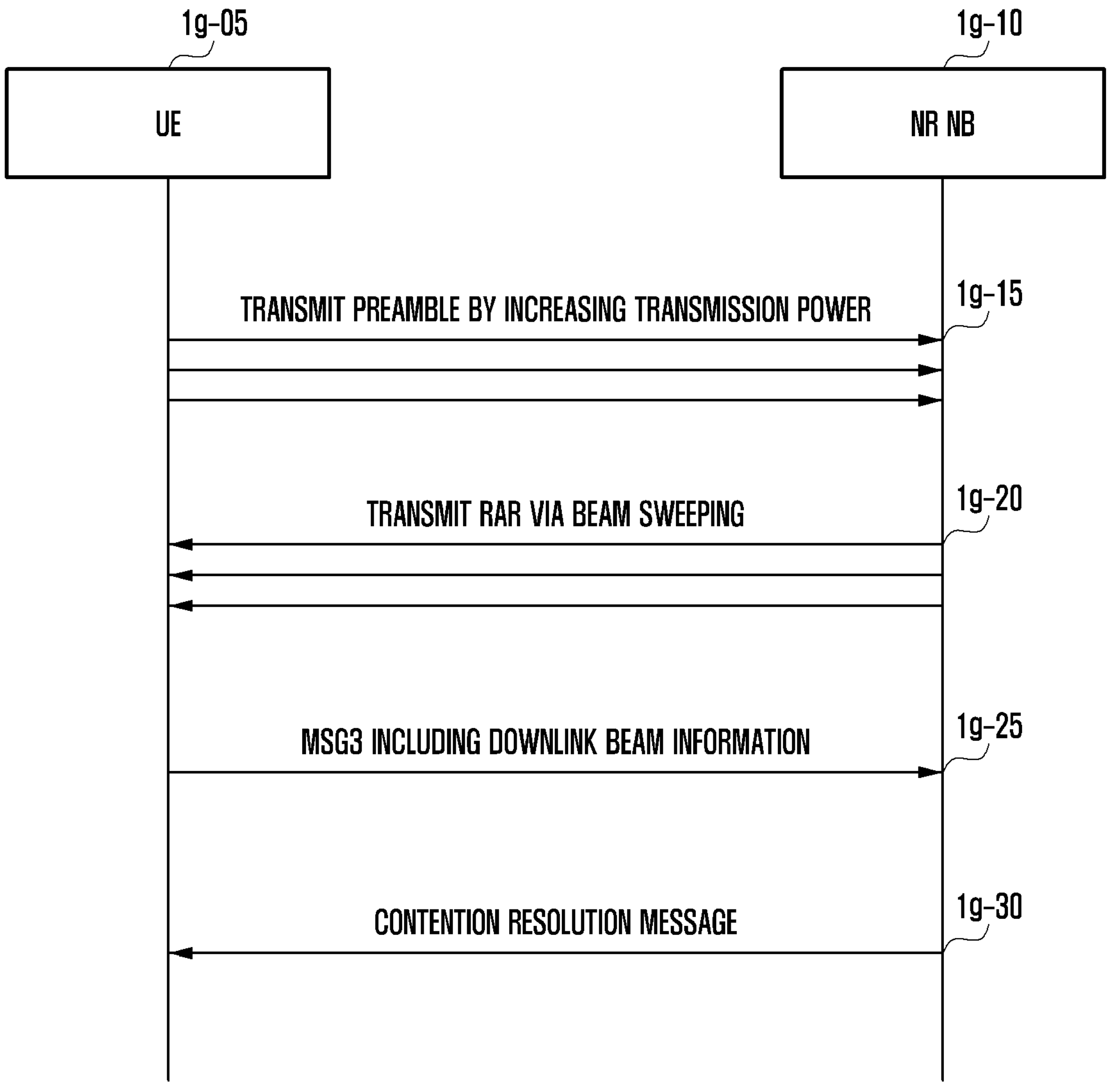
1g-05
1g-10
UE
NR NB
TRANSMIT PREAMBLE BY INCREASING TRANSMISSION POWER
1g-15
TRANSMIT RAR VIA BEAM SWEEPING
1g-20
MSG3 INCLUDING DOWNLINK BEAM INFORMATION
1g-25
CONTENTION RESOLUTION MESSAGE
1g-30

FIG. 1H

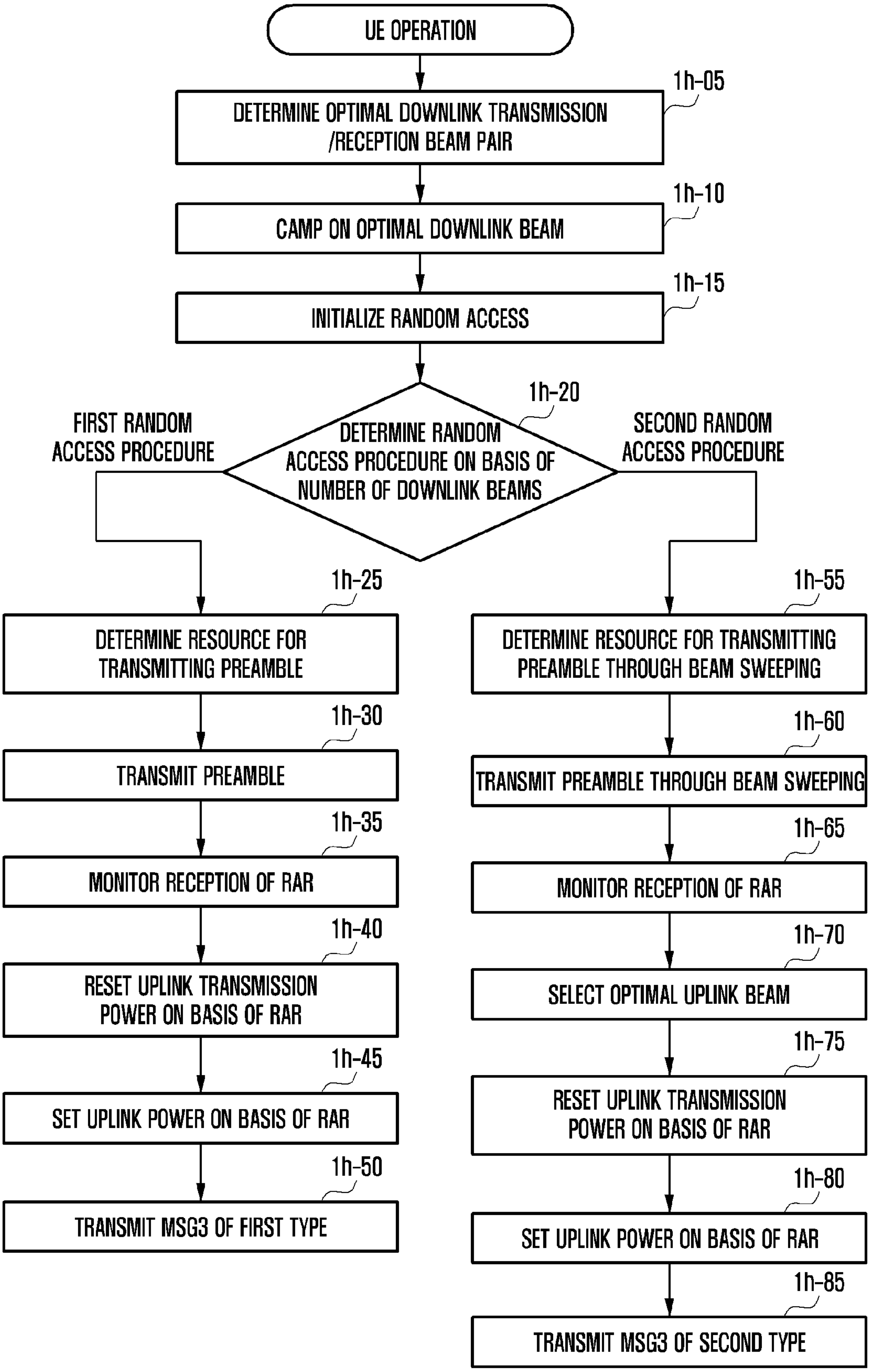
UE OPERATION
1h-05
DETERMINE OPTIMAL DOWNLINK TRANSMISSION /RECEPTION BEAM PAIR
1h-10
CAMP ON OPTIMAL DOWNLINK BEAM
1h-15
INITIALIZE RANDOM ACCESS
1h-20
DETERMINE RANDOM ACCESS PROCEDURE ON BASIS OF NUMBER OF DOWNLINK BEAMS
FIRST RANDOM ACCESS PROCEDURE
SECOND RANDOM ACCESS PROCEDURE
1h-25
DETERMINE RESOURCE FOR TRANSMITTING PREAMBLE
1h-30
TRANSMIT PREAMBLE
1h-35
MONITOR RECEPTION OF RAR
1h-40
RESET UPLINK TRANSMISSION POWER ON BASIS OF RAR
1h-45
SET UPLINK POWER ON BASIS OF RAR
1h-50
TRANSMIT MSG3 OF FIRST TYPE
1h-55
DETERMINE RESOURCE FOR TRANSMITTING PREAMBLE THROUGH BEAM SWEEPING
1h-60
TRANSMIT PREAMBLE THROUGH BEAM SWEEPING
1h-65
MONITOR RECEPTION OF RAR
1h-70
SELECT OPTIMAL UPLINK BEAM
1h-75
RESET UPLINK TRANSMISSION POWER ON BASIS OF RAR
1h-80
SET UPLINK POWER ON BASIS OF RAR
1h-85
TRANSMIT MSG3 OF SECOND TYPE

FIG. 1I

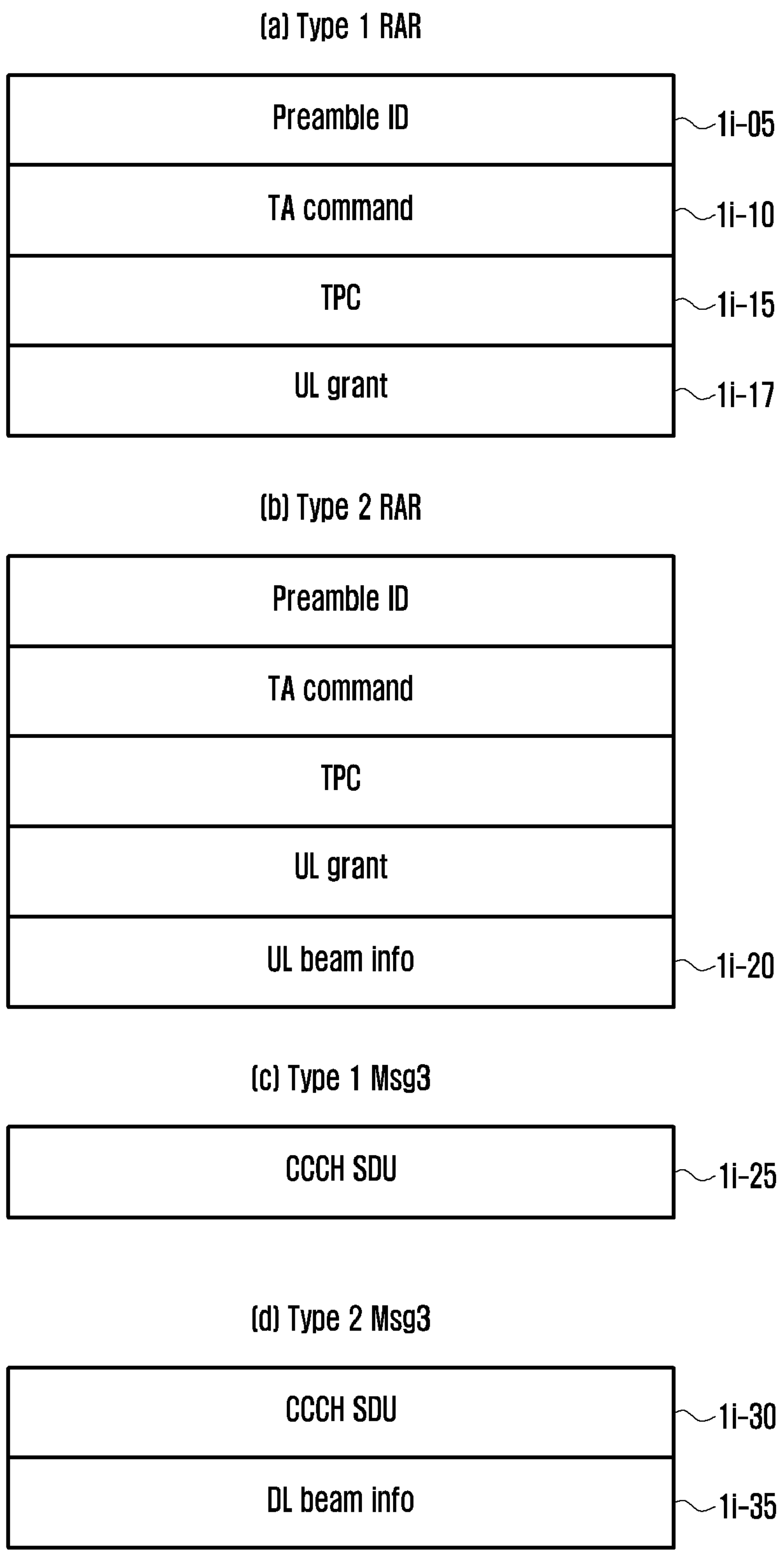
(a) Type 1 RAR
Preamble ID
1i-05
TA command
1i-10
TPC
1i-15
UL grant
1i-17
(b) Type 2 RAR
Preamble ID
TA command
TPC
UL grant
UL beam info
1i-20
(c) Type 1 Msg3
CCCH SDU
1i-25
(d) Type 2 Msg3
CCCH SDU
1i-30
DL beam info
1i-35

FIG. 1J

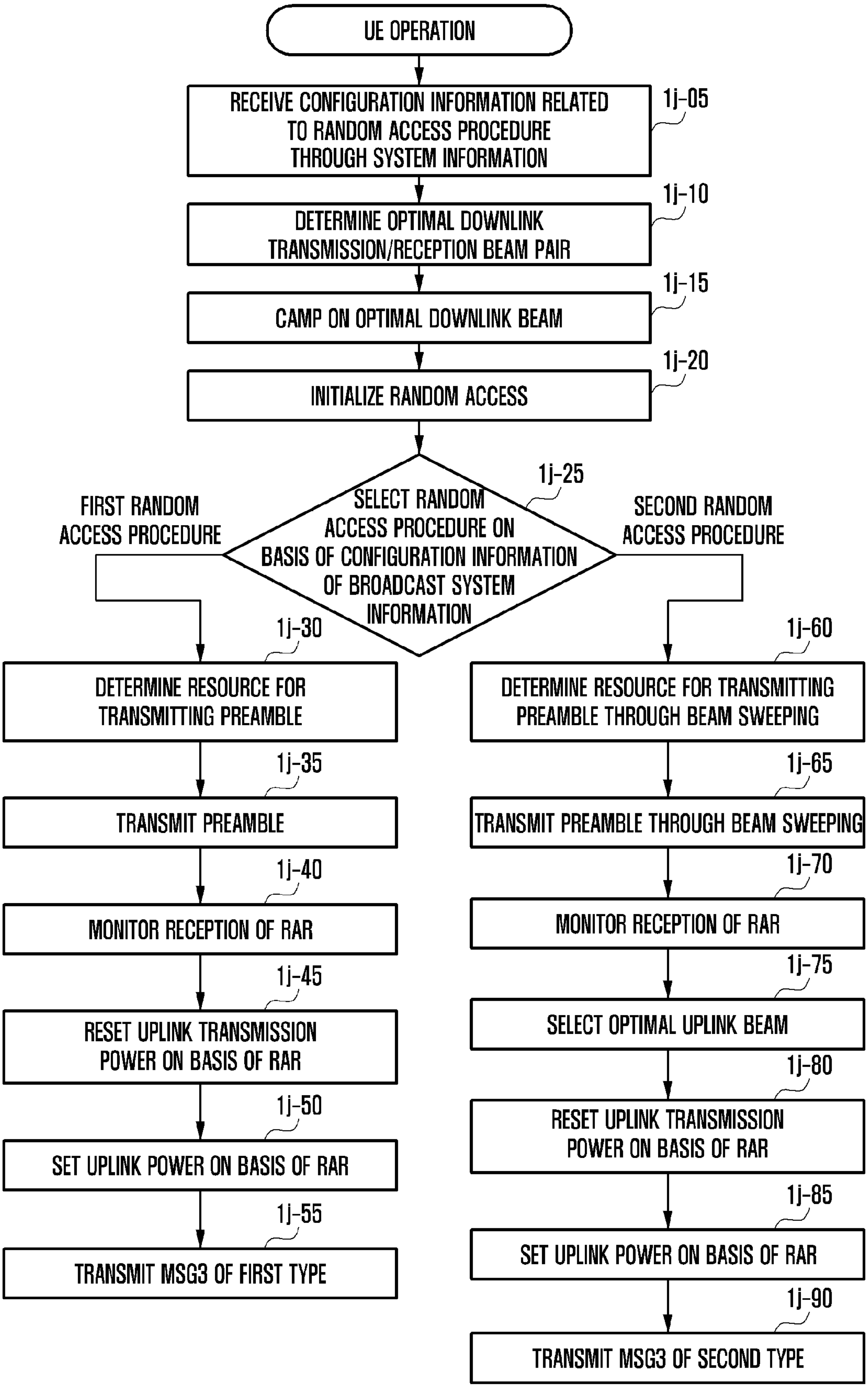
UE OPERATION
RECEIVE CONFIGURATION INFORMATION RELATED TO RANDOM ACCESS PROCEDURE THROUGH SYSTEM INFORMATION
1j-05
DETERMINE OPTIMAL DOWNLINK TRANSMISSION/RECEPTION BEAM PAIR
1j-10
CAMP ON OPTIMAL DOWNLINK BEAM
1j-15
INITIALIZE RANDOM ACCESS
1j-20
SELECT RANDOM ACCESS PROCEDURE ON BASIS OF CONFIGURATION INFORMATION OF BROADCAST SYSTEM INFORMATION
1j-25
FIRST RANDOM ACCESS PROCEDURE
SECOND RANDOM ACCESS PROCEDURE
DETERMINE RESOURCE FOR TRANSMITTING PREAMBLE
1j-30
TRANSMIT PREAMBLE
1j-35
MONITOR RECEPTION OF RAR
1j-40
RESET UPLINK TRANSMISSION POWER ON BASIS OF RAR
1j-45
SET UPLINK POWER ON BASIS OF RAR
1j-50
TRANSMIT MSG3 OF FIRST TYPE
1j-55
DETERMINE RESOURCE FOR TRANSMITTING PREAMBLE THROUGH BEAM SWEEPING
1j-60
TRANSMIT PREAMBLE THROUGH BEAM SWEEPING
1j-65
MONITOR RECEPTION OF RAR
1j-70
SELECT OPTIMAL UPLINK BEAM
1j-75
RESET UPLINK TRANSMISSION POWER ON BASIS OF RAR
1j-80
SET UPLINK POWER ON BASIS OF RAR
1j-85
TRANSMIT MSG3 OF SECOND TYPE
1j-90

FIG. 1L

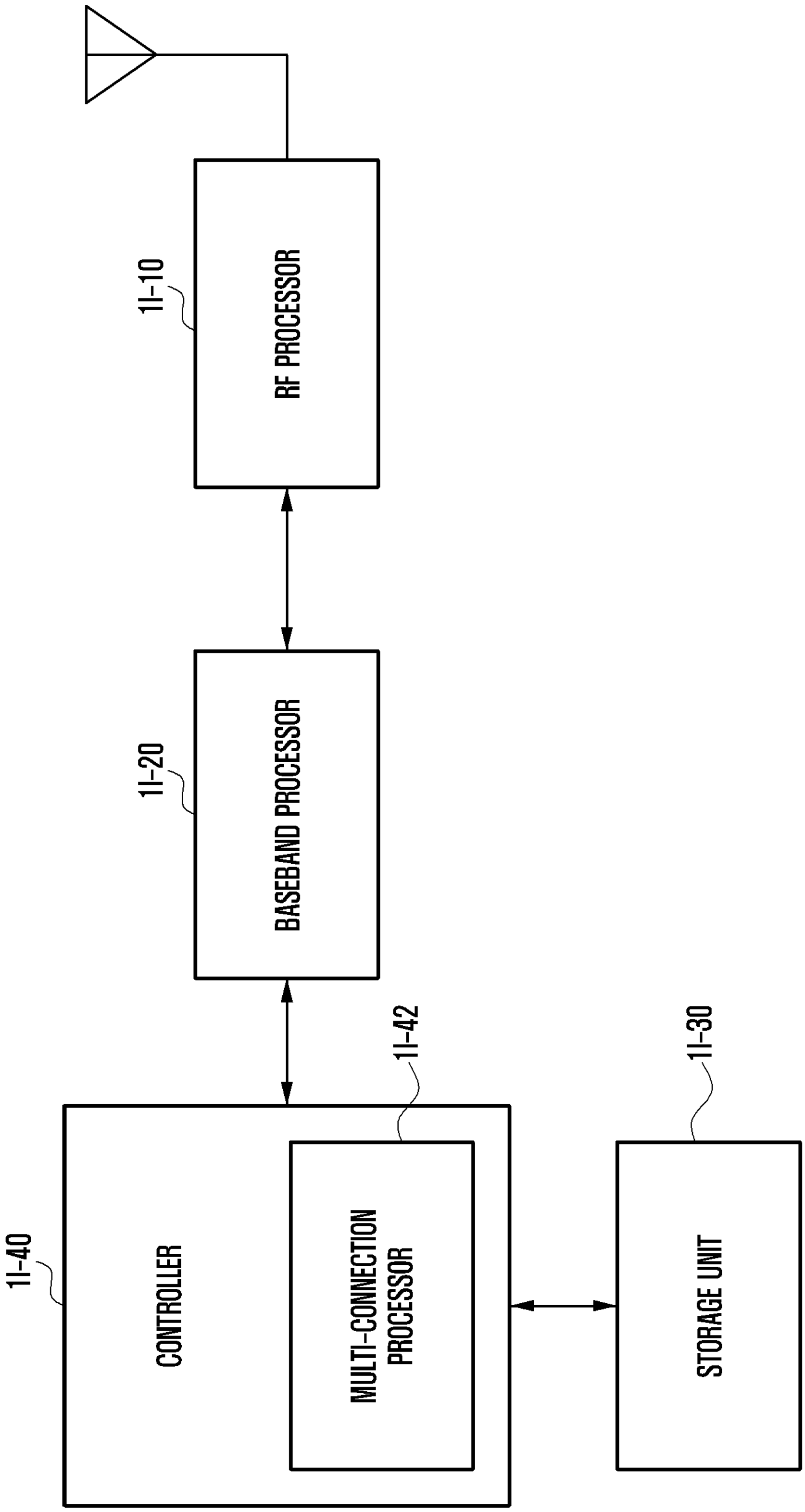
1l-10
RF PROCESSOR
1l-20
BASEBAND PROCESSOR
1l-40
CONTROLLER
1l-42
MULTI-CONNECTION PROCESSOR
1l-30
STORAGE UNIT

FIG. 2

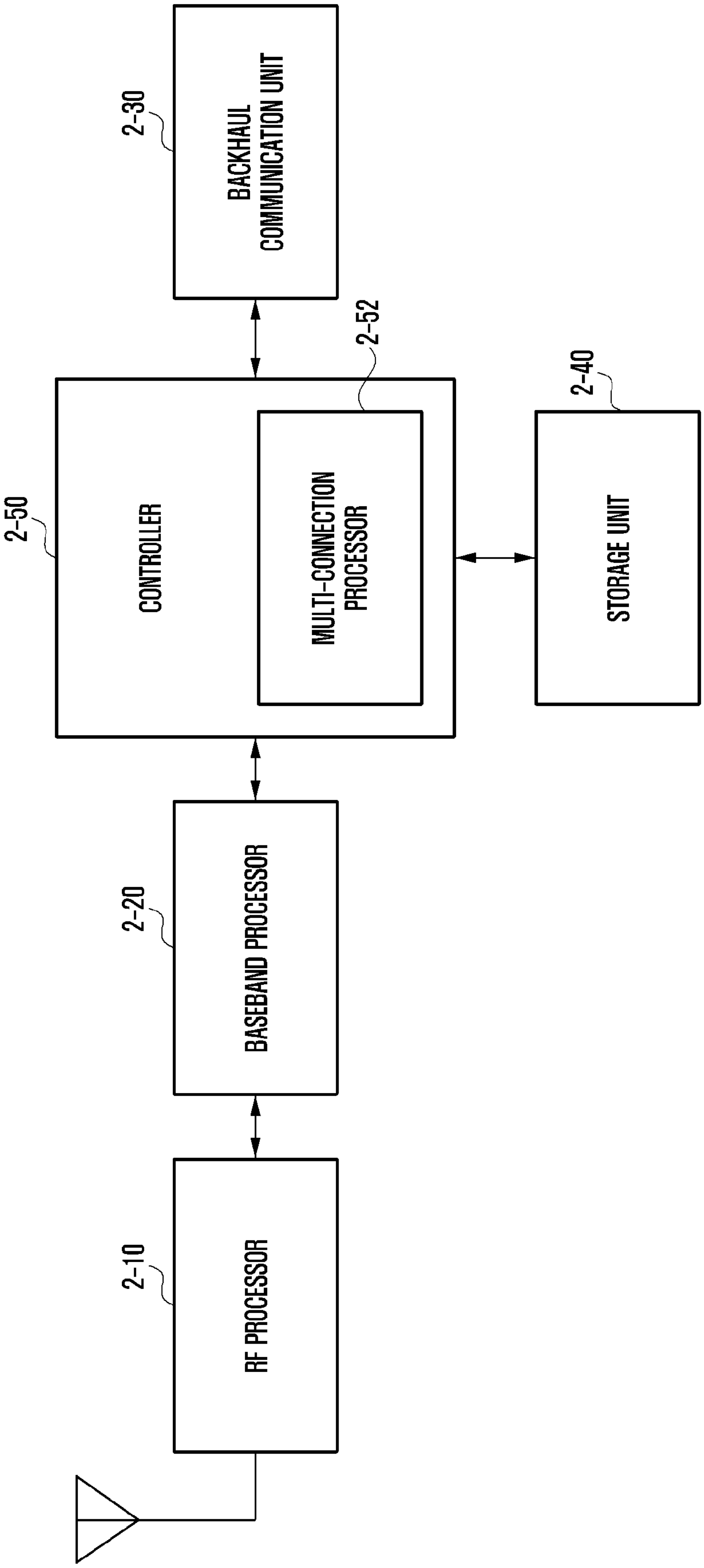
2-30
BACKHAUL COMMUNICATION UNIT
2-52
2-50
CONTROLLER
MULTI-CONNECTION PROCESSOR
2-40
STORAGE UNIT
2-20
BASEBAND PROCESSOR
2-10
RF PROCESSOR

FIG. 3A

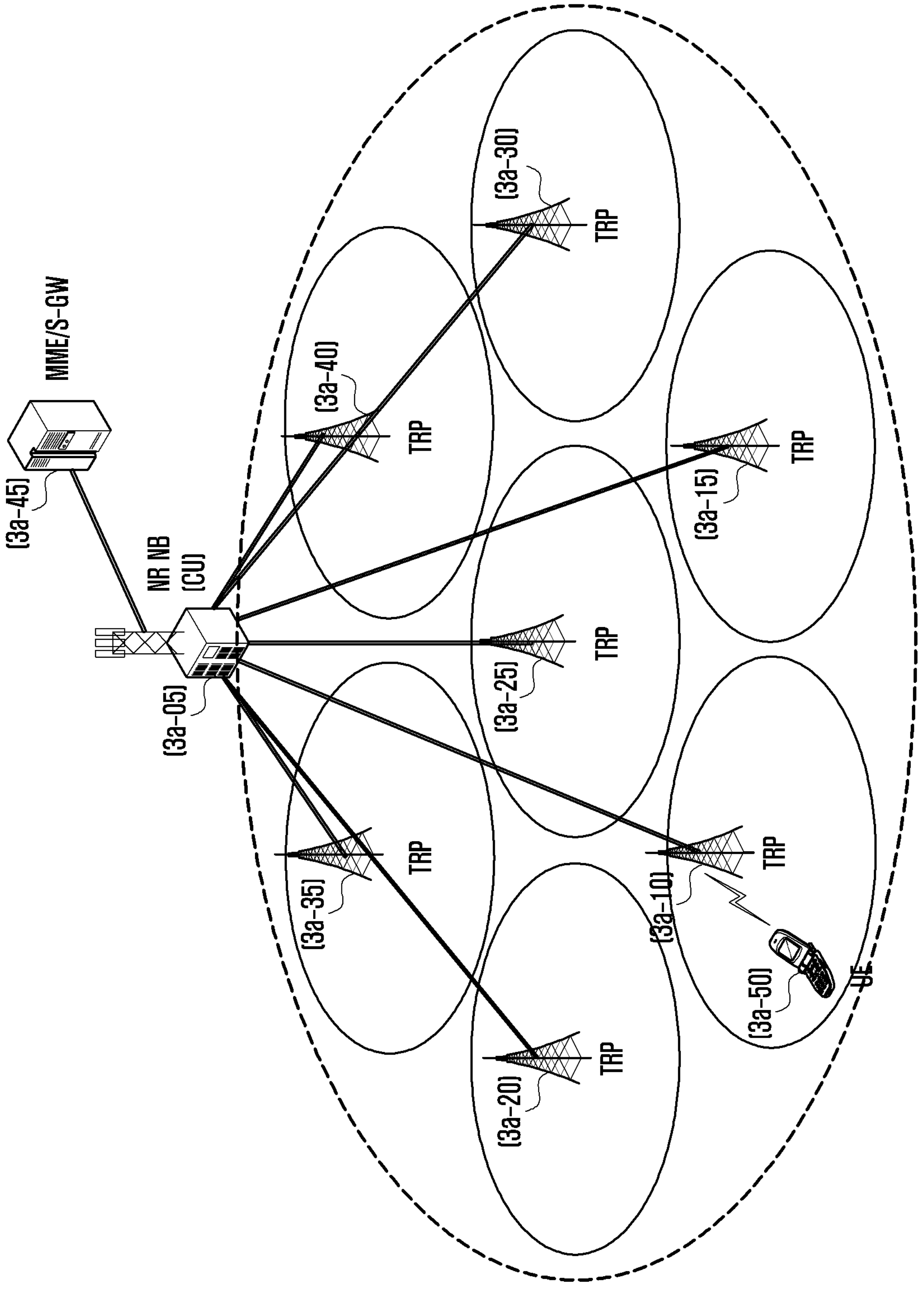
MME/S-GW
(3a-45)
NR NB
(CU)
(3a-05)
(3a-40)
TRP
(3a-30)
TRP
(3a-15)
TRP
(3a-25)
TRP
(3a-35)
TRP
(3a-10)
TRP
(3a-20)
TRP
(3a-50)
UE

FIG. 3B

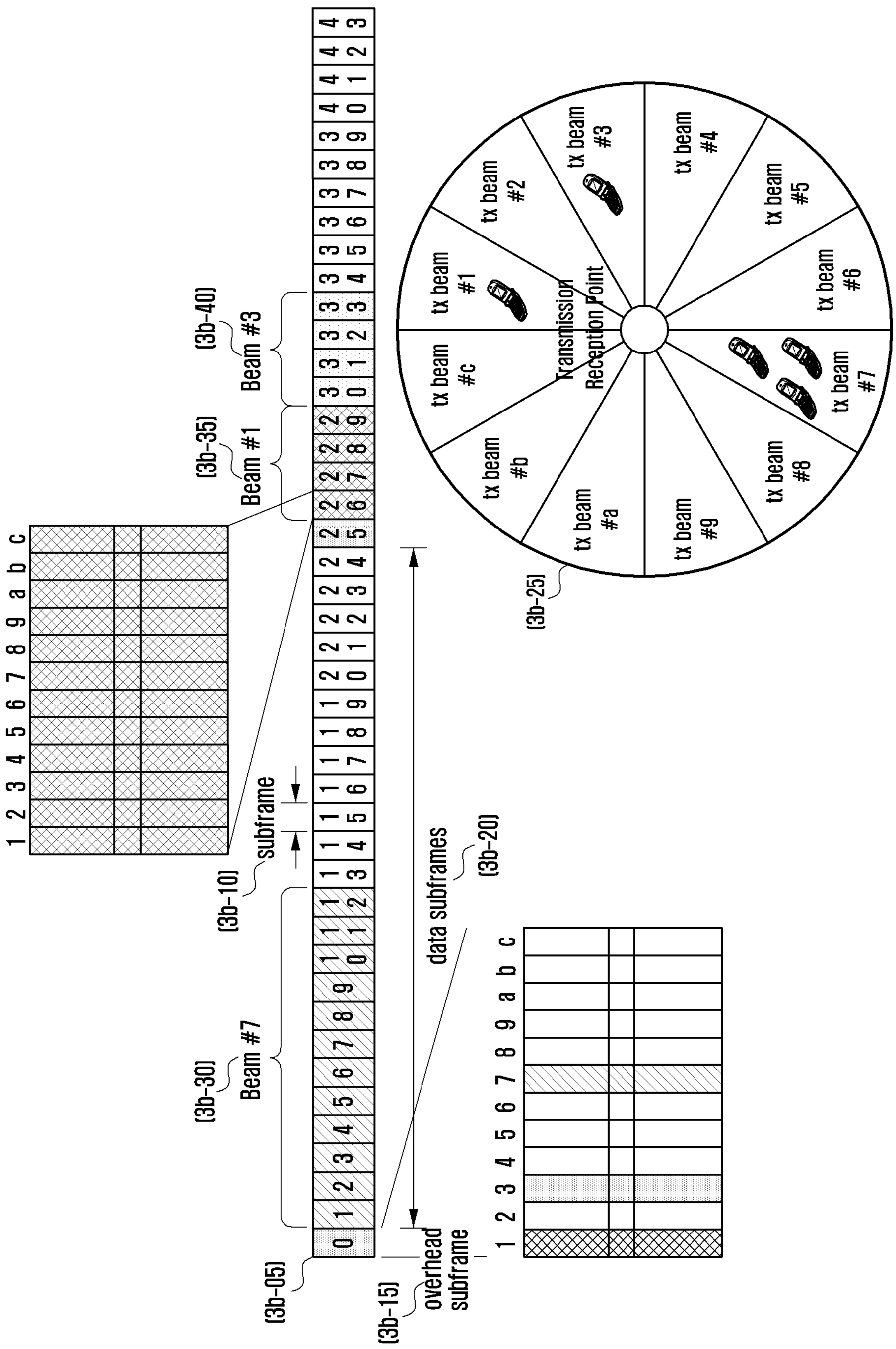
(3b-05)
(3b-10)
subframe
(3b-15)
overhead subframe
(3b-20)
data subframes
(3b-25)
(3b-30)
Beam #7
(3b-35)
Beam #1
(3b-40)
Beam #3
Transmission Reception Point
tx beam #1
tx beam #2
tx beam #3
tx beam #4
tx beam #5
tx beam #6
tx beam #7
tx beam #8
tx beam #9
tx beam #a
tx beam #b
tx beam #c

FIG. 3C

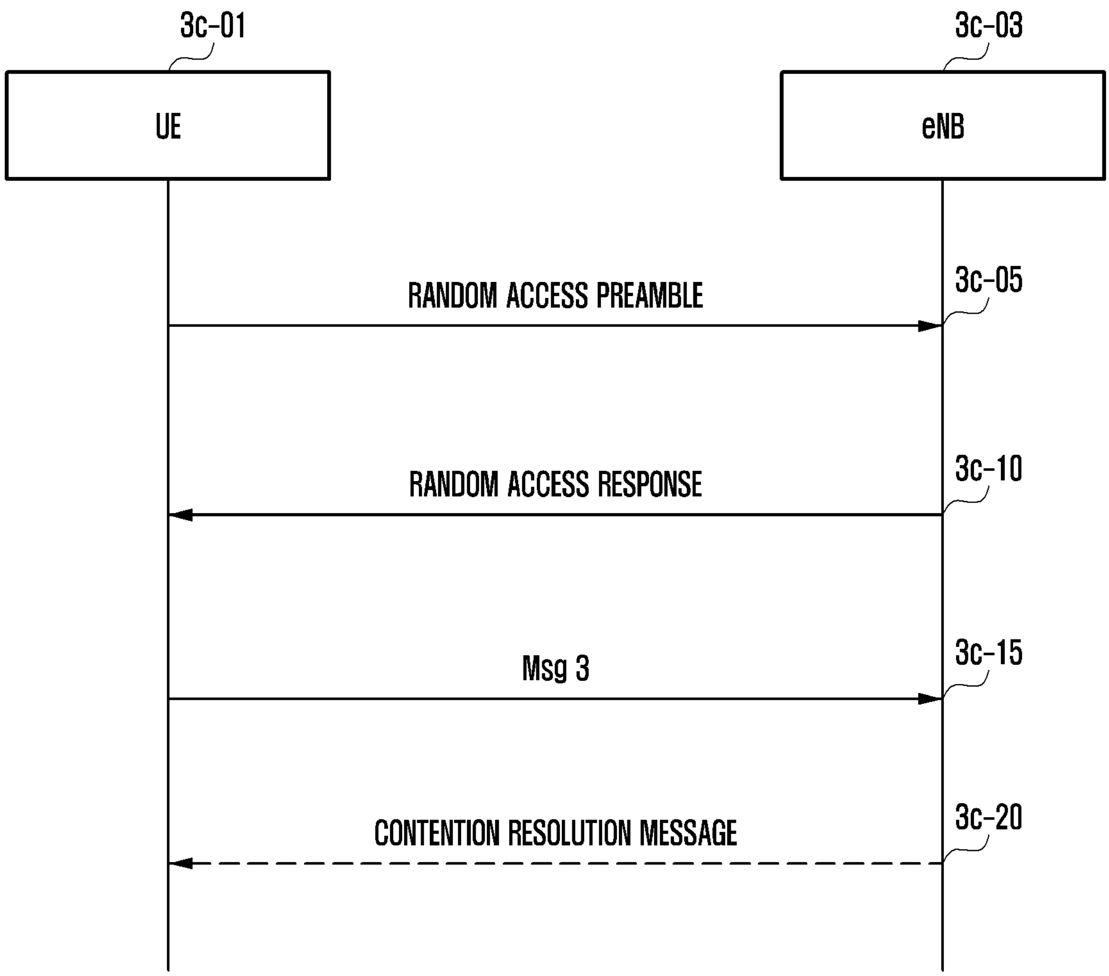
3c-01
UE
3c-03
eNB
RANDOM ACCESS PREAMBLE
3c-05
RANDOM ACCESS RESPONSE
3c-10
Msg 3
3c-15
CONTENTION RESOLUTION MESSAGE
3c-20

FIG. 3D

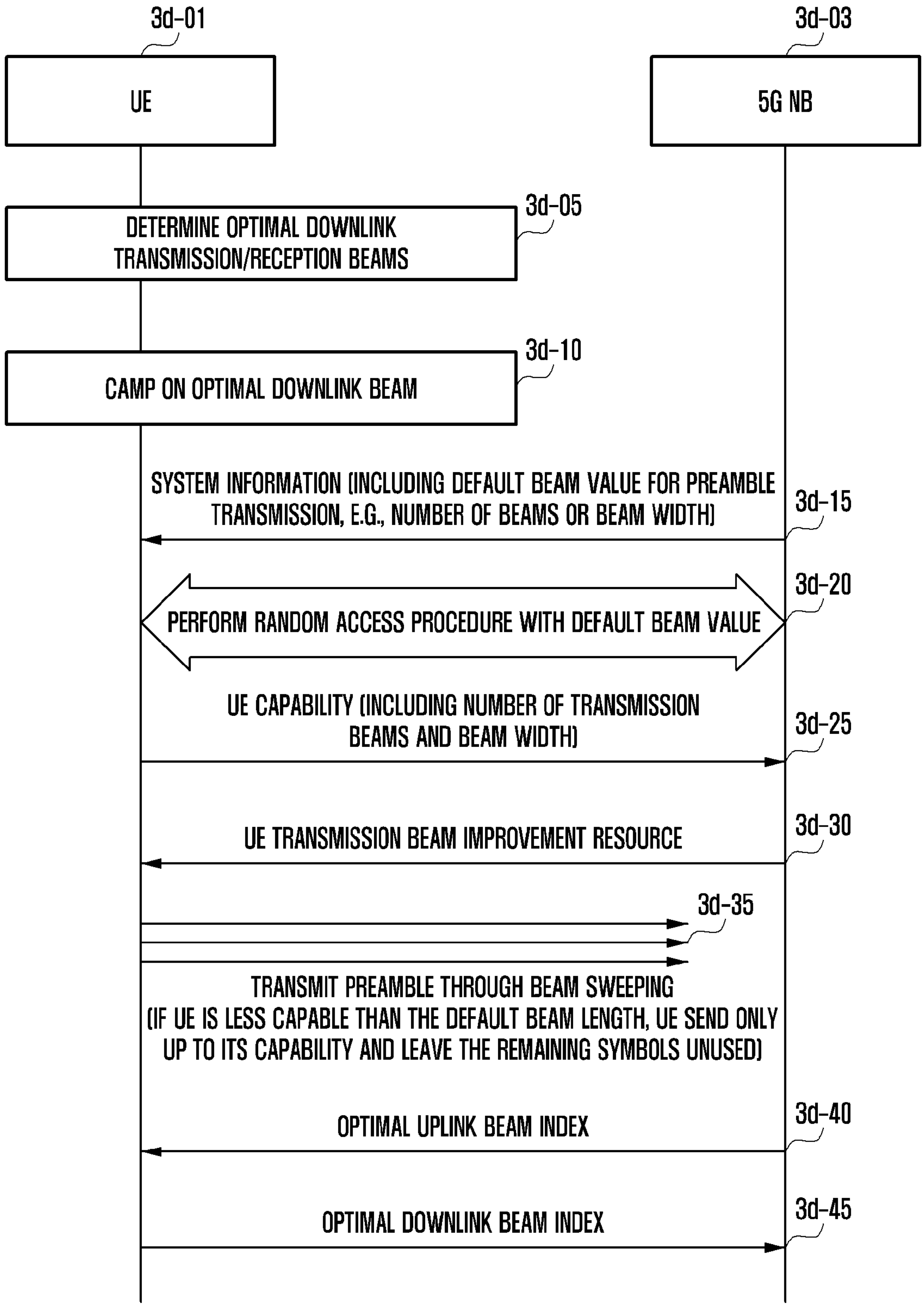
3d-01
3d-03
UE
5G NB
DETERMINE OPTIMAL DOWNLINK TRANSMISSION/RECEPTION BEAMS
3d-05
CAMP ON OPTIMAL DOWNLINK BEAM
3d-10
SYSTEM INFORMATION (INCLUDING DEFAULT BEAM VALUE FOR PREAMBLE TRANSMISSION, E.G., NUMBER OF BEAMS OR BEAM WIDTH)
3d-15
PERFORM RANDOM ACCESS PROCEDURE WITH DEFAULT BEAM VALUE
3d-20
UE CAPABILITY (INCLUDING NUMBER OF TRANSMISSION BEAMS AND BEAM WIDTH)
3d-25
UE TRANSMISSION BEAM IMPROVEMENT RESOURCE
3d-30
3d-35
TRANSMIT PREAMBLE THROUGH BEAM SWEEPING (IF UE IS LESS CAPABLE THAN THE DEFAULT BEAM LENGTH, UE SEND ONLY UP TO ITS CAPABILITY AND LEAVE THE REMAINING SYMBOLS UNUSED)
OPTIMAL UPLINK BEAM INDEX
3d-40
OPTIMAL DOWNLINK BEAM INDEX
3d-45

FIG. 3E

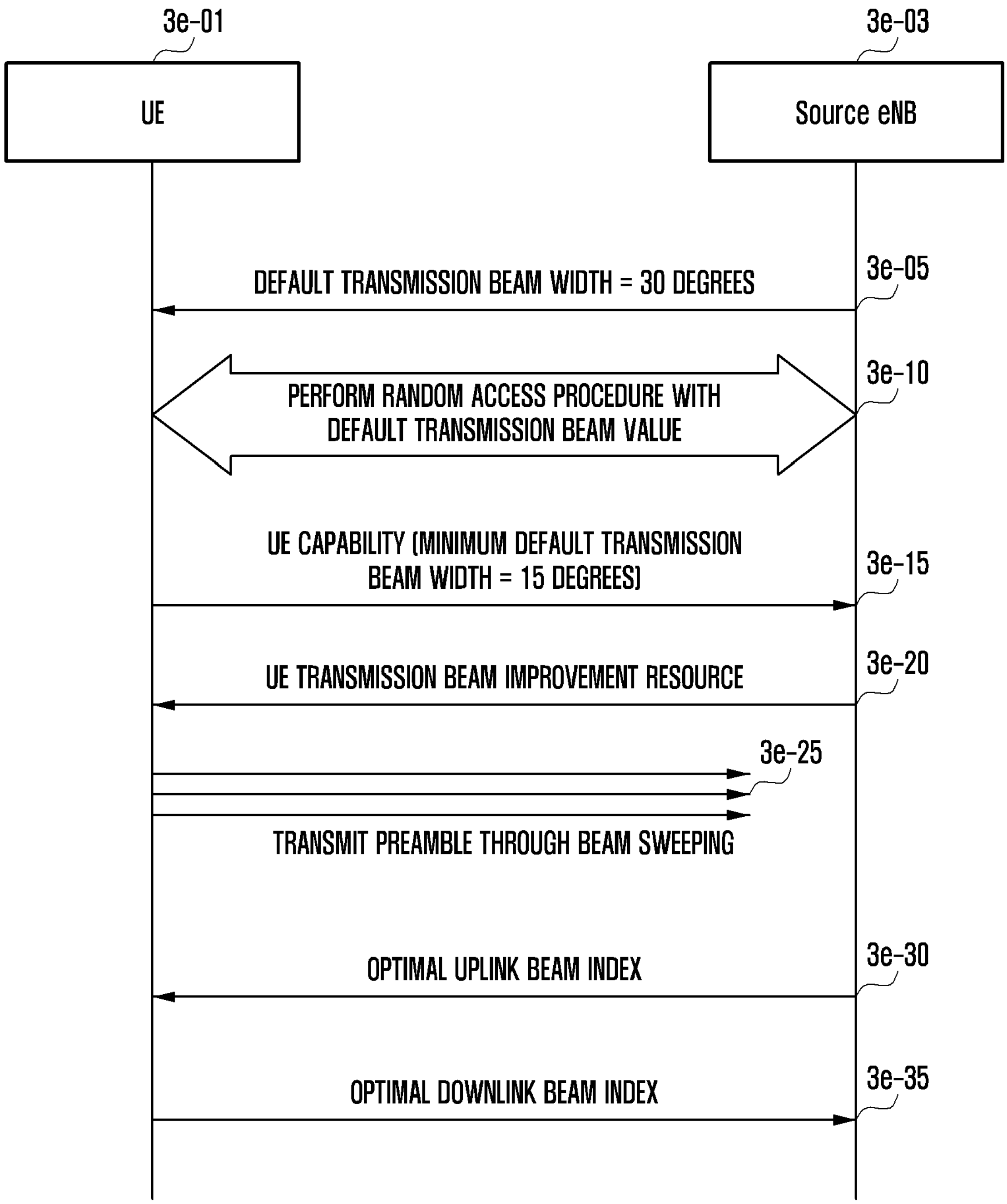
3e-01
3e-03
UE
Source eNB
DEFAULT TRANSMISSION BEAM WIDTH = 30 DEGREES
3e-05
PERFORM RANDOM ACCESS PROCEDURE WITH
DEFAULT TRANSMISSION BEAM VALUE
3e-10
UE CAPABILITY (MINIMUM DEFAULT TRANSMISSION
BEAM WIDTH = 15 DEGREES)
3e-15
UE TRANSMISSION BEAM IMPROVEMENT RESOURCE
3e-20
3e-25
TRANSMIT PREAMBLE THROUGH BEAM SWEEPING
OPTIMAL UPLINK BEAM INDEX
3e-30
OPTIMAL DOWNLINK BEAM INDEX
3e-35

FIG. 3F

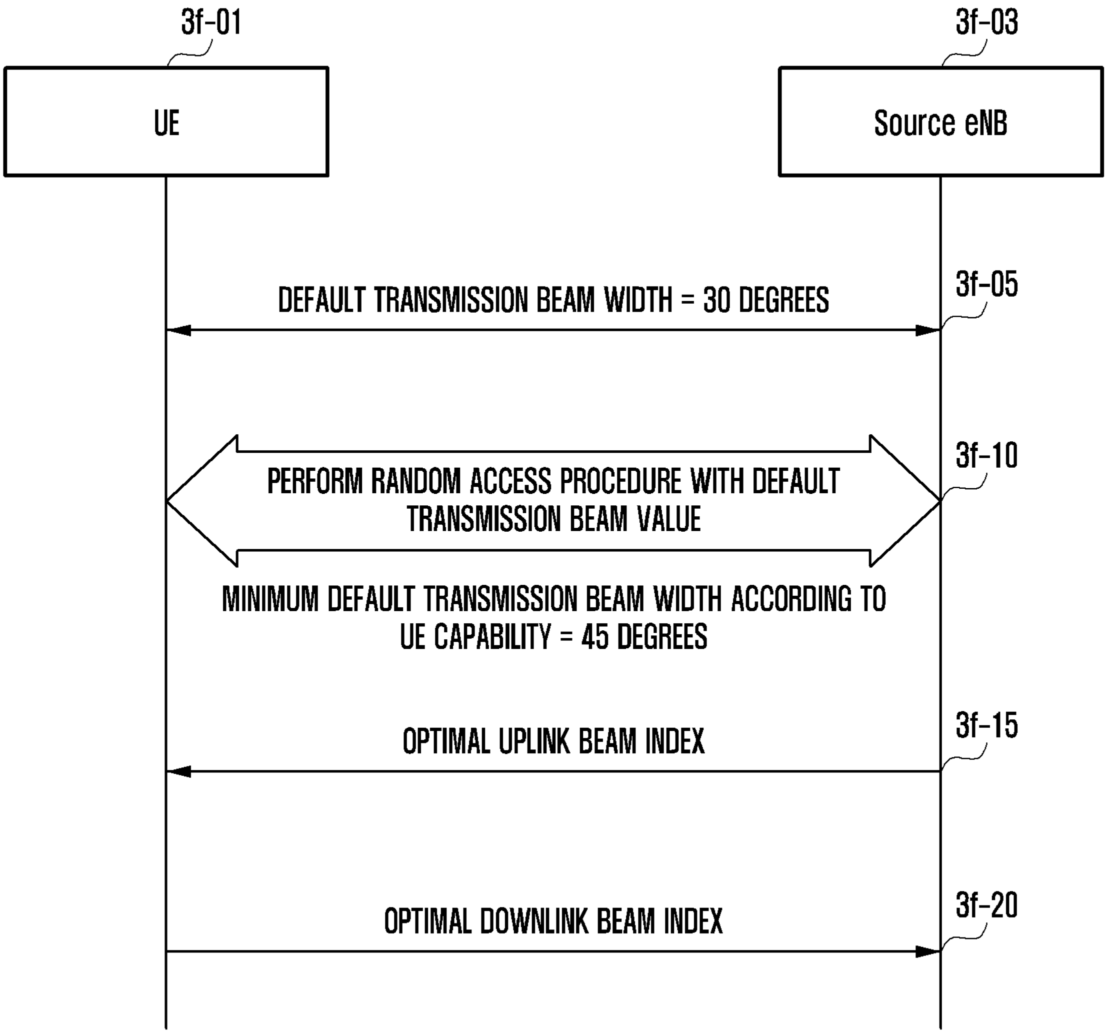
3f-01
3f-03
UE
Source eNB
DEFAULT TRANSMISSION BEAM WIDTH = 30 DEGREES
3f-05
PERFORM RANDOM ACCESS PROCEDURE WITH DEFAULT TRANSMISSION BEAM VALUE
3f-10
MINIMUM DEFAULT TRANSMISSION BEAM WIDTH ACCORDING TO UE CAPABILITY = 45 DEGREES
OPTIMAL UPLINK BEAM INDEX
3f-15
OPTIMAL DOWNLINK BEAM INDEX
3f-20

FIG. 3G

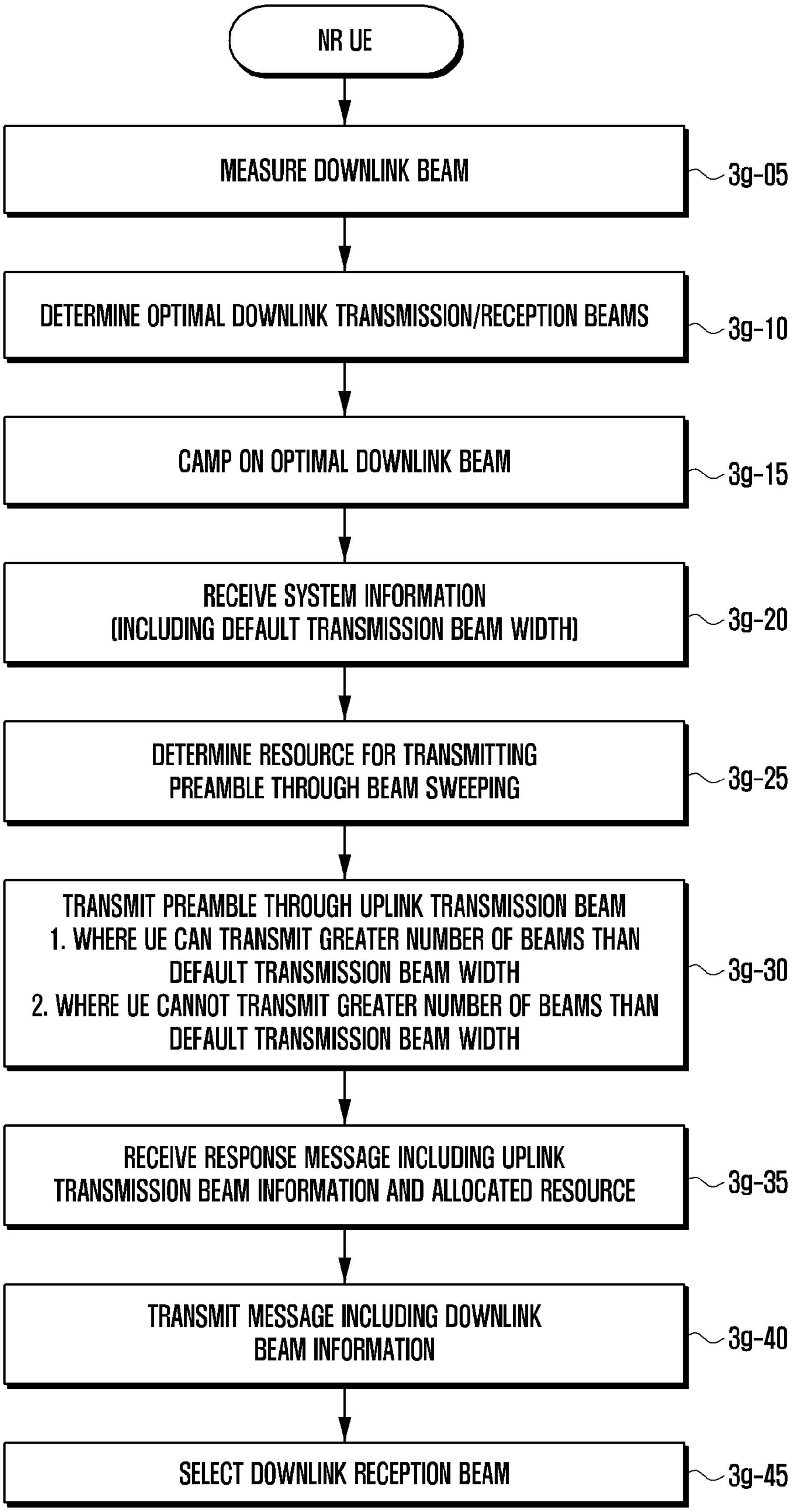
NR UE
MEASURE DOWNLINK BEAM
3g-05
DETERMINE OPTIMAL DOWNLINK TRANSMISSION/RECEPTION BEAMS
3g-10
CAMP ON OPTIMAL DOWNLINK BEAM
3g-15
RECEIVE SYSTEM INFORMATION (INCLUDING DEFAULT TRANSMISSION BEAM WIDTH)
3g-20
DETERMINE RESOURCE FOR TRANSMITTING PREAMBLE THROUGH BEAM SWEEPING
3g-25
TRANSMIT PREAMBLE THROUGH UPLINK TRANSMISSION BEAM
1. WHERE UE CAN TRANSMIT GREATER NUMBER OF BEAMS THAN DEFAULT TRANSMISSION BEAM WIDTH
2. WHERE UE CANNOT TRANSMIT GREATER NUMBER OF BEAMS THAN DEFAULT TRANSMISSION BEAM WIDTH
3g-30
RECEIVE RESPONSE MESSAGE INCLUDING UPLINK TRANSMISSION BEAM INFORMATION AND ALLOCATED RESOURCE
3g-35
TRANSMIT MESSAGE INCLUDING DOWNLINK BEAM INFORMATION
3g-40
SELECT DOWNLINK RECEPTION BEAM
3g-45

FIG. 3H

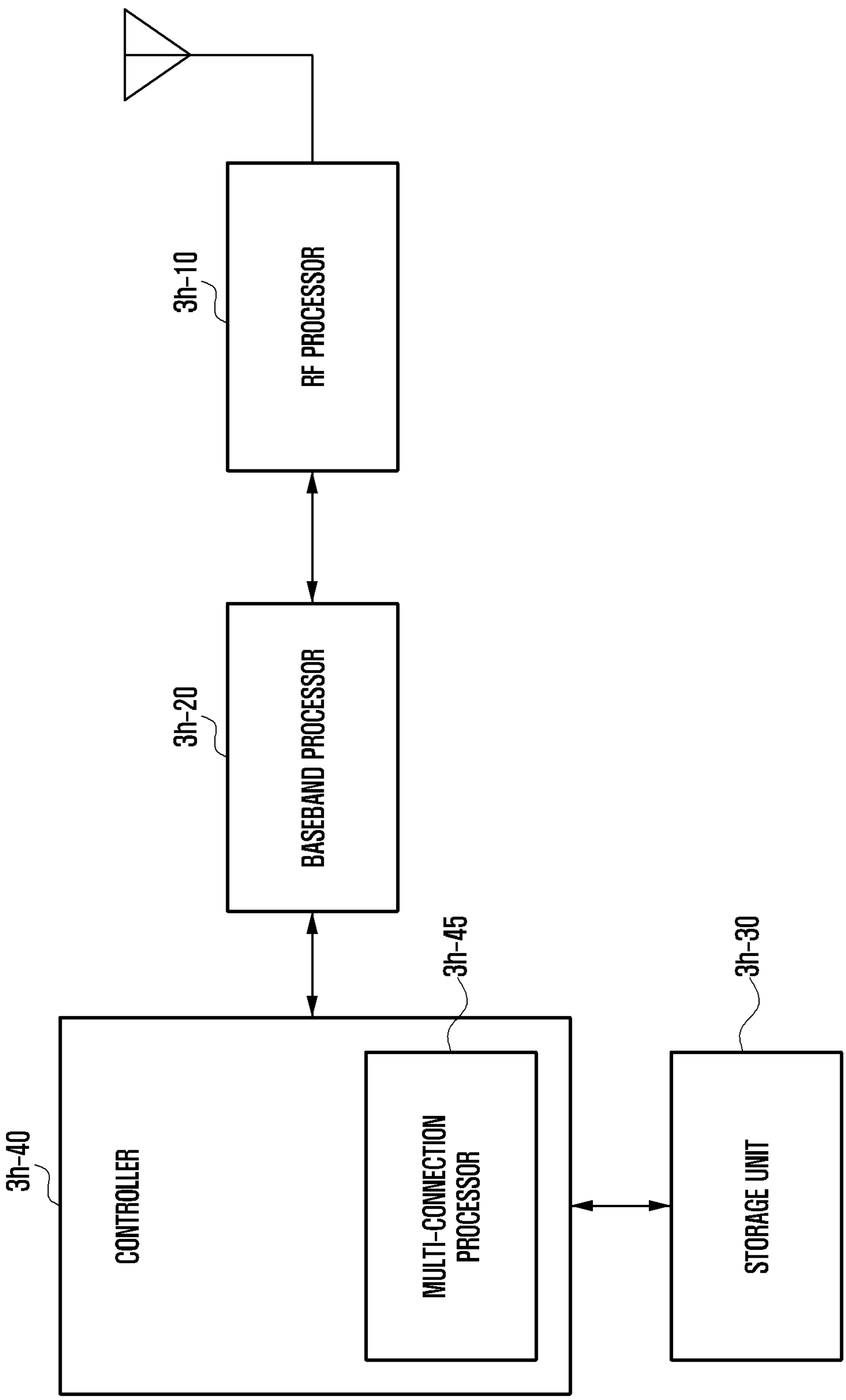
3h-10
RF PROCESSOR
3h-20
BASEBAND PROCESSOR
3h-40
CONTROLLER
3h-45
MULTI-CONNECTION PROCESSOR
3h-30
STORAGE UNIT

FIG. 3I

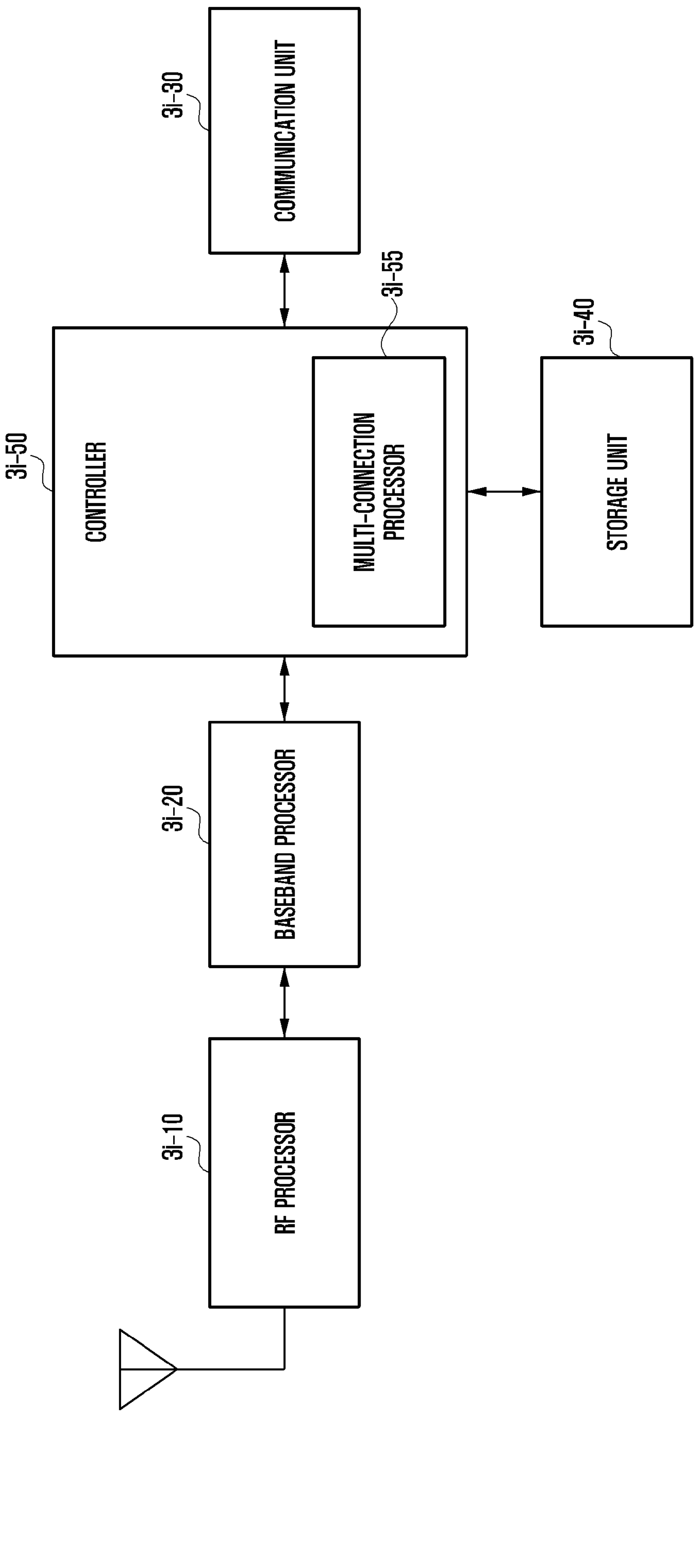
COMMUNICATION UNIT
3i-30
CONTROLLER
3i-50
MULTI-CONNECTION PROCESSOR
3i-55
STORAGE UNIT
3i-40
BASEBAND PROCESSOR
3i-20
RF PROCESSOR
3i-10

FIG. 4A

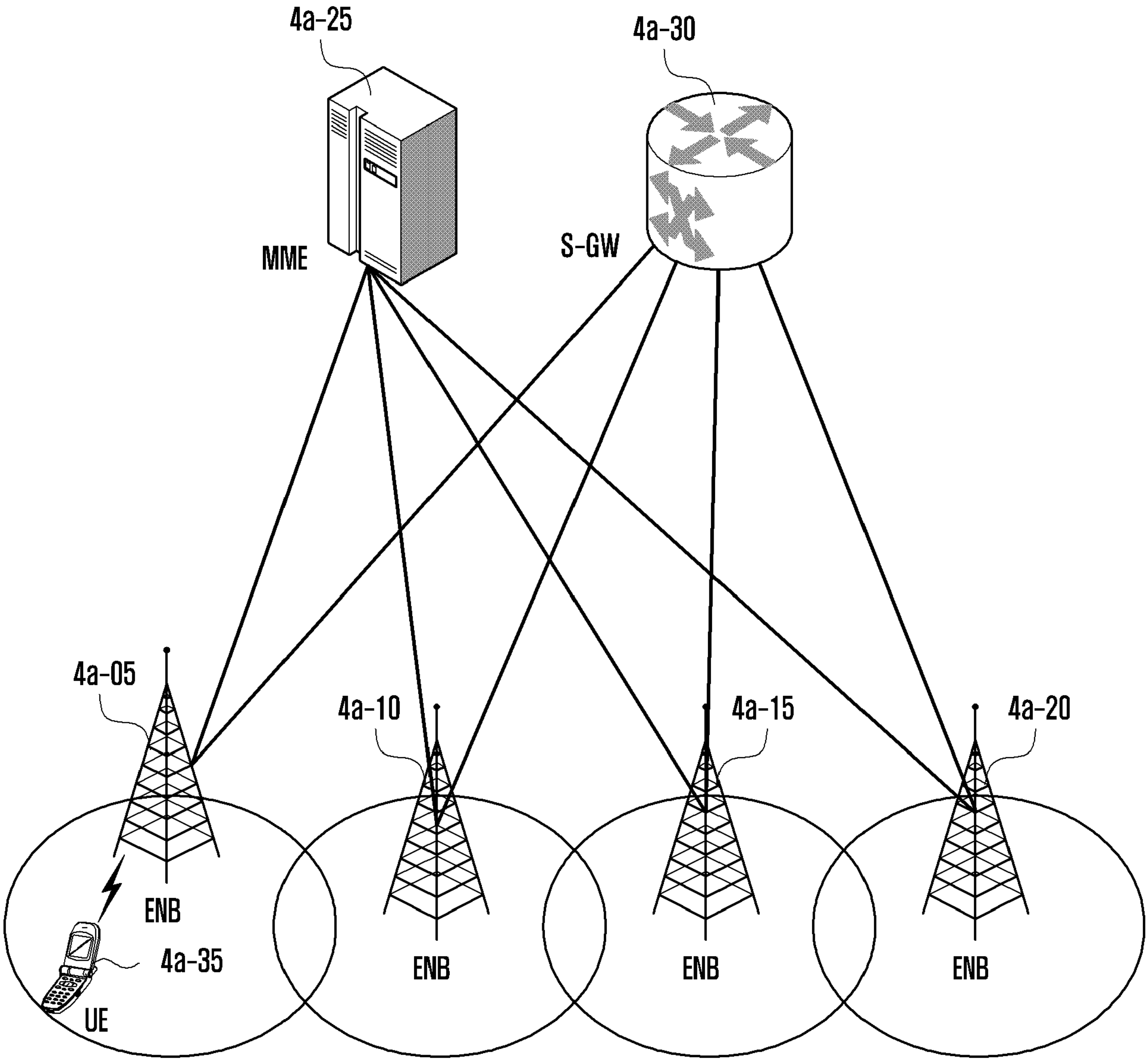

FIG. 4B

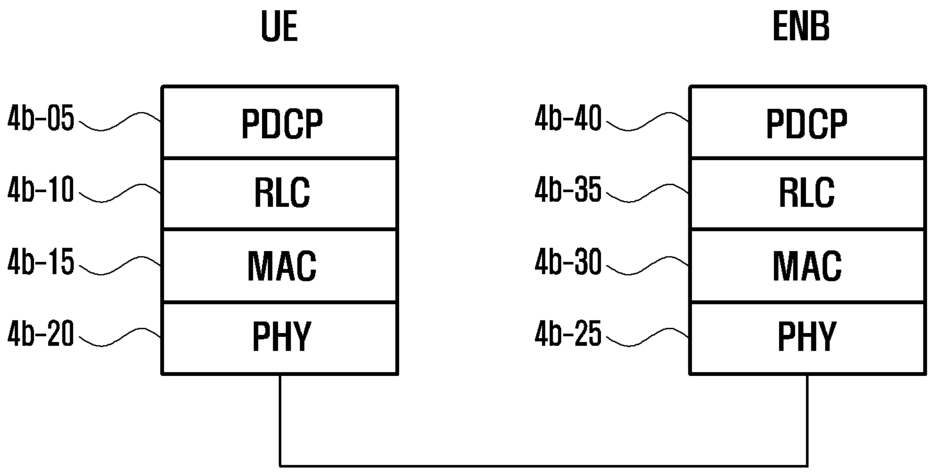
UE
ENB
4b-05
PDCP
4b-10
RLC
4b-15
MAC
4b-20
PHY
4b-40
PDCP
4b-35
RLC
4b-30
MAC
4b-25
PHY

FIG. 4C

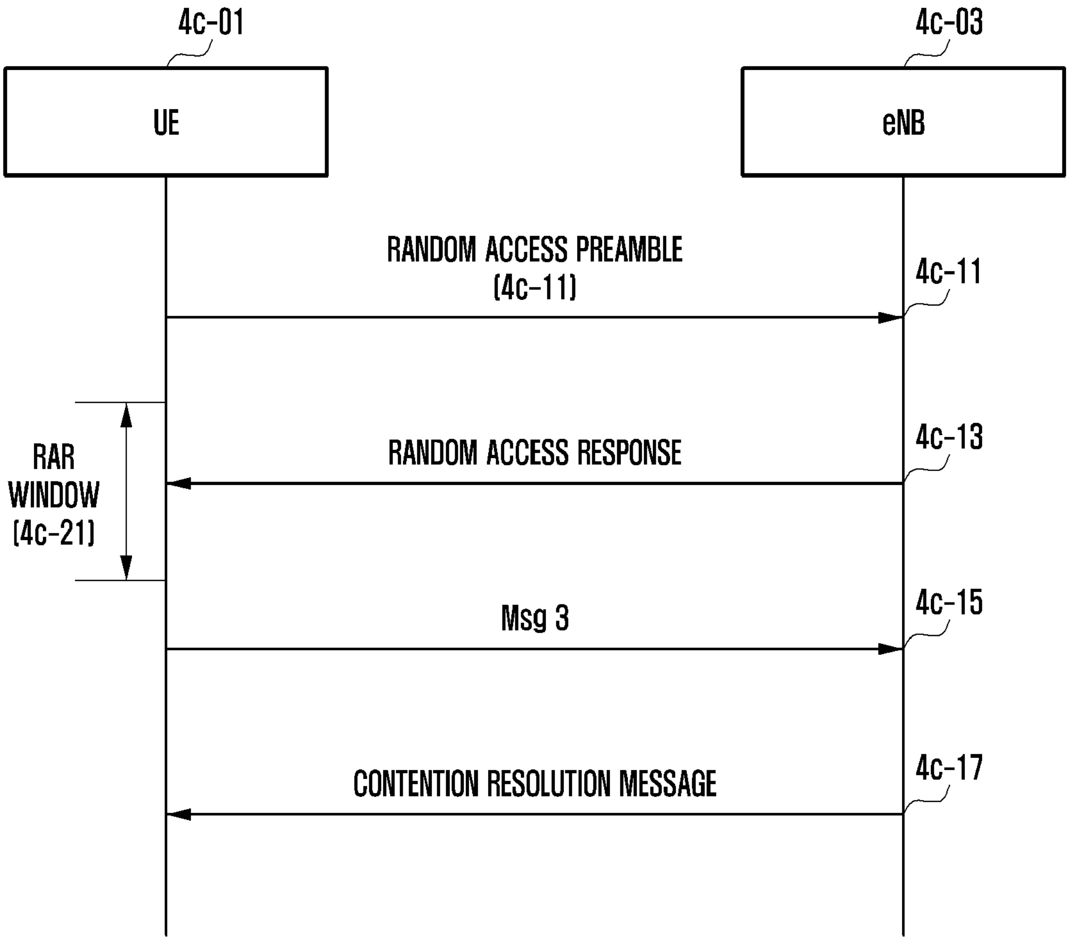
4c-01
4c-03
UE
eNB
RANDOM ACCESS PREAMBLE
(4c-11)
4c-11
RAR
WINDOW
(4c-21)
RANDOM ACCESS RESPONSE
4c-13
Msg 3
4c-15
CONTENTION RESOLUTION MESSAGE
4c-17

FIG. 4D

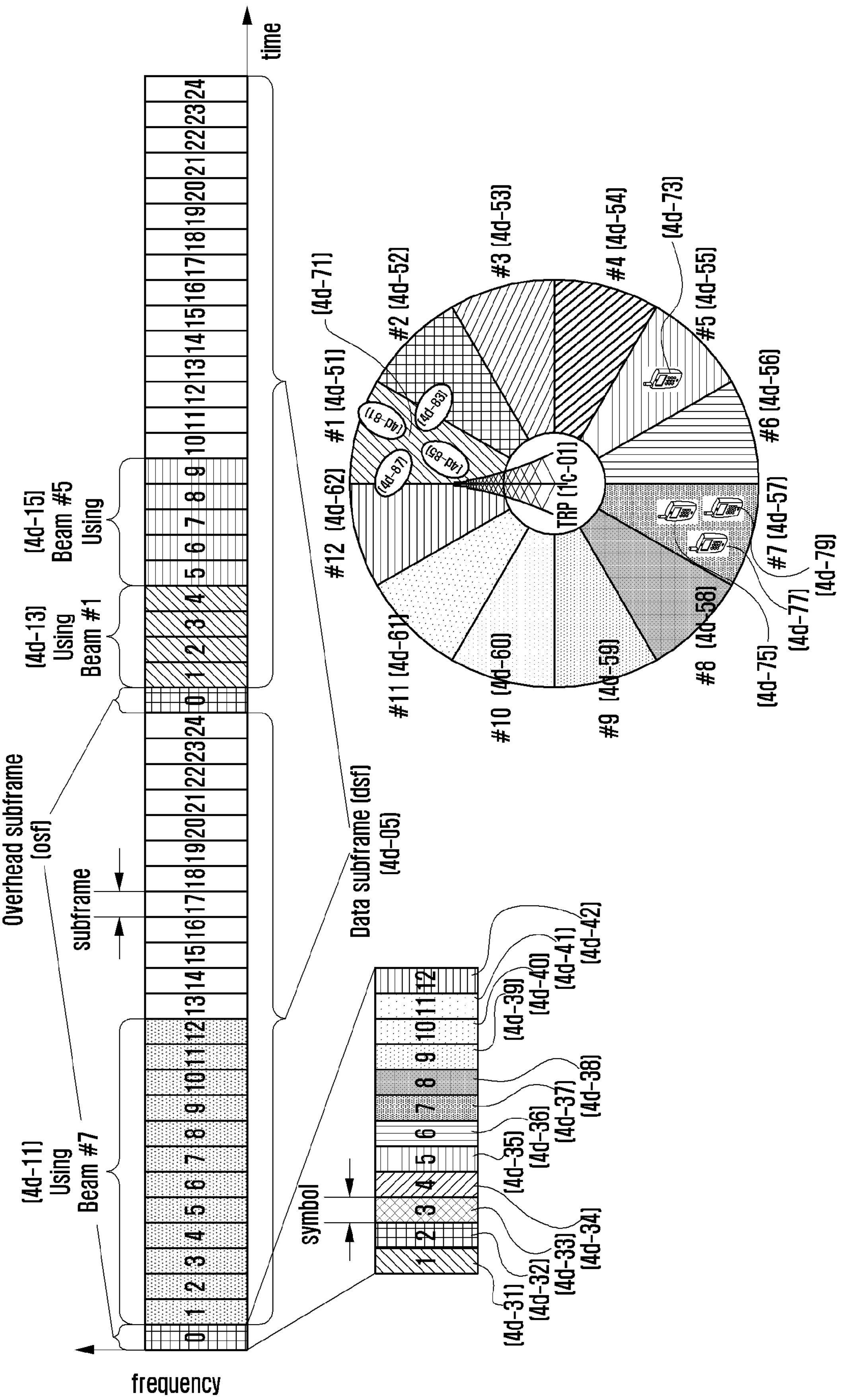

time
frequency
(4d-03)
Overhead subframe
(osf)
subframe
Data subframe (dsf)
(4d-05)
(4d-11)
Using
Beam #7
(4d-13)
Using
Beam #1
(4d-15)
Beam #5
Using
symbol
0 1 2 3 4 5 6 7 8 9 10 11 12 13 14 15 16 17 18 19 20 21 22 23 24
0 1 2 3 4 5 6 7 8 9 10 11 12 13 14 15 16 17 18 19 20 21 22 23 24
1 2 3 4 5 6 7 8 9 10 11 12
(4d-31)
(4d-32)
(4d-33)
(4d-34)
(4d-35)
(4d-36)
(4d-37)
(4d-38)
(4d-39)
(4d-40)
(4d-41)
(4d-42)
#1 (4d-51)
#2 (4d-52)
#3 (4d-53)
#4 (4d-54)
#5 (4d-55)
#6 (4d-56)
#7 (4d-57)
#8 (4d-58)
#9 (4d-59)
#10 (4d-60)
#11 (4d-61)
#12 (4d-62)
TRP (1c-01)
(4d-71)
(4d-73)
(4d-75)
(4d-77)
(4d-79)
(4d-81)
(4d-83)
(4d-85)
(4d-87)

FIG. 4E

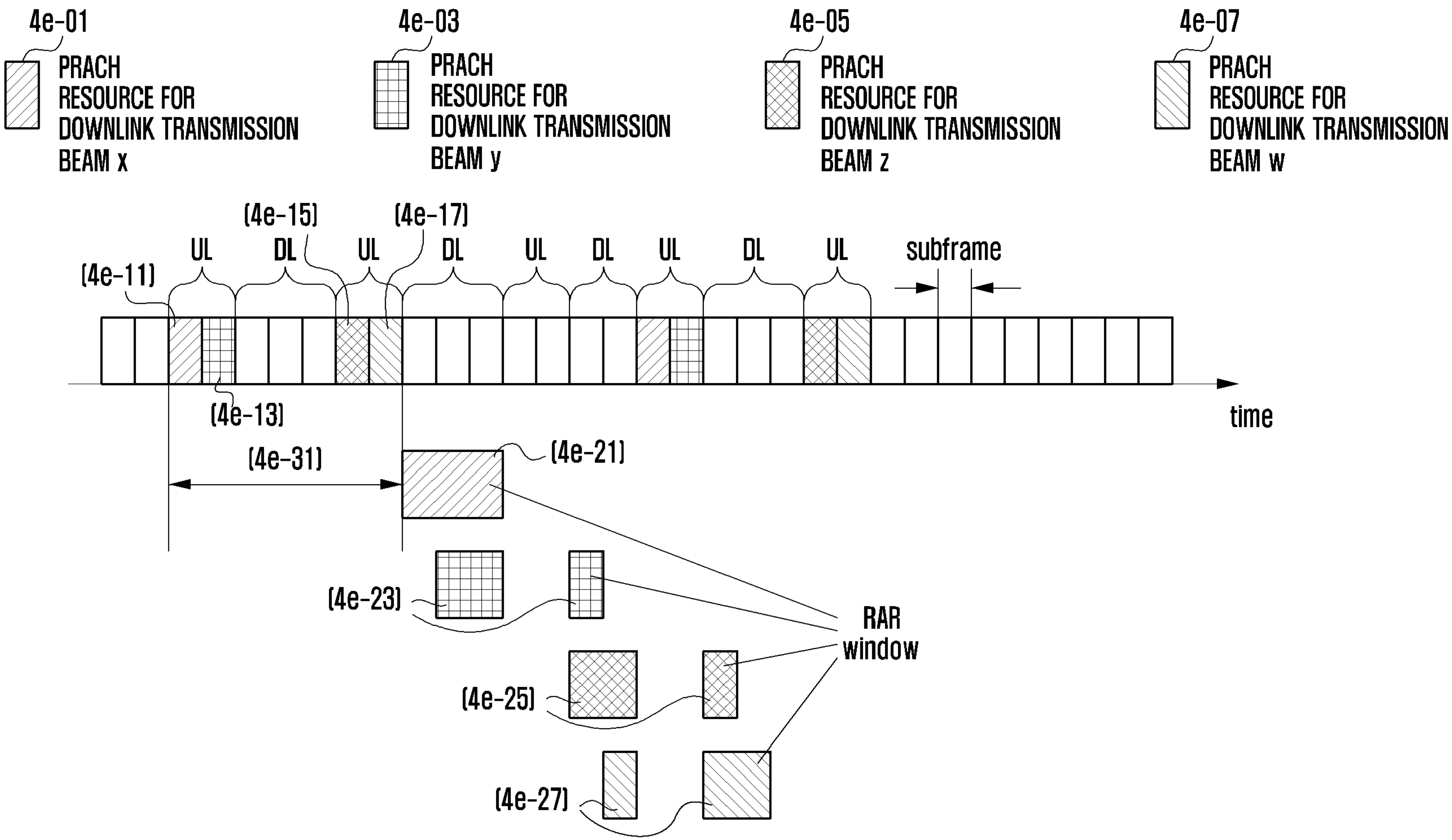


· RWR WINDOW IS PRESENT FOR EACH PRACH RESOURCE AND IS MAPPED THROUGH SYSTEM INFORMATION, RAR WINDOW PERIOD CAN BE SET

· RA-RNTI IS PRESENT FOR EACH PRACH RESOURCE AND IS MAPPED THROUGH SYSTEM INFORMATION

· WHEN PLURALITY OF VALID RARS IS RECEIVED, UE SELECTS ONE RAR ON BASIS OF RSRP INFORMATION IN RAR

FIG. 4F

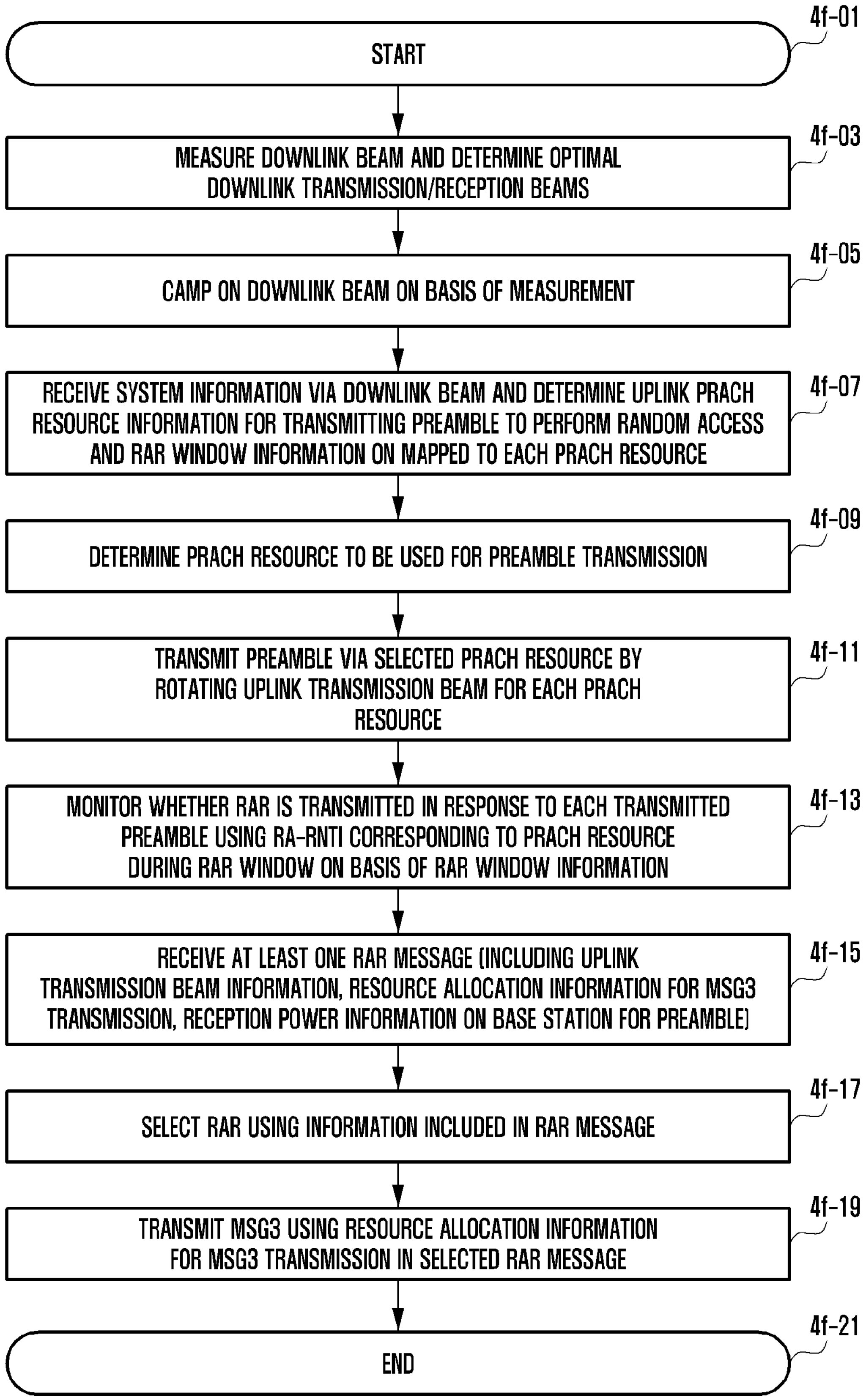
START
4f-01
MEASURE DOWNLINK BEAM AND DETERMINE OPTIMAL DOWNLINK TRANSMISSION/RECEPTION BEAMS
4f-03
CAMP ON DOWNLINK BEAM ON BASIS OF MEASUREMENT
4f-05
RECEIVE SYSTEM INFORMATION VIA DOWNLINK BEAM AND DETERMINE UPLINK PRACH RESOURCE INFORMATION FOR TRANSMITTING PREAMBLE TO PERFORM RANDOM ACCESS AND RAR WINDOW INFORMATION ON MAPPED TO EACH PRACH RESOURCE
4f-07
DETERMINE PRACH RESOURCE TO BE USED FOR PREAMBLE TRANSMISSION
4f-09
TRANSMIT PREAMBLE VIA SELECTED PRACH RESOURCE BY ROTATING UPLINK TRANSMISSION BEAM FOR EACH PRACH RESOURCE
4f-11
MONITOR WHETHER RAR IS TRANSMITTED IN RESPONSE TO EACH TRANSMITTED PREAMBLE USING RA-RNTI CORRESPONDING TO PRACH RESOURCE DURING RAR WINDOW ON BASIS OF RAR WINDOW INFORMATION
4f-13
RECEIVE AT LEAST ONE RAR MESSAGE (INCLUDING UPLINK TRANSMISSION BEAM INFORMATION, RESOURCE ALLOCATION INFORMATION FOR MSG3 TRANSMISSION, RECEPTION POWER INFORMATION ON BASE STATION FOR PREAMBLE)
4f-15
SELECT RAR USING INFORMATION INCLUDED IN RAR MESSAGE
4f-17
TRANSMIT MSG3 USING RESOURCE ALLOCATION INFORMATION FOR MSG3 TRANSMISSION IN SELECTED RAR MESSAGE
4f-19
END
4f-21

FIG. 4G

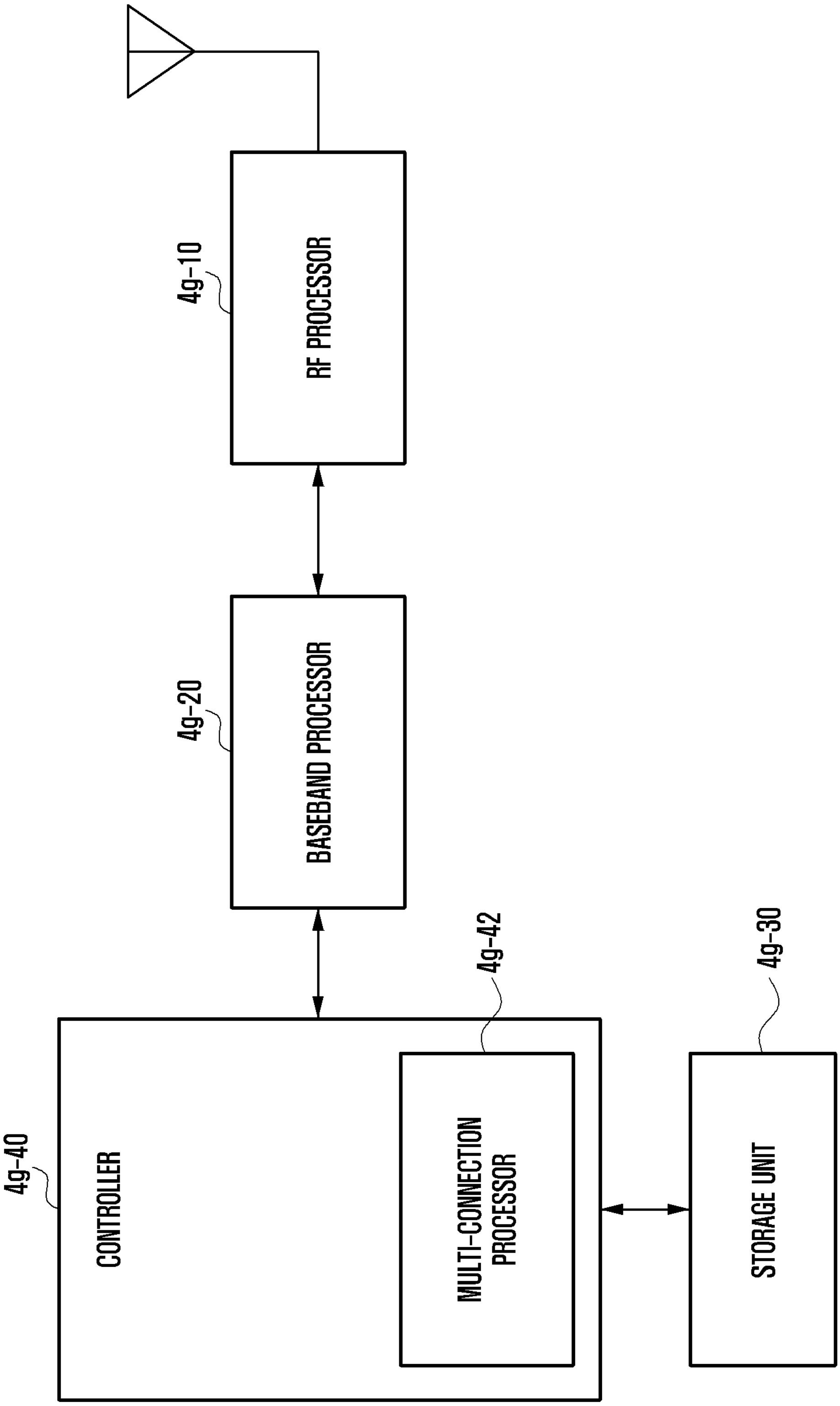
4g-10
RF PROCESSOR
4g-20
BASEBAND PROCESSOR
4g-40
CONTROLLER
4g-42
MULTI-CONNECTION PROCESSOR
4g-30
STORAGE UNIT

FIG. 5A

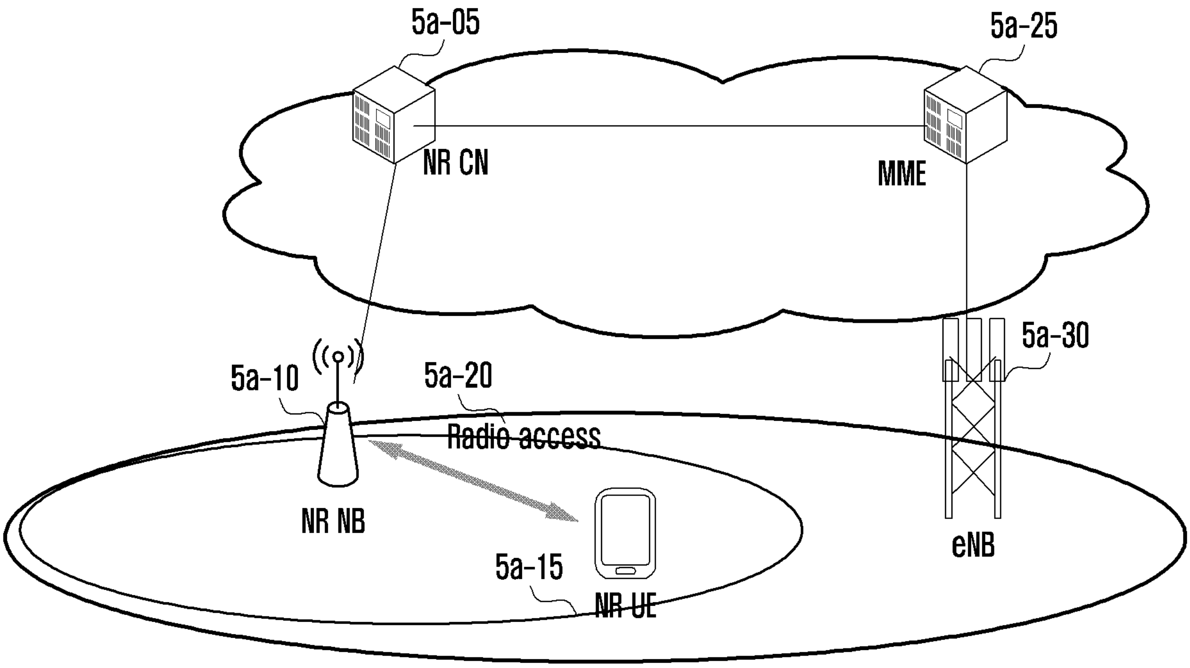
5a-05
5a-25
NR CN
MME
5a-30
5a-10
5a-20
Radio access
NR NB
eNB
5a-15
NR UE

FIG. 5B

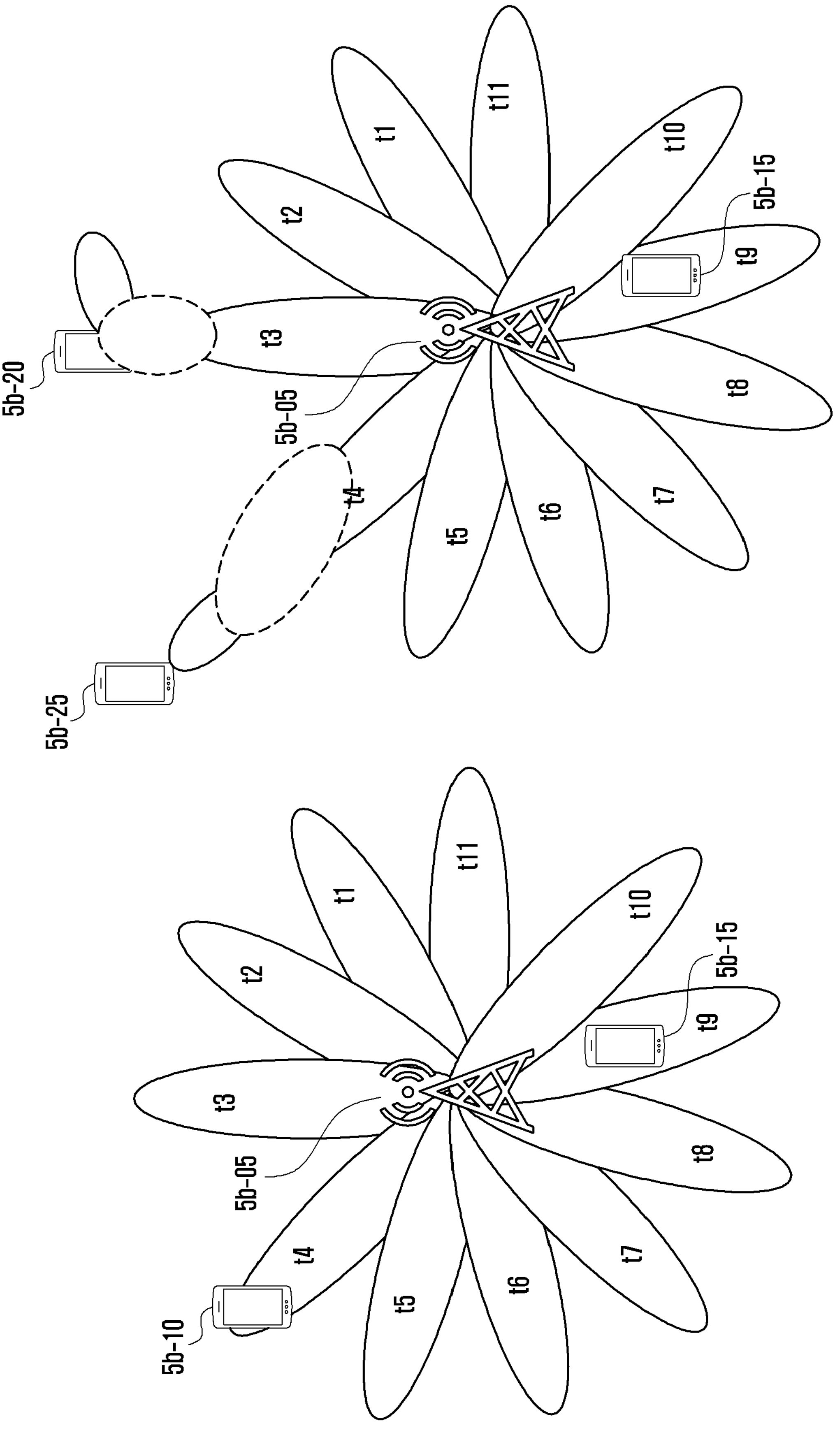
t1
t2
t3
t4
t5
t6
t7
t8
t9
t10
t11
5b-05
5b-15
5b-20
5b-25
t1
t2
t3
t4
t5
t6
t7
t8
t9
t10
t11
5b-05
5b-10
5b-15

FIG. 5C

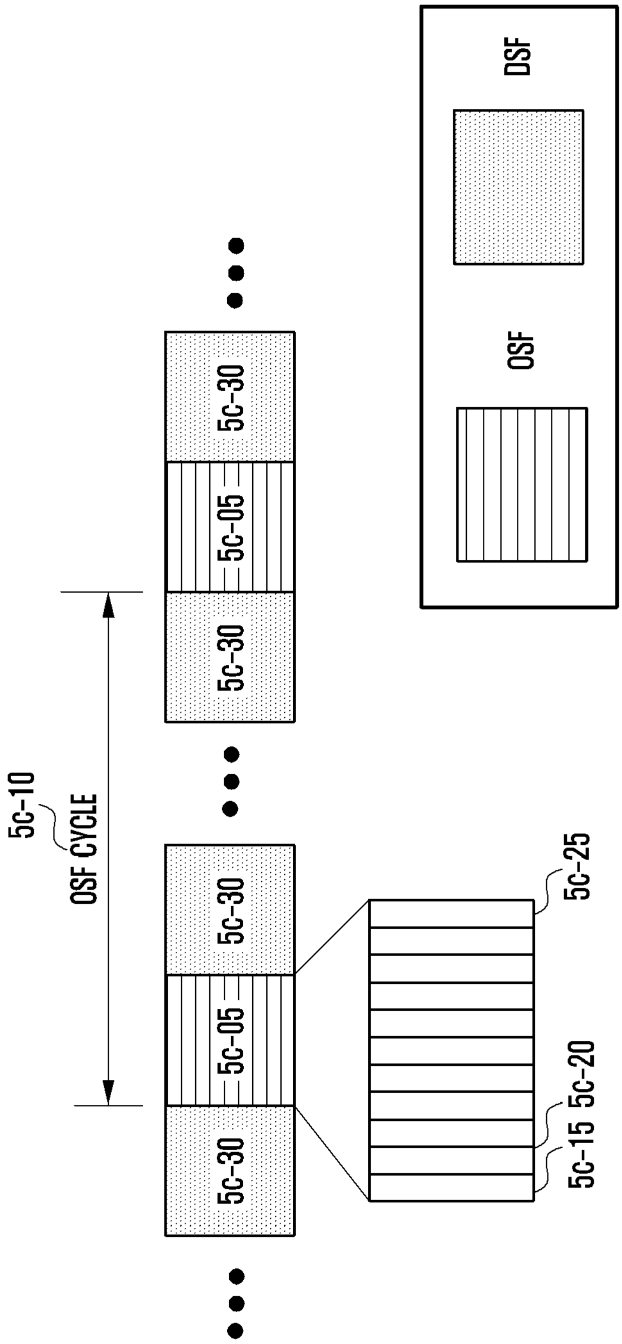
5c-10
OSF CYCLE
5c-30
5c-05
5c-30
5c-30
5c-05
5c-30
5c-25
5c-20
5c-15
OSF
DSF

FIG. 5D

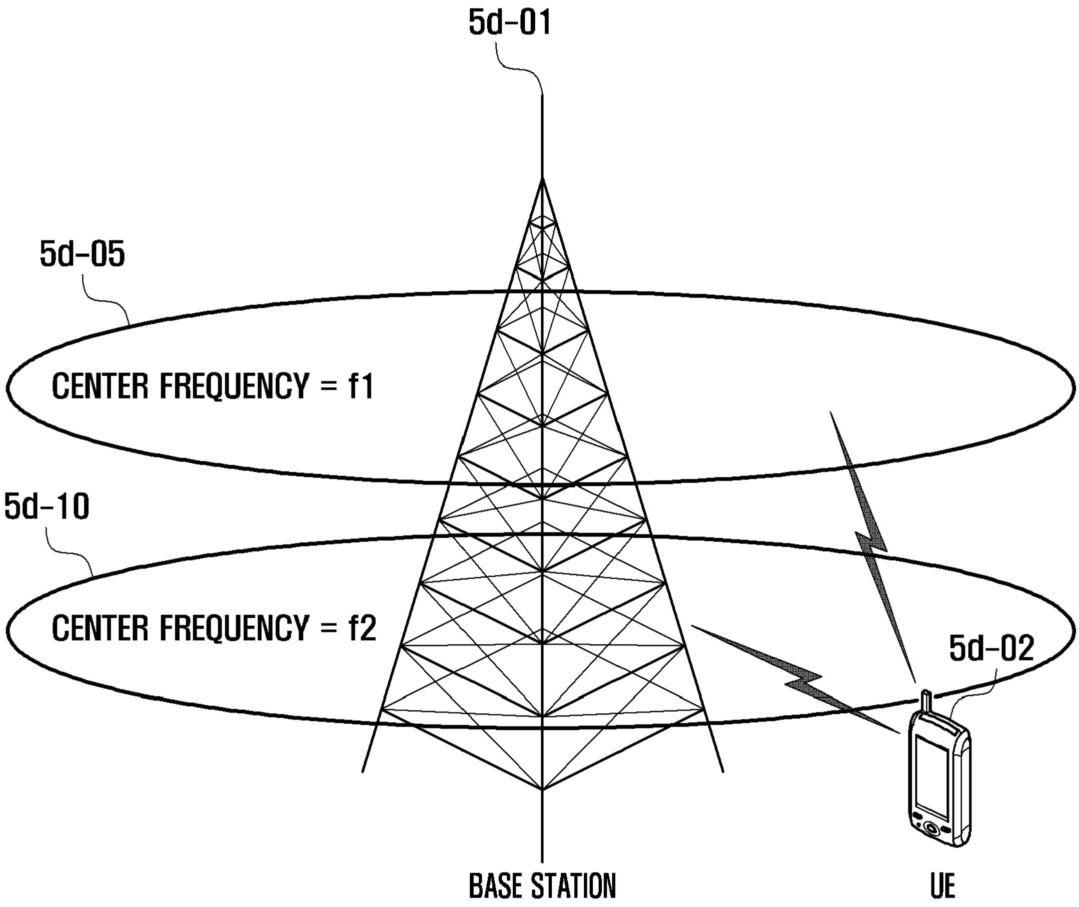
5d-01
5d-05
CENTER FREQUENCY = f1
5d-10
CENTER FREQUENCY = f2
5d-02
BASE STATION
UE

FIG. 5E

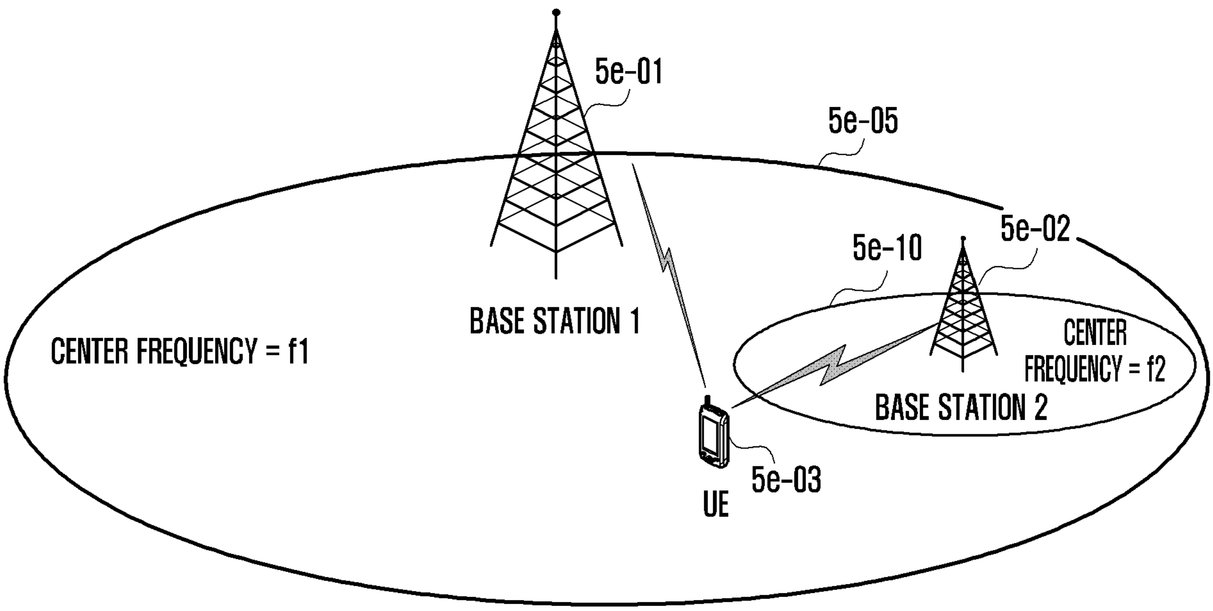
5e-01
5e-05
5e-02
5e-10
BASE STATION 1
CENTER FREQUENCY = f1
CENTER
FREQUENCY = f2
BASE STATION 2
5e-03
UE

FIG. 5F

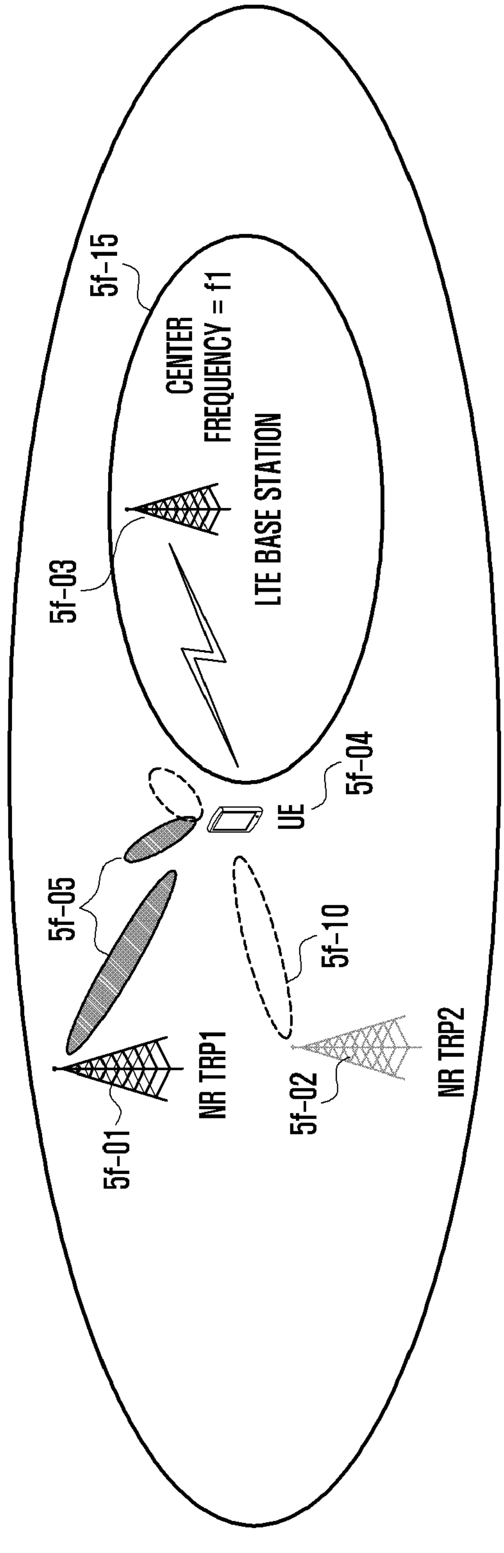
5f-15
CENTER FREQUENCY = f1
LTE BASE STATION
5f-03
5f-04
UE
5f-05
5f-10
NR TRP1
5f-01
5f-02
NR TRP2

FIG. 5G

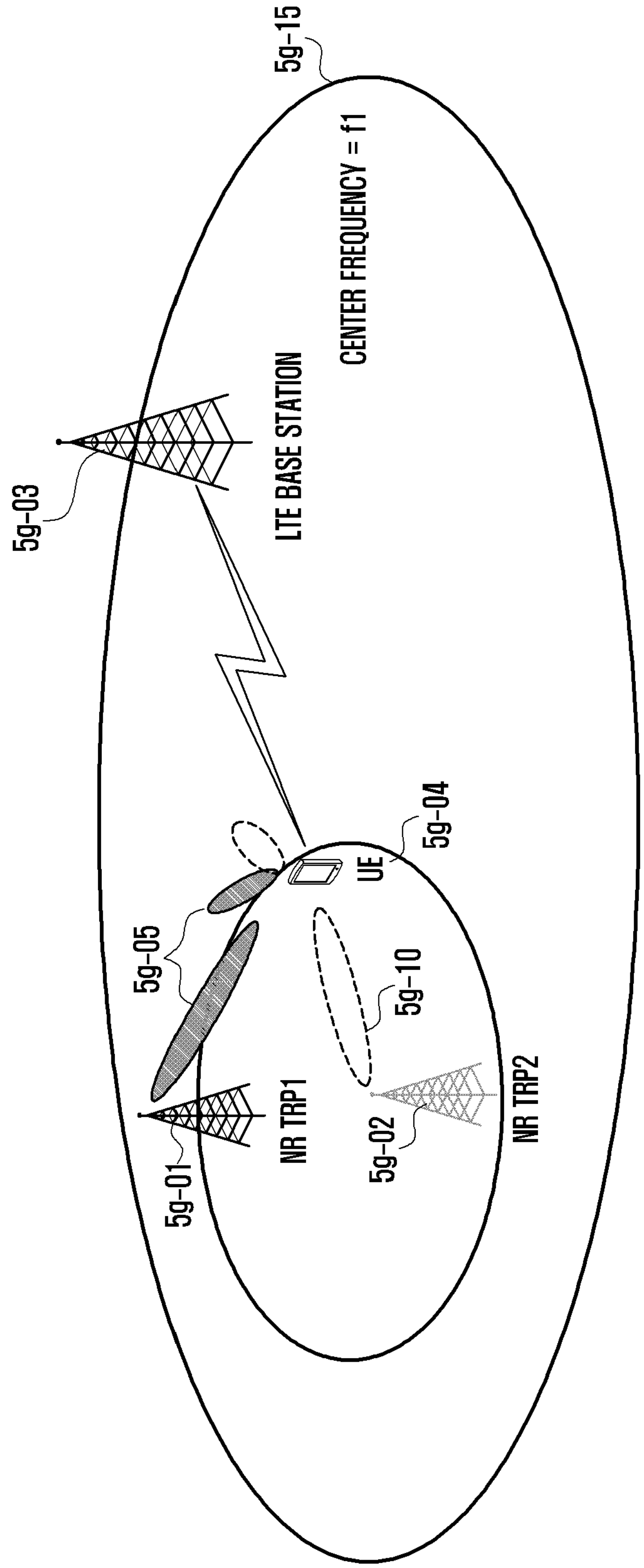
5g-15
CENTER FREQUENCY = f1
5g-03
LTE BASE STATION
UE
5g-04
5g-05
5g-10
NR TRP1
NR TRP2
5g-01
5g-02

FIG. 5H

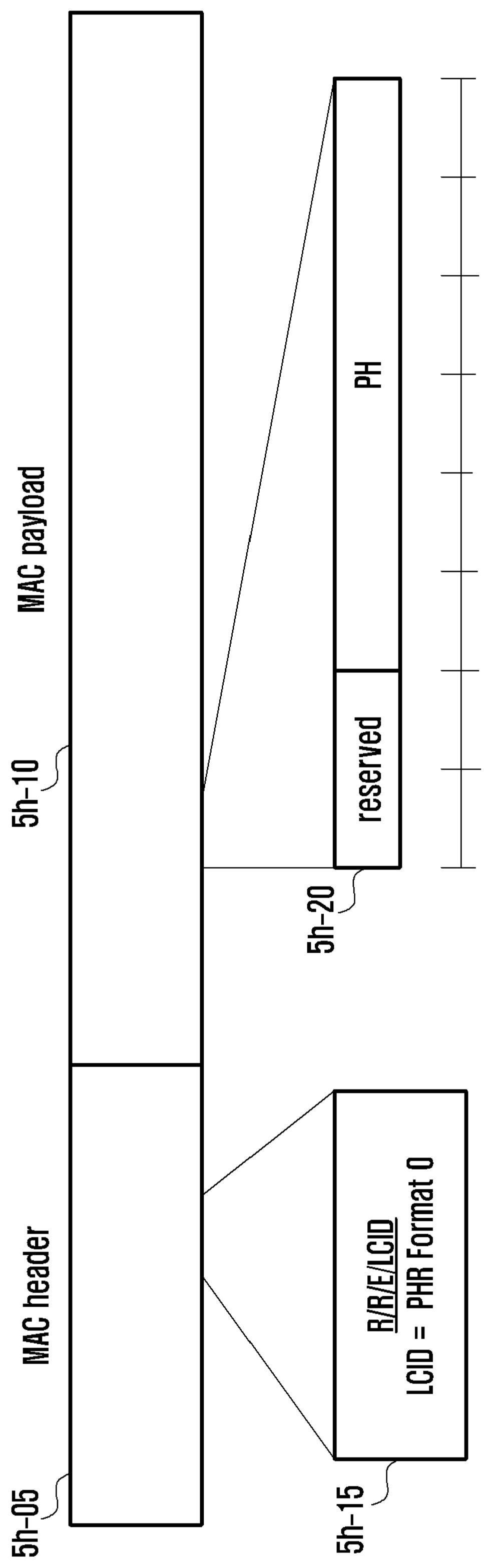
MAC header
MAC payload
5h-05
5h-10
5h-15
5h-20
R/R/E/LCID
LCID = PHR Format 0
reserved
PH

FIG. 5I

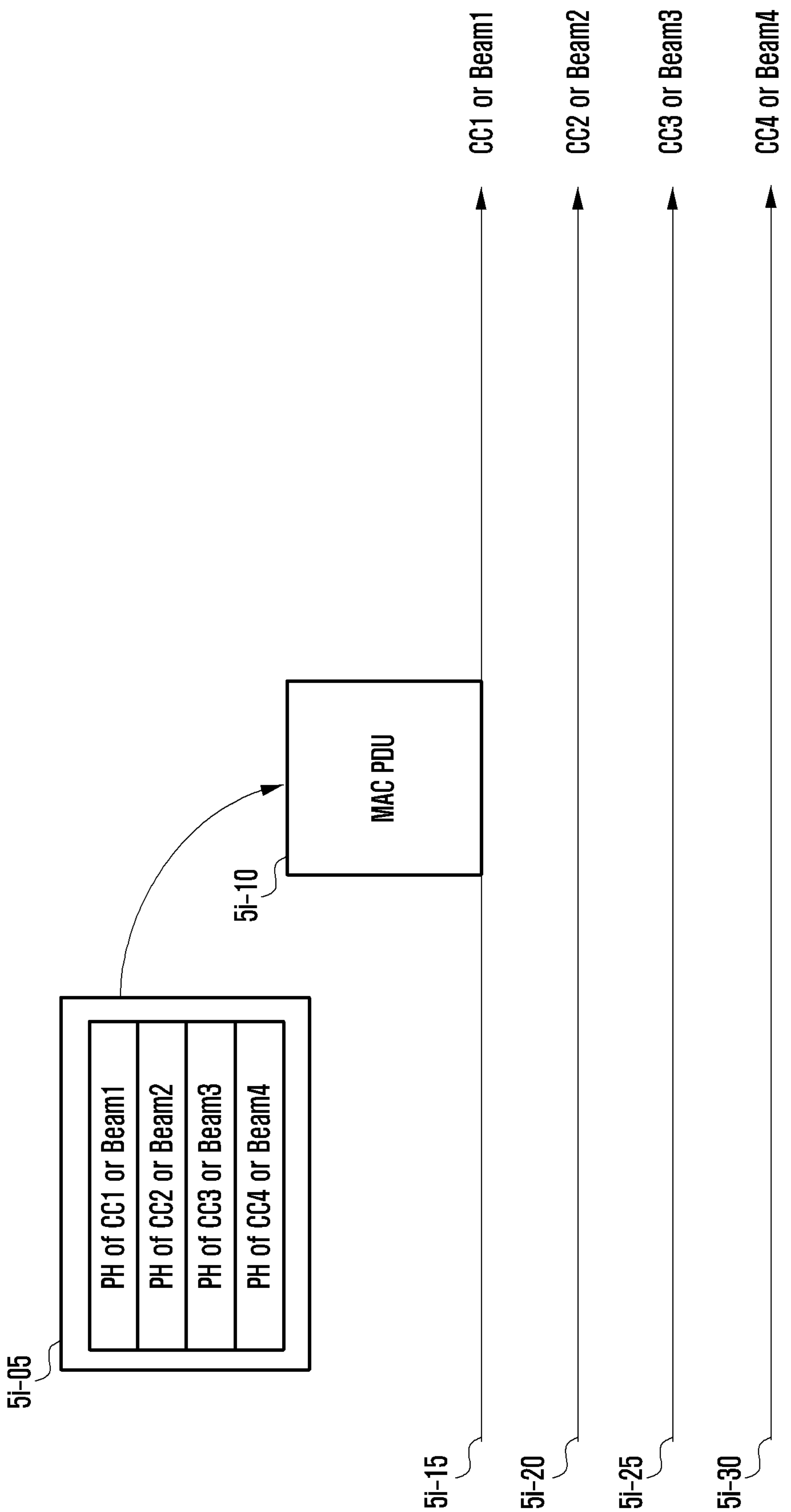
5i-05
PH of CC1 or Beam1
PH of CC2 or Beam2
PH of CC3 or Beam3
PH of CC4 or Beam4
5i-10
MAC PDU
5i-15
5i-20
5i-25
5i-30
CC1 or Beam1
CC2 or Beam2
CC3 or Beam3
CC4 or Beam4

FIG. 5J

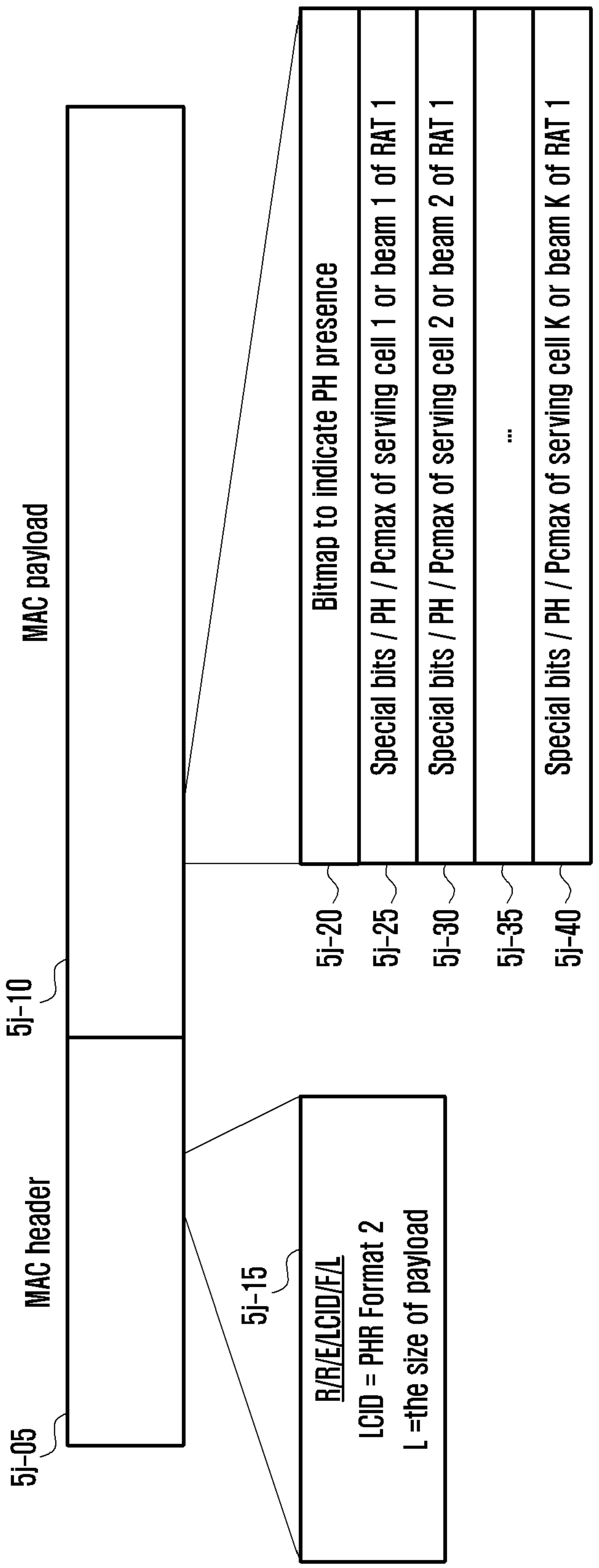
5j-05
MAC header
5j-10
MAC payload
5j-15
R/R/E/LCID/F/L
LCID = PHR Format 2
L =the size of payload
5j-20
Bitmap to indicate PH presence
5j-25
Special bits / PH / Pcmax of serving cell 1 or beam 1 of RAT 1
5j-30
Special bits / PH / Pcmax of serving cell 2 or beam 2 of RAT 1
5j-35
...
5j-40
Special bits / PH / Pcmax of serving cell K or beam K of RAT 1

FIG. 5K

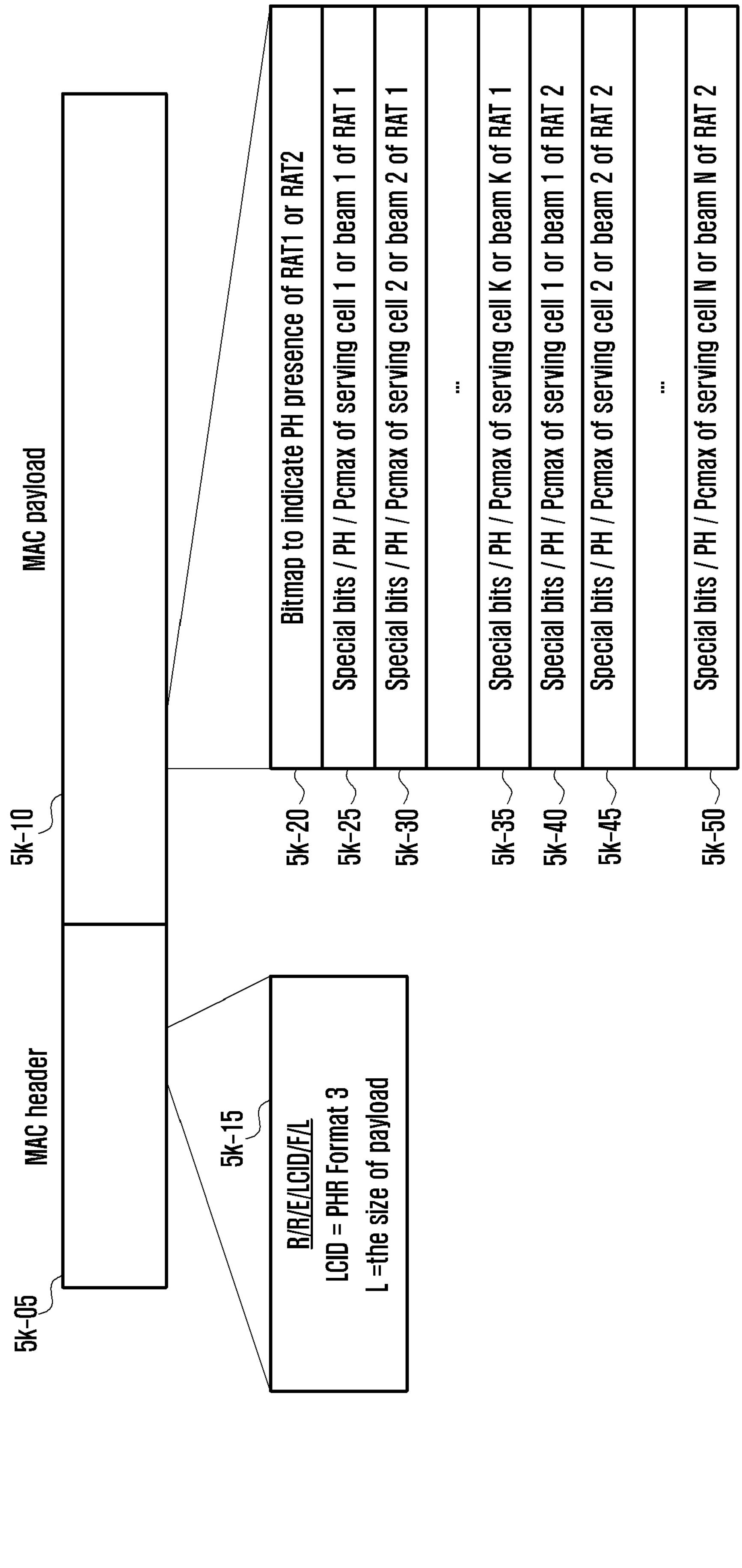
MAC header
MAC payload
5k-05
5k-10
5k-15
R/R/E/LCID/F/L
LCID = PHR Format 3
L =the size of payload
5k-20
Bitmap to indicate PH presence of RAT1 or RAT2
5k-25
Special bits / PH / Pcmax of serving cell 1 or beam 1 of RAT 1
5k-30
Special bits / PH / Pcmax of serving cell 2 or beam 2 of RAT 1
...
5k-35
Special bits / PH / Pcmax of serving cell K or beam K of RAT 1
5k-40
Special bits / PH / Pcmax of serving cell 1 or beam 1 of RAT 2
5k-45
Special bits / PH / Pcmax of serving cell 2 or beam 2 of RAT 2
...
5k-50
Special bits / PH / Pcmax of serving cell N or beam N of RAT 2

FIG. 5L

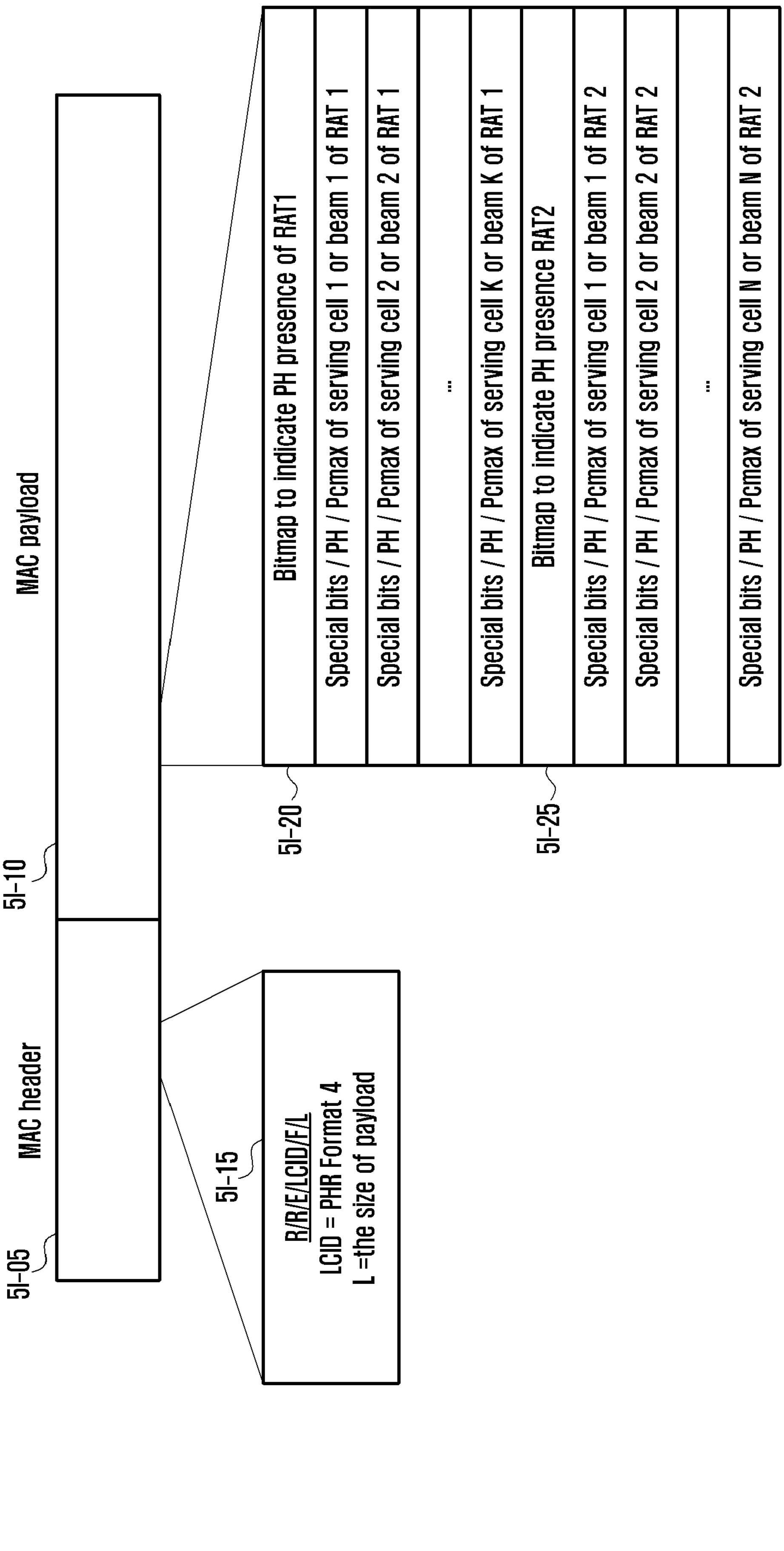
5l-05
MAC header
5l-10
MAC payload
5l-15
R/R/E/LCID/F/L
LCID = PHR Format 4
L =the size of payload
5l-20
Bitmap to indicate PH presence of RAT1
Special bits / PH / Pcmax of serving cell 1 or beam 1 of RAT 1
Special bits / PH / Pcmax of serving cell 2 or beam 2 of RAT 1
...
Special bits / PH / Pcmax of serving cell K or beam K of RAT 1
5l-25
Bitmap to indicate PH presence RAT2
Special bits / PH / Pcmax of serving cell 1 or beam 1 of RAT 2
Special bits / PH / Pcmax of serving cell 2 or beam 2 of RAT 2
...
Special bits / PH / Pcmax of serving cell N or beam N of RAT 2

FIG. 5M

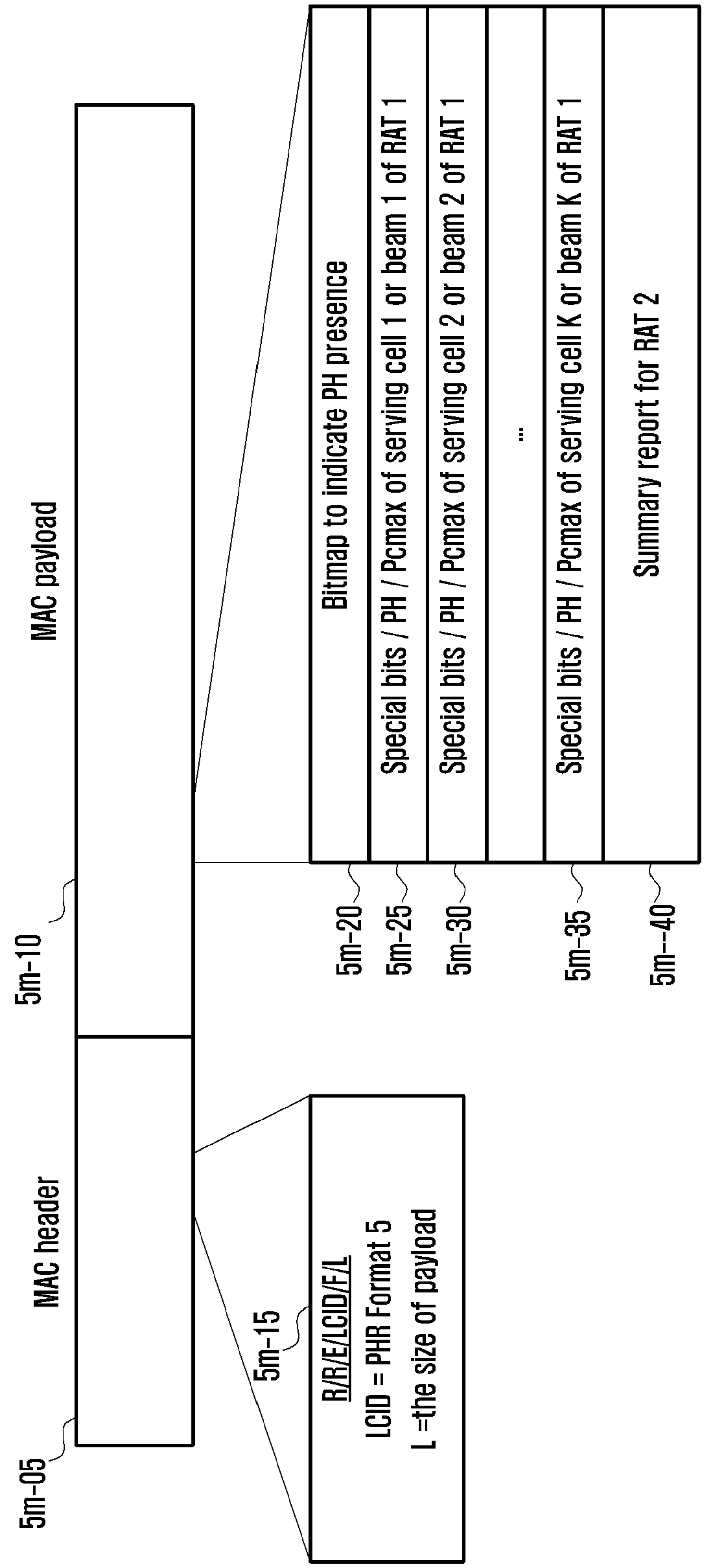

MAC header
MAC payload
5m-05
5m-10
5m-15
R/R/E/LCID/F/L
LCID = PHR Format 5
L =the size of payload
5m-20
Bitmap to indicate PH presence
5m-25
Special bits / PH / Pcmax of serving cell 1 or beam 1 of RAT 1
5m-30
Special bits / PH / Pcmax of serving cell 2 or beam 2 of RAT 1
...
5m-35
Special bits / PH / Pcmax of serving cell K or beam K of RAT 1
5m-40
Summary report for RAT 2

FIG. 5N

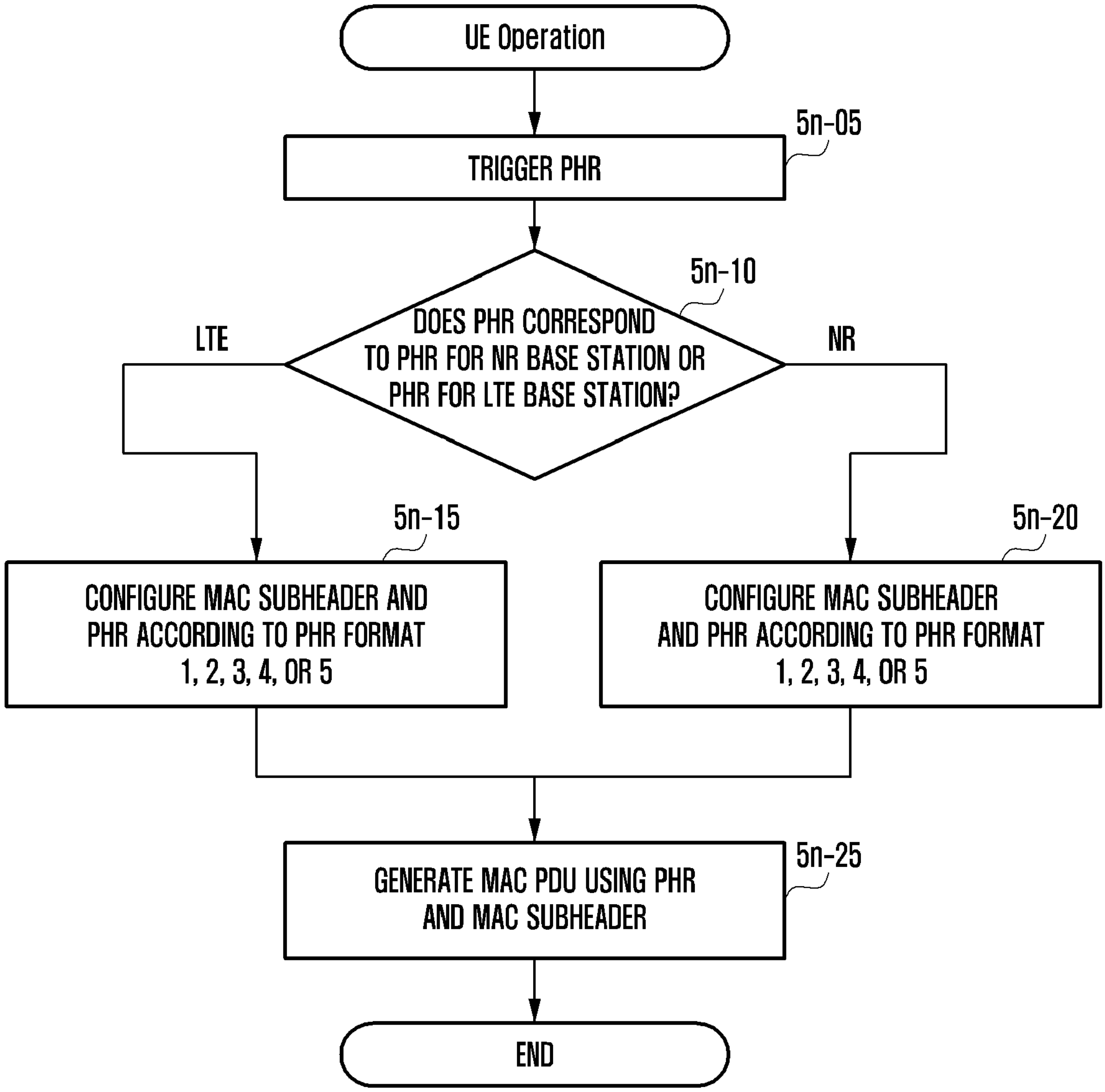
UE Operation
TRIGGER PHR
5n-05
DOES PHR CORRESPOND TO PHR FOR NR BASE STATION OR PHR FOR LTE BASE STATION?
5n-10
LTE
NR
CONFIGURE MAC SUBHEADER AND PHR ACCORDING TO PHR FORMAT 1, 2, 3, 4, OR 5
5n-15
CONFIGURE MAC SUBHEADER AND PHR ACCORDING TO PHR FORMAT 1, 2, 3, 4, OR 5
5n-20
GENERATE MAC PDU USING PHR AND MAC SUBHEADER
5n-25
END

FIG. 50

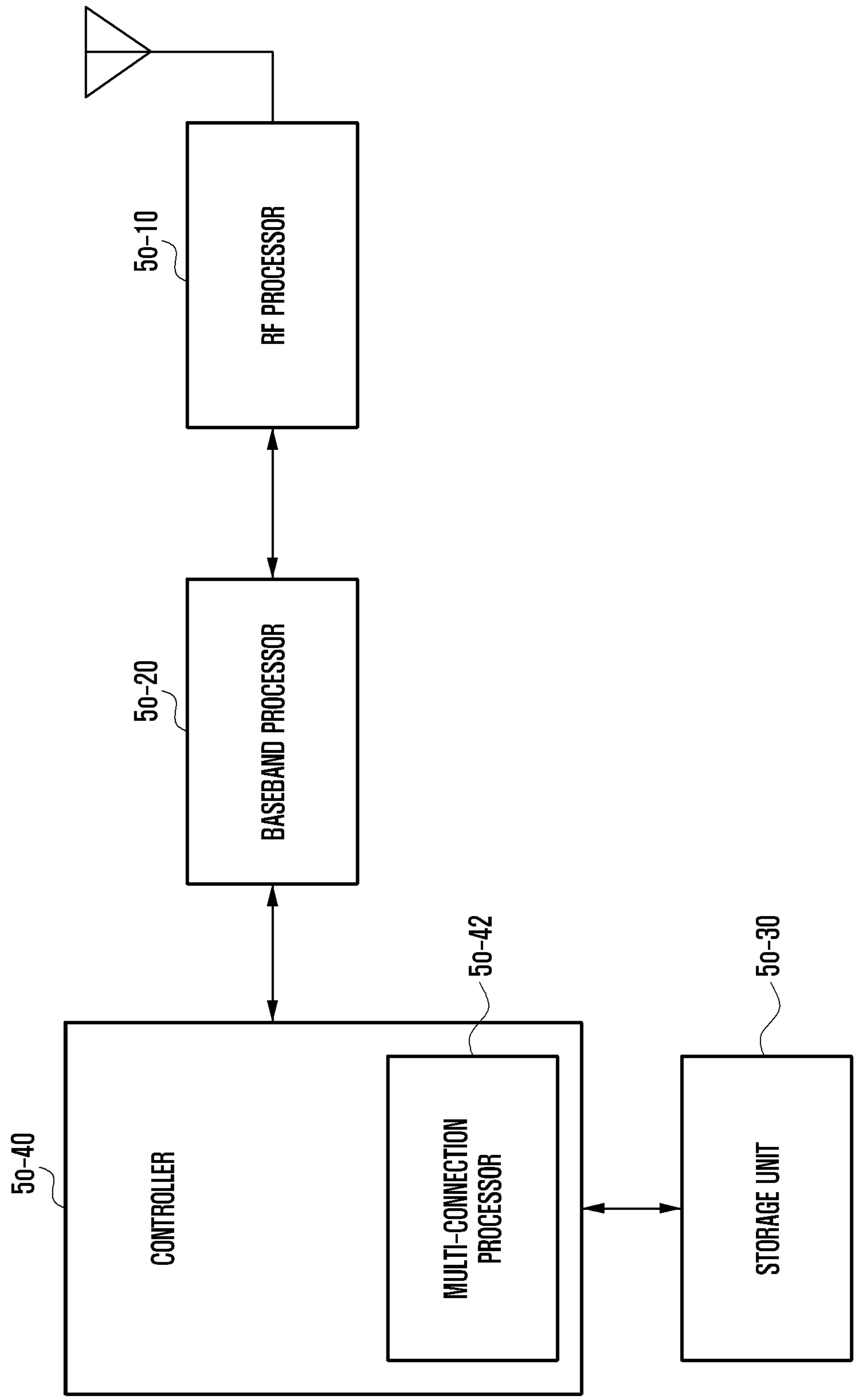
5o-10
RF PROCESSOR
5o-20
BASEBAND PROCESSOR
5o-40
CONTROLLER
5o-42
MULTI-CONNECTION PROCESSOR
5o-30
STORAGE UNIT

FIG. 5P

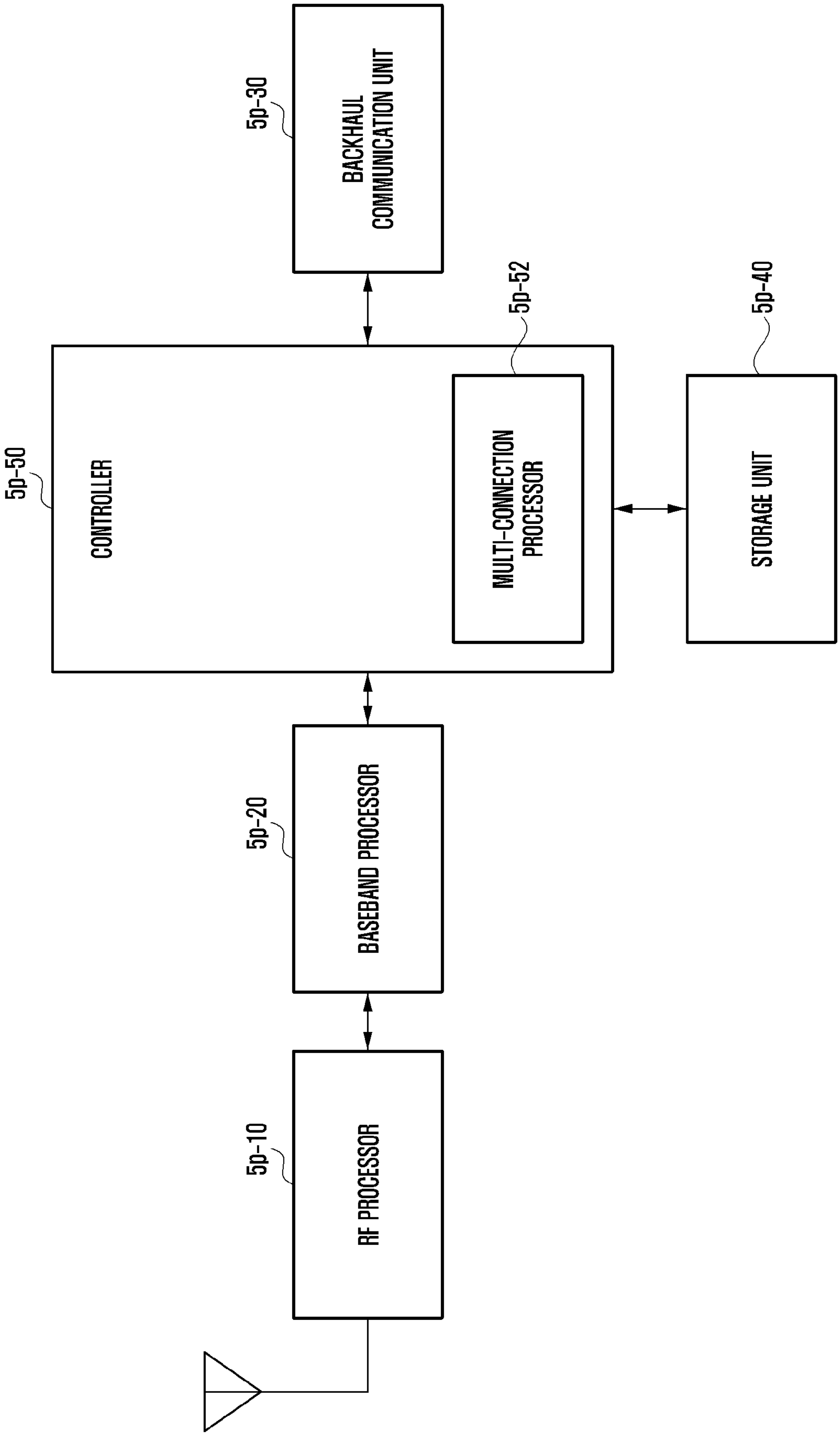
BACKHAUL COMMUNICATION UNIT
5p-30
CONTROLLER
5p-50
MULTI-CONNECTION PROCESSOR
5p-52
STORAGE UNIT
5p-40
BASEBAND PROCESSOR
5p-20
RF PROCESSOR
5p-10